# EUROPÄISCHE PATENTSCHRIFT

(11) **EP 1 444 964 B1**
(45) Veröffentlichungstag und Bekanntmachung des Hinweises auf die Patenterteilung: **10.01.2007**
(21) Anmeldenummer: 04010418.4
(22) Anmeldetag: 18.05.1998
(51) Int. Cl.: A61C 8/00

(54) **Support zum Halten und/oder Bilden eines Zahnersatzes**
Support for sustaining and/or forming a dental prosthesis
Support pour maintenir et/ou former une prothèse dentaire

(30) Priorität: 24.05.1997 CH 121897; 24.05.1997 CH 122197
(43) Veröffentlichungstag der Anmeldung: 11.08.2004
(62) Teilanmeldung aus: 98930697.2
(73) Patentinhaber: Straumann Holding AG, 4002 Basel (CH)
(72) Erfinder: Sutter, Franz, Dr. h.c., 4435 Niederdorf (CH)
(74) Vertreter: Schaad, Balass, Menzl & Partner AG

(56) Entgegenhaltungen:
- EP-A- 0 475 299
- EP-A- 0 685 208
- CA-A- 1 313 597
- DE-C- 19 534 979
- FR-A- 2 733 144

## Beschreibung

### Technisches Gebiet

Die Erfindung betrifft einen Support zum Halten und/oder Bilden eines Zahnersatzes mit einer Achse und einer zum Verankern in einem Knochen des Unter- oder Oberkiefers eines Patienten bestimmten Verankerungspartie, die ein Aussengewinde aufweist.

Der Support dient zum Beispiel zum Tragen eines ursprünglich separaten, am Support befestigbaren Elements mit einer Kappe. Diese kann beispielsweise einen Teil eines Zahnersatzes, wie eines künstlichen Einzelzahns oder einer Brücke oder einer mehrere Zähne aufweisenden Prothese bilden. Es besteht jedoch auch die Möglichkeit, zuerst eine sogenannte ausbrennbare, aus Kunststoff bestehende Kappe am Support zu befestigen. Die ausbrennbare Kappe kann dann zur Herstellung eines Gussmodells sowie einer Giessform dienen und danach aus der letzteren herausgebrannt sowie durch eine unter Verwendung der Giessform gegossene Kappe ersetzt werden.

### Stand der Technik

Ein aus der EP 0 685 208 A bekannter Support besitzt ein Implantat und einen Sekundärteil, der ein in ein Innengewinde des Implantats eingeschraubtes Aussengewinde und einen aus dem Implantat herausragenden Kopf besitzt. Das Implantat hat eine in einem Loch eines Knochens verankerbare Verankerungspartie. Diese weist ein Aussengewinde auf, so dass das Implantat zum Verankern in das Loch des Knochens eingeschraubt werden kann. Dazu muss jedoch nach dem Bohren oder Fräsens das Wachs mit einem Gewindebohrer zuerst ein Gewinde in das Loch geschnitten werden. Dies erfordert einen zusätzlichen Arbeitsgang und eben einen Gewindebohrer, der steril sein sollte.

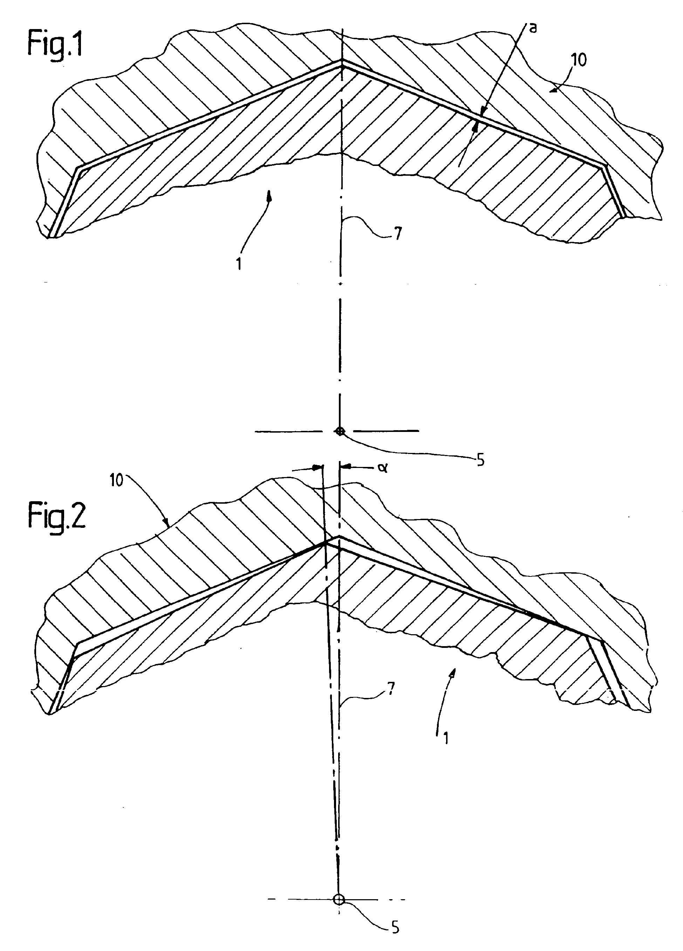

Der Kopf des Implantats des aus der EP 0 685 208 A bekannten Supports bildet die Kopfpartie des Supports und hat einen oktagonalen Abschnitt sowie einen sich von diesem weg zur Stirnseite des Kopfs hin verjüngenden, konischen Abschnitt. Auf dem bekannten Sekundärteil kann ein Aufbauelement oder Abformelement mit einer Kappe angeordnet werden, die einen Innenraum mit einem oktagonalen Abschnitt hat. Die zur vorliegenden Patentanmeldung gehörende Fig. 1 zeigt einen Querschnitt durch einen Bereich des oktagonalen Abschnitts des Kopfs eines bekannten Sekundärteils 1. Der Sekundärteil definiert eine Achse 5 und zu dieser radiale, durch die Ecken des oktagonalen Kopfabschnitts verlaufende Geraden, von denen eine mit 7 bezeichnet ist. Die Kappe 10 ist in Fig. 1 in der vorgesehenen, mittleren Soll-Drehstellung gezeichnet. In dieser liegt jede Ecke des oktagonalen Abschnitts des Kappen-Innenraums auf der durch die zugeordnete Ecke des Sekundärteils 1 verlaufenden Geraden 7. Die Kappe sitzt mit radialem Spiel auf dem Sekundärteil, so dass die einander zugeordneten Oktagonflächen des Sekundärteils und der Kappe in einem Abstand a voneinander stehen. Das radiale Spiel muss insbesondere bei der Verwendung von ausbrennbaren Kappen so gross bemessen sein, dass die Innenmasse des dann durch Giessen hergestellten Aufbauelements wegen Schrumpfvorgängen und dergleichen von den Innenmassen der ausbrennbaren Kappe abweichen können. Die Kappe 10 kann wegen des Spiels ausgehend von ihrer mittleren Soll-Drehstellung in beiden Drehrichtungen um einen in Fig. 2 mit α bezeichneten Winkel gedreht werden, bis die Oktagonflächen der Kappe an Ecken des Sekundärteils anstehen. Der Abstand a beträgt typischerweise ungefähr 0,02 mm und bei ausbrennbaren Kunststoffkappen eventuell noch mehr. Der Winkel α beträgt dann ungefähr 2,25° oder mehr. Die Kappe kann um den Winkel 2α, d.h. um ungefähr 4,5° oder mehr hin und her gedreht werden. Der oktagonale Kopfabschnitt des bekannten Supports ermöglicht daher nur eine sehr ungenaue Positionierung der Kappe bezüglich Drehungen um die Achse. Wenn grosse, ungefähr quer zur Achse gerichtete Kräfte an der Kappe angreifen und Scherkräfte bzw. Torsionsbeanspruchungen zwischen der Kappe und dem Support verursachen, besteht zudem die Gefahr, dass die Kappe bezüglich des Supports kleine Dreh- bzw. Schwenkbewegungen ausführt. Solche Mikro-Drehbewegungen können einen Misserfolg der zahnmedizinischen Behandlung verursachen. Die Kappe kann in einer von 8 wählbaren Drehstellungen auf den Kopf aufgesetzt werden. Manchmal wäre es jedoch vorteilhaft, wenn die Kappe nur in einer einzigen Drehstellung auf den Support gesteckt werden könnte, was beim bekannten Support nicht möglich ist. Ferner liegt die Kappe nur am oktagonalen Abschnitt, nicht aber am konischen Abschnitt des Kopfs an. Bei diesem bekannten Kopf wäre es auch praktisch gar nicht möglich, eine Kappe derart auszubilden, dass sie sowohl an den ebenen Flächen des oktagonalen Abschnitts als auch an konischen Abschnitt des Kopfes anliegt. Da der oktagonale Abschnitt nur eine relativ kleine axiale Abmessung hat, wird die Kappe in Bezug auf seitliche, d.h. quer zur Achse auf. sie einwirkende Kräfte nur wenig abgestützt, wodurch die Stabilität der Verbindung der Kappe bzw. des Aufbauelements mit dem zusätzlich Support beeinträchtigt wird.

### Abriss der Erfindung

Der Erfindung liegt die Aufgabe zugrunde, Nachteile des bekannten Supports und einer aus diesem sowie einem Aufbauelement und/oder Abformelement und/oder einem Einheilelement gebildeten Vorrichtung zu vermeiden.

Diese Aufgabe wird erfindungsgemäss gelöst durch einen Support mit den Merkmalen des Anspruchs 1.

Die Erfindung betrifft ferner eine Vorrichtung mit einem Support und mit einem am Support befestigbaren Element wobei die Vorrichtung gemäss der Erfindung die Merkmale des Anspruchs 20 aufweist.

Vorteilhafte Weiterbildungen des Supports und der Vorrichtung gehen aus den abhängigen Ansprüchen hervor.

Der Support kann beispielsweise aus einem metallischen Implantat bzw. Primärteil und einem ursprünglich separaten, vorzugsweise lösbar am Implantat befestigten, beispielsweise mit diesem verschraubten, metallischen Sekundärteil bestehen. Der Support kann jedoch statt dessen einen einstückigen Körper aufweisen, der sich vom freien Ende der Verankerungspartie bis zum freien Ende der Kopfpartie erstreckt und diese Enden bildet, so dass der Support mindestens im wesentlichen vollständig aus einem einstückigen, beispielsweise metallischen Implantat besteht.

Am Support kann ein Element, beispielsweise ein Aufbauelement und/oder ein Abformelement und/oder ein Einheilelement lösbar oder eventuell unlösbar befestigt werden. Ein solches Element kann eine Kappe aufweisen und/oder durch eine Kappe gebildet sein. Das Element kann ferner eine ausbrennbare Kappe aus Kunststoff aufweisen oder ausschliesslich aus einer solchen bestehen. Das Element bzw. die Kappe kann mit einer ringförmigen, glatten die Kopfpartie in axialer Projektion umschliessenden Auflagefläche um die Achse herum unterbruchslos und spaltfrei auf einer ringförmigen Schulterfläche des Supports aufliegen.

Der Support besitzt beispielsweise eine Kopfpartie mit einem zur Achse parallelen, im allgemeinen zylindrischen Abschnitt sowie einem sich von diesem weg zum freien Ende der Kopfpartie hin verjüngenden, im allgemeinen konischen Abschnitt.

Wenn ein Element lösbar oder unlösbar am Support befestigt ist und auf der Schulterfläche des Supports aufliegt, kann es zudem von der Kopfpartie mindestens beim konischen Abschnitt mit höchstens kleinem Spiel an der konischen Umfangsfläche abgestützt werden. Die Umfangsfläche des konischen Kopfabschnitts stützt das Element dabei in Richtungen ab, die ungefähr rechtwinklig zur konischen Umfangsfläche und/oder zur Achse des Supports sind. Das Spiel zwischen der konischen Umfangsfläche des konischen Abschnitts der Kopfpartie und einer konischen Innenfläche eines am Support befestigten Elements kann sehr klein gemacht werden. Das Spiel kann beispielsweise bei den zum Abstützen vorgesehenen Flächenabschnitten in gewissen Richtungen - beispielsweise in radialer Richtung und/oder in zu den Konusflächen rechtwinkligen Richtungen - höchstens 0,02 mm oder nur höchstens 0,01 mm sein und insbesondere bei den Konusflächen vorzugsweise im Bereich von Mikrometern liegen und beispielsweise höchstens 5 µm oder höchstens 3 µm betragen.

Die axiale Abmessung oder Höhe der Kopfpartie ist vorteilhafterweise so klein bemessen, dass das Implantat wahlweise subgingival oder transgingival oder in halb in der Gingiva versenkter Lage ("semi-submerged") in den Mund eines Patienten eingesetzt werden kann. Die Ausbildung der Kopfpartie ermöglicht, dass dieser ein vom Support gehaltenes Aufbauelement oder Abformelement trotz kleiner axialer Abmessung der Kopfpartie bei allen Verwendungsarten gut in allen ungefähr quer zur Achse verlaufenden Richtungen abstützt. Das gewährleistet wiederum, dass ein im Mund eines Patienten an mindestens einem Support befestigtes Aufbauelement stabil und dauerhaft mit dem bzw. jedem zu seiner Befestigung dienenden Support verbunden werden und auch durch grosse, ungefähr quer zur Achse des Supports bzw. zu den Achsen der Supporte gerichtete Kräfte nicht gelöst wird.

Ein Aufbauelement oder sonstiges Element kann also in bezug auf ungefähr axiale Kräfte sowie in bezug auf ungefähr quer zur Achse gerichtete Kräfte sehr stabil, mindestens annähernd mikrobewegungsfrei und dauerhaft am Support befestigt werden.

Brücken, Teilprothesen und Vollprothesen werden häufig mit zwei oder eventuell noch mehr Supporten befestigt. Die Supporte haben dann im Idealfall zueinander parallele Achsen. In der Praxis sind die Achsen jedoch häufig schief zueinander und beispielsweise zu den freien Enden der Kopfpartien hin divergierend oder konvergierend. Die erfindungsgemässe Vorrichtung ist bei einer vorteilhaften Ausgestaltung derart ausgebildet, dass ein Element, beispielsweise ein Abformelement oder Aufbauelement, auch in einer zur Achse eines Supports geneigten Verschieberichtung auf die Kopfpartie aufgesteckt und von dieser weggezogen werden kann. Man kann dann zwei oder mehr an Supporten gehaltene Elemente auch dann gleichzeitig von den Supporten wegziehen, wenn die Achsen der Supporte schief zueinander sind und miteinander Winkel bilden, die beispielsweise bis 30° oder sogar bis 40° betragen. Das Element kann beim Wegziehen vom Support und beim Verbinden mit diesem beispielsweise in einer Richtung über die Kopfpartie verschoben werden, die mit der Achse jedes Supports einen Winkel bis 15° oder sogar bis 20° bildet.

### Kurze Beschreibung der Zeichnungen

Der Erfindungsgegenstand wird anschliessend anhand in der Zeichnung definierter Ausführungsbeispiele erläutert. In den Zeichnungen zeigen
Fig. 1 einen Querschnitt durch einen bekannten Support und eine sich bezüglich diesem in der Soll-Drehstellung befindende Kappe,
Fig. 2 einen Querschnitt durch die in Fig. 1 ersichtlichen Teile, wobei aber die Kappe von der Soll-Drehstellung weg gedreht ist,
Fig. 3 eine Schrägansicht eines erfindungsgemässen Supports mit einem Implantat und einem lösbar an diesem befestigten Sekundärteil,
Fig. 4 eine Draufsicht auf den Kopf des in Fig. 3 gezeichneten Sekundärteils,
Fig. 5 eine teils im Schnitt und teils in Ansicht gezeichnete Vorrichtung mit dem gemäss Fig. 3 ausgebildeten, in einen Knochen eingesetzten Support und einer Einheilkappe,
Fig. 6 eine teils im Schnitt und teils in Ansicht gezeichnete Vorrichtung mit dem Support gemäss Fig. 3 und einem Aufbauelement mit einer Kappe für die Multipositionierung,
Fig. 7 einen Querschnitt durch die in Fig. 6 ersichtliche Vorrichtung entlang der Linie VII-VII, aber ohne die Verblendung der Kappe
Fig. 8 einen Ausschnitt aus Fig. 7 in grösserem Massstab, wobei die Kappe in der mittleren Soll-Drehstellung auf dem Support sitzt,
Fig. 9 einen zur Fig. 8 analogen Ausschnitt, wobei aber die Kappe von ihrer in Fig. 8 gezeichneten Stellung weg gedreht ist,
Fig. 10 einen zur Fig. 7 analogen Querschnitt durch eine Vorrichtung mit einer Kappe für die Einzelpositionierung,
Fig. 11 einen zur Fig. 7 analogen Querschnitt durch eine Vorrichtung mit einer anderen Kappe für die Einzelpositionierung,
Fig. 12 eine zur Fig. 6 analoge Darstellung einer Vorrichtung mit einer Kappe ohne Positionierungsabschnitt,
Fit. 13 einen Querschnitt durch die Vorrichtung gemäss Fig. 12 entlang der Linie XIII-XIII,
Fig. 14 eine Schrägansicht eines anderen Supports,
Fig. 15 eine Draufsicht auf die Kopfpartie des Supports gemäss Fig. 14,
Fig. 16 einen Axialschnitt durch eine Variante einer Vorrichtung mit noch einem anderen Support, wobei auch eine Hälfte einer für die Multipositionierung ausgebildeten Kappe und eine Hälfte einer Kappe ohne Positionierungsabschnitt gezeichnet ist,
Fig. 17 einen Schnitt entlang der Linie XVII-XVII der Fig. 16 durch den Support und die Kappen-Hälften gemäss Fig. 16,
Fig. 18 eine Schrägansicht einer Vorrichtung mit noch einem anderen Support und einer von diesem getrennten Kappe,
Fig. 19 eine Draufsicht auf die Kopfpartie des Supports gemäss Fig. 18,
Fig. 20 einen Axialschnitt durch die Vorrichtung gemäss Fig. 18, mit auf dem Support sitzender Kappe,
Fig. 21 einen Axialschnitt durch eine Vorrichtung mit einem Support gemäss den Figuren 18 bis 20, aber mit einer Kappe ohne Positionierungsabschnitt,
Fig. 22 eine Explosionsdarstellung von einer andern Vorrichtung,
Fig. 23 einen Axialschnitt durch eine andere Vorrichtung,
Fig. 24 einen Axialschnitt durch Teile einer anderen Vorrichtung,
Fig. 25 einen in Fig. 24 mit XXV bezeichneten Auschnitt aus der Vorrichtung gemäss Fig. 24 in grösserem Massstab,
Fig. 26 eine Schrägansicht der Kopfpartie der Vorrichtung gemäss den Figuren 24, 25,
Fig. 27 eine Schrägansicht einer für die Multipositionierung ausgebildeten Positionierungshülse der Vorrichtung gemäss den Figuren 24, 25,
Fig. 28 eine Abwicklung von Abschnitten der Kopfpartie und der Positionierungshülse der in den Figuren 24, 25 gezeichneten Vorrichtung,
Fig. 29 eine Schrägansicht einer Positionierungshülse für die Einzelpositionierung,
Fig. 30 eine zur Fig. 28 analoge Darstellung mit einer Variante der Positionierungshülse,
Fig. 31 eine Schrägansicht eines einen Support bildenden, einstückigen, teilweise aufgebrochenen Implantats, dessen Verankerungspartie zur Achse geneigte Nuten Zwischenräume aufweist,
Fig. 32 einen Querschnitt durch den Kopf des in Fig. 31 ersichtlichen Implantats entlang der Linie XXXII - XXXII von Fig. 31,
Fig. 33 einen vereinfachten, durch die Nuten der Verankerungspartie verlaufenden Querschnitt durch das Implantat gemäss Fig. 32,
Fig 34 ein teils in Ansicht, teils in Axialschnitt dargestelltes Implantat, dessen Verankerungspartie ineinander mündende Nuten oder Löcher hat,
Fig. 35 eine Schrägansicht des Implantats gemäss Fig. 34,
Fig. 36 einen vereinfachten Querschnitt entlang der Linie XXXVI - XXXVI der Fig. 35 durch das in dieser ersichtliche Implantat,
Fig. 37 einen zu den Fig. 33 und 36 analogen Querschnitt durch ein Implantat, dessen Verankerungspartie sich bis zu deren freiem Ende erstreckende Nuten hat,
Fig. 38 eine Schrägansicht eines aufgebrochenen Implantats, das ein axiales, in das freie Ende der Verankerungspartie mündendes Sackloch und in diese mündende Löcher hat,
Fig. 39 den teils in Ansicht, teils im Schnitt gezeichneten, unteren Endabschnitt des Implantats gemäss Fig. 38,
Fig. 40 ein teils in Ansicht, teils im Axialschnitt gezeichnetes Implantat mit einem an einen kleinen Aussendurchmesser der Verankerungspartie angepassten, axialen Loch,
Fig. 41 einen Schnitt durch einen Knochen, die Gingiva und einen Abschnitt eines subgingival eingesetzten, mit einer Einheilkappe versehenen Implantats,
Fig. 42 eine zur Fig. 41 analoge Darstellung, aber mit einem bezüglich der Gingiva halb-versenkten Implantat,
Fig. 43 eine zur Fig. 41 analoge Darstellung, aber mit transgingival eingesetztem Implantat,
Fig. 44 eine teils in Ansicht, teils im Axialschnitt gezeichnete Vorrichtung mit einem Implantat gemäss den Figuren 34 bis 36 und mit einer Kappe,
Fig. 45 einen Axialschnitt durch eine Vorrichtung mit einem in einen Knochen eingesetzten Implantat mit einer anderen Kappe,
Fig. 46 eine Schrägansicht der Kappe der Vorrichtung gemäss Fig. 45,
Fig. 47 einen Axialschnitt durch eine Vorrichtung mit einem in einen Knochen eingesetzten Implantat und einer für die Multipositionierung ausgebildeten Kappe,
Fig. 48 einen Querschnitt durch den achsparallelen Kopfabschnitt des Implantats und die Kappe der Vorrichtung gemäss Fig. 47,
Fig. 49 einen zur Fig. 48 analogen Querschnitt, wobei aber die Kappe für die Einzelpositionierung ausgebildet ist,
Fig. 50 eine Vorrichtung mit einer abgewinkelten Kappe,
Fig. 51 eine Schrägansicht der Kappe gemäss Fig. 50,
die Figuren 52 bis 54 Vorrichtungen mit verschiedenen Varianten von Kappen,
die Figuren 55 bis 62 Arbeitsschritte bei der Bildung eines Zahnersatzes,
Fig. 63 einen Schnitt durch einen Knochen und einen Teil einer in Ansicht gezeichneten Variante eines Implantats,
Fig. 64 einen Axialschnitt durch einen Bereich der Verankerungspartie eines Implantats mit einem Gewinde,
Fig. 65 einen Querschnitt durch die Kopfpartie eines Supports, bei dem alle nutartigen Zwischenräume der Kopfpartie gleich ausgebildet sind,
Fig. 66 eine Schrägansicht eines aus einem einstückigen Implantat bestehenden Supports, dessen Kopfpartie axiale, ebene Positionierungsflächen aufweist und
Fig. 67 einen Querschnitt durch die Kopfpartie des Supports gemäss Fig. 66 entlang der Linie VXVII - VXVII der Fig. 66.

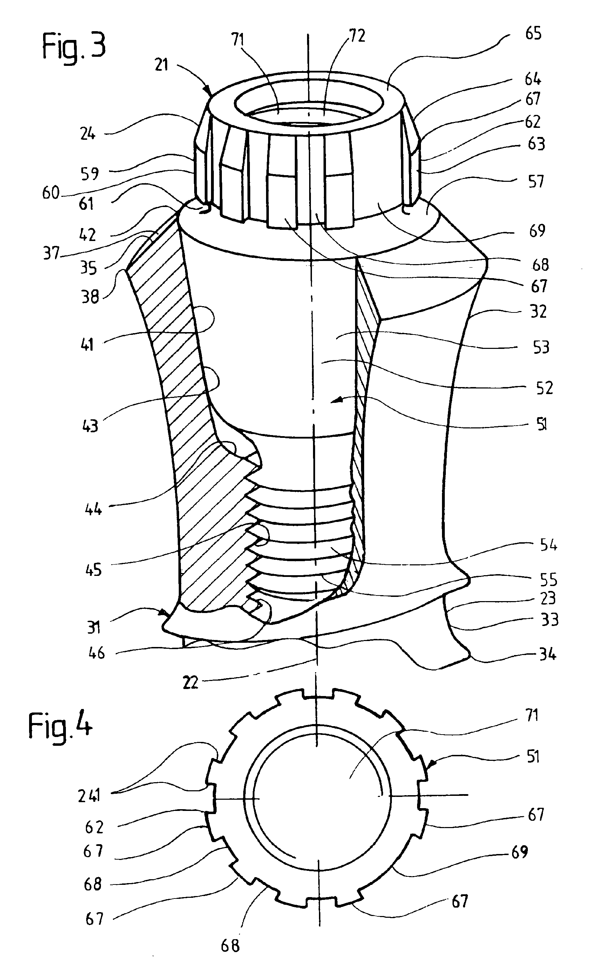

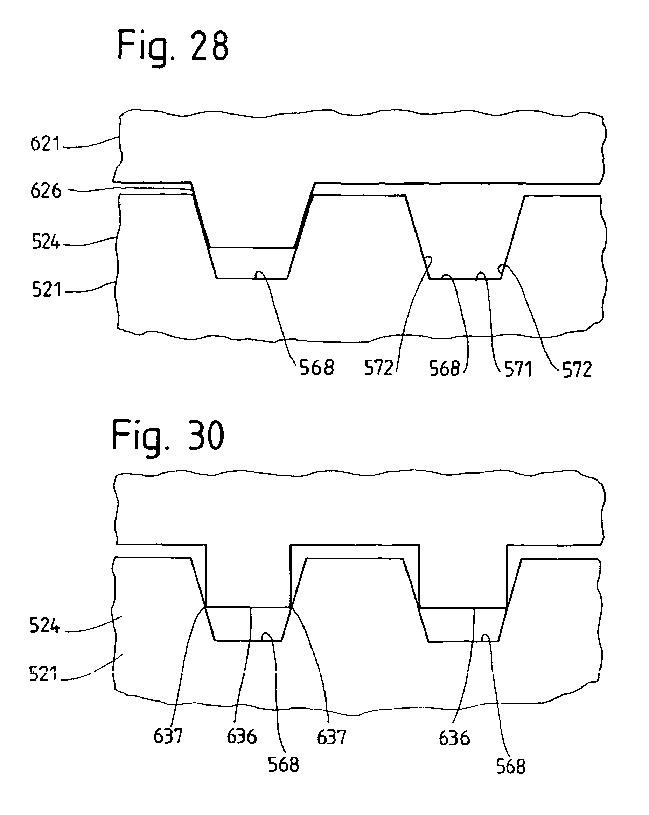

Die Figuren 1, 2 betreffen, wie schon erwähnt, einen bekannten Support. Ferner entsprechen einige der restlichen Figuren 3 bis 67, insbesondere die Figuren 3 bis 30 und 57 bis 61, nicht oder nicht eindeutig der Erfindung, dienen aber dennoch zur Illustration.

### Beschreibung der bevorzugten Ausführungsbeispiele

Der in Fig. 3 ersichtliche Support 21 ist im allgemeinen rotationssymmetrisch zu einer Achse 22 und weist unten eine zum Verankern in einem Knochen eines Unter- oder Oberkiefers bestimmte Verankerungspartie 23 und eine zum Herausragen aus dem Knochen bestimmte Kopfpartie 24 auf. Der Support 21 besitzt zwei ursprünglich separate, längliche, einstückige, metallische Teile, nämlich ein Implantat 31 und einen lösbar an diesem befestigten Sekundärteil 51.

Das Implantat 31 besitzt einen oberen Endabschnitt 32, der sich nach unten verjüngt. An diesen schliesst unter ein im allgemeinen zylindrischer Abschnitt 33 an, der beispielsweise mit einem Aussengewinde 34 versehen ist und mindestens den grössten Teil der Verankerungspartie 23 des Supports bildet. Das in Fig. 3 nicht sichtbare untere Ende des Abschnitts 33 bildet das erste freie Ende des ganzen Supports. Das Implantat 31 hat am oberen Ende eine Implantatschulter 35. Diese hat eine die Achse vollständig umschliessende, ringförmige, konische, sich von der Verankerungspartie weg nach oben verjüngende, glatte Schulterfläche 37. Die Kopfpartie 24 wird in axialer Projektion mindestens vom äusseren Bereich der Schulterfläche 37 und nämlich von der ganzen Schulterfläche 37 umschlossen. Die Schulterfläche bildet mit der Achse 22 einen Winkel von 40° bis 50° und hat aussen einen kreisförmigen Rand 38. Das Implantat ist mit einem im allgemeinen zur Achse 22 koaxialen, abgestuften Sackloch 41 versehen. Dieses hat eine sich am oberen Ende des Implantats befindende, vom inneren Rand der ImplantatSchulter 35 umschlossene Mündung 42 und von dieser weg nach unten der Reihe nach einen sich nach unten verjüngenden, konischen Hauptabschnitt 43, eine Schulter 44 und eine Gewindebohrung 45 mit einem Innengewinde 46.

Der auch in den Figuren 4 bis 8 ersichtliche Sekundärteil 51 besitzt einen Innen- bzw. Verbindungsabschnitt 52, der sich bei zusammengebautem Support 21 im Sackloch 41 des Implantats befindet. Der Verbindungsabschnitt 52 weist einen sich nach unten verjüngenden, im konischen Loch-Hauptabschnitt 43 des Implantats sitzenden, konischen Abschnitt 53 und einen Gewindeteil 54 mit einem Aussengewinde 55 auf, das mit einem vorzugsweise 30 bis 50 N cm betragenden Drehmoment in das Innengewinde 46 des Implantats eingeschraubt ist. Der Sekundärteil besitzt am oberen Ende des Innen- bzw. Verbindungsabschnitts 52 eine mit der Mündung 42 des Lochs 41 bündige, ebene Schulter 57 und einen von dieser weg nach oben ragenden, sich ausserhalb des Implantats befindenden Kopf 59, der mindestens einen grossen Teil der Kopfpartie 24 des Supports 21 bildet. Der Kopf 59 hat eine Umfangsfläche 60. Diese bildet einen über eine Ringnut 61 mit der Schulter 57 verbundenen Positionierungsabschnitt 62. Der letztere hat unten einen im wesentlichen zur Achse 22 parallelen sowie im allgemeinen zylindrischen Abschnitt 63 und oben einen sich nach oben verjüngenden, konischen Abschnitt 64. Dessen Umfangsflächenabschnitt bildet mit der Achse 22 einen Winkel, der kleiner ist als der von der Schulterfläche 37 mit der Achse 22 gebildete Winkel und vorzugsweise 10° bis 30°, besser 15° bis 25° und nämlich zum Beispiel ungefähr 20° beträgt. Der Kopf hat an seinem oberen, freien Ende eine ringförmige, ebene, zur Achse 22 rechtwinklige Stirnfläche 65, die das obere, zweite Ende des ganzen Supports bildet.

Der Positionierungsabschnitt 62 besitzt entlang seinem Umfang abwechselnd aufeinander folgende Positionierungsvorsprünge 67 und Positionierungszwischenräume 68, 69. Die Positionierungsvorsprünge 67 sind alle gleich ausgebildet. Die Positionierungszwischenräume 68, 69 weisen zehn erste, schmale Positionierungszwischenräume 68 und einen zweiten, breiteren Positionierungszwischenraum 69 auf. Jeder Positionierungsvorsprung 67 besteht aus einer geraden, axialen Rippe mit zwei Seitenflächen, einem Scheitel und eine Anschrägung. Die Scheitel und Anschrägungen befinden sich im zylindrischen Abschnitt 63 bzw. im konischen Abschnitt 64 und definieren eine zylindrische bzw. konische, zur Achse 22 koaxiale Fläche. Jeder Zwischenraum 68, 69 ist im Querschnitt ungefähr U-förmig und hat zwei ebene Seitenflächen, die selbstverständlich durch Seitenflächen von zwei einander benachbarten Vorsprüngen gebildet und ungefähr oder genau parallel zu einer durch die Achse 22 und die Mitte des betreffenden Zwischenraums verlaufenden Ebene sind. Ferner hat jeder Zwischenraum 68, 69 eine Grundfläche, die parallel zur Achse 22 ist und beispielsweise einen Abschnitt einer zur Achse 22 koaxialen Zylinderfläche bildet, jedoch statt dessen aus einer zur Achse parallelen Ebene bestehen könnte.

Der breitere, zweite Zwischenraum 69 ist durch Weglassen eines Vorsprungs aus zwei ersten Zwischenräumen gebildet. Die zehn verbleibenden, ersten Zwischenräume 64 definieren zusammen eine 12er- bzw. 30°-Kreis-Teilung. Die radiale Tiefe der Zwischenräume 68, 69 ist vorzugsweise derart bemessen, dass sich die Zwischenräume 68, 69 bis zum oberen Ende des Kopfs 59 erstrecken, an die ebene, ringförmige Stirnfläche 65 anstossen und Abschnitte von deren äusserem Rand bilden. Die durch die Grundflächen der Zwischenräume 68, 69 definierte Zylinderfläche kann beispielsweise ungefähr den gleichen Durchmesser haben wie das obere, dünnere Ende des konischen Abschnitts 64, so dass die Seitenflächen der Zwischenräume 68, 69 am oberen Ende des Kopfs in eine Spitze auslaufen. Ferner kann der Durchmesser der von den Grundflächen der Zwischenräume 68, 69 definierten Zylinderfläche ungefähr gleich dem Durchmesser der tiefsten Stelle der Ringnut 61 sein, so dass diese und die Zwischenräume beispielsweise stufenlos ineinander übergehen. Die von der Schulter 57 aus gemessene axiale Abmessung bzw. Höhe des Kopfs 59 beträgt vorzugsweise höchstens 2 mm, vorzugsweise mindestens 1 mm, besser mindestens 1,2 mm und zum Beispiel ungefähr 1,5 mm. Die ersten Zwischenräume 68 bestehen vorzugsweise aus Nuten, deren axiale Abmessung grösser ist als ihre Breite. Dagegen kann der zweite Zwischenraum 69 eventuell eine Breite haben, die grösser als seine axiale Abmessung ist. Der Sekundärteil 51 besitzt ein in sein oberes Ende mündendes Sackloch 71 mit einem Innengewinde 72.

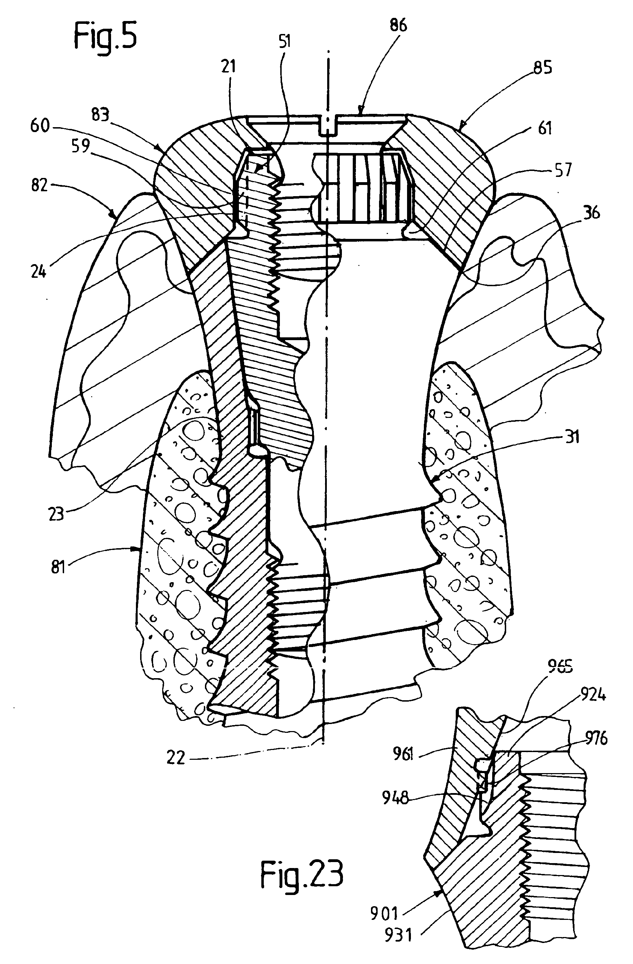

In Fig. 5 sind ein beispielsweise zum Unterkiefer eines Patienten gehörender Knochen 81, diesen bedeckendes Weichgewebe 82 - d.h. die Gingiva - und eine als Ganzes mit 83 bezeichnete Vorrichtung darstellt. Die letztere weist den auch in Fig. 1 dargestellten Support 21, eine Einheilelement 85 und eine Okklusalschraube 86 auf. Das Einheilelement 85 ist kappenförmig und wird im folgenden auch als Einheilkappe 85 bezeichnet. Zur Bildung der Vorrichtung 83 kann ein Zahnarzt bei einer Operation das Weichgewebe 82 aufschneiden, den Knochen 81 mit einem Loch versehen, das Implantat 51 in das Loch des Knochens 81 einsetzen, den Sekundärteil 51 am Implantat 31 festschrauben und danach die Einheilkappe 85 am Sekundärteil festschrauben. Die Verankerungspartie 23 des Supports 21 befindet sich dann mindestens zum grössten Teil innerhalb des Knochens 81, während die Kopfpartie 24 aus diesem herausragt. Das obere Ende des Sekundärteils 51 befindet sich ungefähr in der Höhe vom Kamm des den Knochen bedeckenden Weichgewebes 82 oder nur wenig höher. Die Einheilkappe 85 liegt mit einer konischen Auflagefläche auf der Implantatschulter 35 auf. Die Einheilkappe hat keine in Positionierungszwischenräume des Positionierungsabschnitts des Supports eingreifende Vorsprünge und kann also in beliebigen Drehstellungen am Support befestigt werden. Die Einheilkappe bleibt dann während einer gewissen Zeitdauer am Support 21 befestigt, so dass dieser einheilen und der Knochen gewissermassen am Implantat festwachsen kann. Die erwähnte, kleine axiale Abmessung des Sekundärteil-Kopfs 59 ermöglicht, dass die das obere Ende der Vorrichtung 83 bildende Deckfläche der Einheilkappe 85 höchstens geringfügig über das Weichgewebe 82 hinausragt. Dadurch kann weitgehend vermieden werden, dass beim Kauen des Patienten den Einheilprozess des Implantats störende Kräfte auf die Vorrichtung 83 ausgeübt werden. Ferner wirkt die Einheilkappe formgebend für das nachwachsende Weichgewebe.

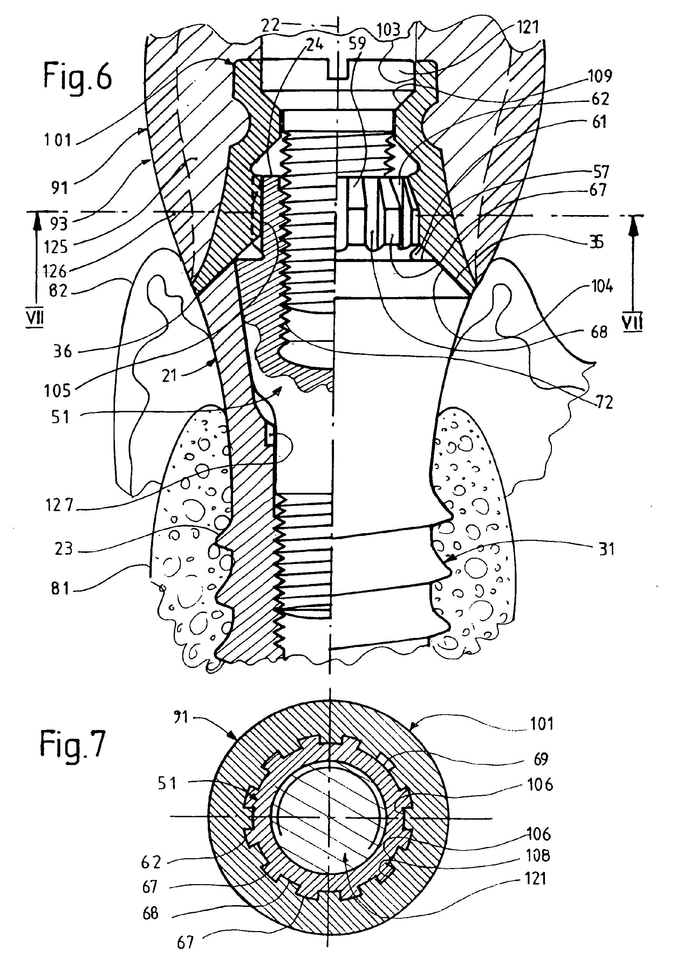

Wenn der Knochen 81 und das Weichgewebe 82 mindestens einigermassen verheilt sind, wird die Einheilkappe 85 vom Support 21 weggenommen und die in Fig. 6 sowie zum Teil in Fig. 7 ersichtliche, als Zahnersatz dienende Vorrichtung 91 gebildet. Dies kann ohne nochmaligen operativen Eingriff und ohne nochmaliges Aufschneiden des Weichgewebes getan werden, so dass der Zahnersatz mit einer einphasigen Operation, d.h. mit einem einzigen operativen Eingriff, hergestellt und befestigt werden kann. Die Vorrichtung 91 weist zusätzlich zum Support 21 ein Aufbauelement 93 auf. Dieses ist kappenförmig und besitzt eine ursprünglich separate, im allgemeinen zur Achse 22 rotationssymmetrische Kappe 101. Diese hat ein axiales, durchgehendes, abgestuftes Loch, das den Innenraum 103 der Kappe bildet. Dessen unterster, konischer Abschnitt bildet eine konische Auflagefläche 104, die bei zusammengebauter Vorrichtung 91 mit der Achse 22 den gleichen Winkel bildet wie die Schulterfläche 37, um die Achse 22 herum unterbruchlos und spaltfrei auf der Schulterfläche 37 aufliegt und die Kappe dadurch koaxial zur Achse 22 zentriert. An den konischen Innenraumabschnitt der Kappe 101 schliesst ein Positionierungsabschnitt 105 an. Dieser ist im allgemeinen zylindrisch, besitzt aber gemäss Fig. 7 entlang dem Umfang des Innenraums 103 abwechselnd aufeinander folgende Positionierungsvorsprünge 106 und Positionierungszwischenräume 108. Dabei sind zwölf gleichmässig entlang dem Innenraumumfang verteilte, identisch ausgebildete und bemessene Vorsprünge 106 und zwölf ebenfalls gleichmässig verteilte und identisch ausgebildete Zwischenräume 108 vorhanden. Die Kappe 101 ist also für die Multipositionierung ausgebildet und kann beim Verbinden mit dem Support in zwölf verschiedenen Positionen - d.h. Drehstellungen - auf dem Support positioniert werden, wobei der Winkel zwischen den einander benachbarten Drehstellungen 30° beträgt. Die Vorsprünge 106 bestehen aus geraden, axialen Rippen und haben einen Scheitel sowie zwei Seitenflächen. Die Zwischenräume 108 bestehen dementsprechend aus geraden axialen Nuten, sind im Querschnitt ungefähr U-förmig und haben eine Grund- sowie zwei Seitenflächen. Der Innenraum 103 besitzt oberhalb des Positionierungsabschnitts 105 eine Verengung und auf deren oberer Seite eine sich nach oben konische erweiternde Auflagefläche 109. Die Kappe 101 wird beim Verbinden mit dem Support 21 mit einer Okklusalschraube 121 am Sekundärteil befestigt. Die Schraube 121 hat einen versenkt im Loch 103 der Kappe 101 angeordneten, auf der konischen Auflagefläche 109 aufliegenden Kopf und einen Gewindeteil mit einem Aussengewinde, das in das Innengewinde 72 des Sekundärteils eingeschraubt ist. Die Kappe 101 besteht zum Beispiel aus einem metallischen Material, etwa einer Goldlegierung oder Titan. Das Aufbauelement 93 kann noch einen metallischen, an die Kappe angegossenen Anguss 125 und eine Verblendung 126 aus Porzellan oder Kunststoff, aufweisen und als Krone zur Bildung eines künstlichen Einzelzahns oder einer Brücke dienen. Der untere Endabschnitt der Aussenfläche der Kappe 101 schliesst beim Rand 38 der Implantatschulter fugenlos, stufenlos und vorzugsweise mindestens annähernd glatt sowie stetig an die Aussenfläche des Implantats 31 an. Die Aussenfläche des Angusses 125 und/oder der Verblendung 126 schliesst beispielsweise ihrerseits fugenlos, stufenlos und mindestens annähernd glatt sowie stetig an den unteren Endabschnitt der Kappen-Aussenfläche an.

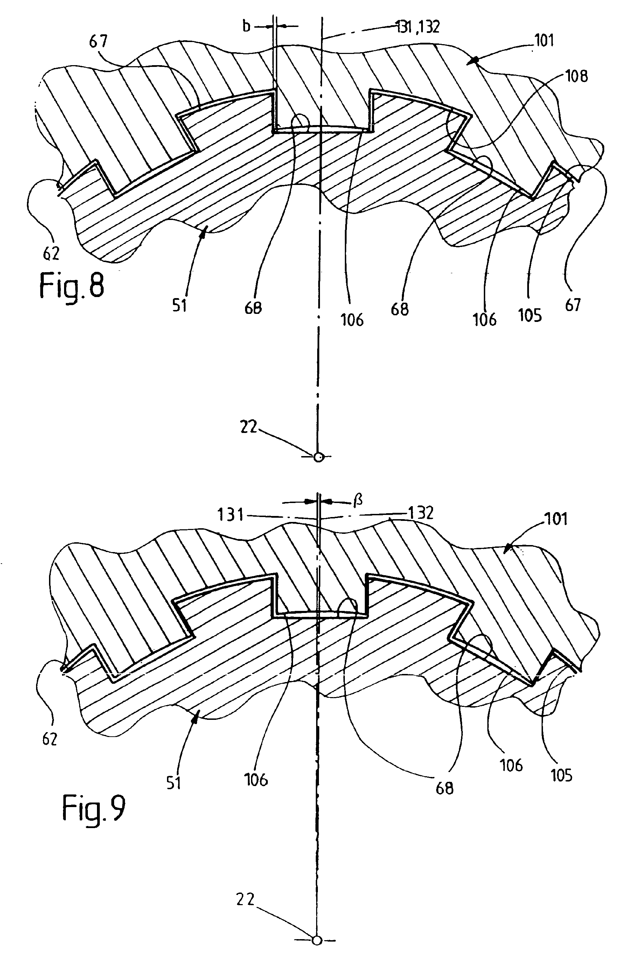

Nun soll die Zusammenwirkung der Positionierungsabschnitte 62 und 105 des Sekundärteils 51 bzw. der Kappe 101 noch näher beschrieben werden. Von den 12 Positionierungsvorsprüngen 106 der Kappe 101 ragen zehn Vorsprünge mit kleinem seitlichen Spiel und kleinem radialen Spiel in einen ersten, schmalen Positionierungszwischenraum 68 hinein. Die zwei restlichen Vorsprünge ragen mit kleinem radialen Spiel derart in den zweiten, breiteren Positionierungszwischenraum 69 des Sekundärteils 51 hinein, dass eine Seitenfläche von jedem dieser Vorsprünge mit kleinem seitlichen Spiel einer Seitenfläche des zweiten, breiteren Zwischenraums 69 zugewandt ist. In den Figuren 8 und 9 ist eine Gerade 131 gezeichnet, die radial zur Achse 22 des Supports durch die Mitte eines ersten Zwischenraums 68 des Sekundärteils 51 verläuft. Die Kappe 101 befindet sich in Fig. 8 bezüglich Drehungen um die Achse 22 des Supports in der vorgesehenen, mittleren Soll-Drehstellung. In dieser befindet sich jeder in einen ersten Zwischenraum 68 des Sekundärteils hineinragende Vorsprung 106 der Kappe in der Mitte zwischen den zwei Seitenflächen des betreffenden Zwischenraums 68, so dass eine zur Achse 22 radiale Gerade 132 durch die Mitte des Vorsprungs 106 mit der Geraden 131 zusammenfällt. Wegen des Spiels hat jede Seitenfläche eines Zwischenraums 68 des Sekundärteils von der ihr gegenüberstehenden Seitenfläche eines Vorsprungs 106 den Abstand b. Wenn die Positionierungsabschnitte des Sekundärteils und der Kappe beim Verbinden der letzteren mit dem Support ineinander eingreifen, kann die Kappe bis zum Festziehen der Schraube ausgehend von ihrer in Fig. 8 gezeichneten mittleren Soll-Drehstellung in der einen oder anderen Richtung um einen in Fig. 9 mit β bezeichneten Winkel gedreht werden, bis die in die ersten Zwischenräume 68 des Sekundärteils 51 hineinragenden Vorsprünge 106 der Kappe 101 gemäss der Fig. 9 mit einer Seitenfläche an einer Seitenfläche eines Zwischenraums 68 anstehen. Der Umfang eines sich an die Scheitel der Vorsprünge 67 anschmiegenden oder durch diese verlaufenden Kreises beträgt zum Beispiel ungefähr 10 mm. Der Abstand b beträgt zum Beispiel ungefähr 0,01 mm, so dass ein in einen ersten Zwischenraum 68 hineinragender Vorsprung 106 insgesamt ein tangential zum genannten Kreis gemessenes Spiel von ungefähr 0,02 mm hat. Der Winkel β beträgt dann ungefähr 0,36°, so dass die Kappe insgesamt um einen Winkel 2β von ungefähr 0,72° hin und her gedreht werden kann. Das radiale Spiel zwischen den Positionierungsabschnitten 62 und 105 des Sekundärteils bzw. der Kappe - d.h. der Abstand der einander gegenüberstehenden Grundflächen der Positionierungszwischenräume und Scheitelflächen der Positionierungsvorsprünge - beträgt zum Beispiel ca. 0,01 mm.

Die ineinander eingreifenden Positionierungsabschnitte ergeben eine genaue Positionierung und sichern die Kappe gegen Drehungen bezüglich des Supports. Wenn man das Spiel vernachlässigt, liegen die Positionierungsvorsprünge 106 der Kappe etwa vom untersten Viertel des Sekundärteil-Kopfs 59 bis zu dessen oberem Ende an den Grundflächen und den Seitenflächen der Positionierungszwischenräume des Sekundärteil-Kopfs an. Ferner liegt die Kappe - wenn man wiederum das Spiel vernachlässigt - an den Scheiteln der Positionierungsvorsprünge des Sekundärteils an. Da die Kappe ja auch fest und ohne Spiel auf der Implantatschulter 35 aufliegt, wird sie seitlich gut geführt, so dass auch grosse, seitliche, d.h. ungefähr quer zur Achse 22 gerichtete Kräfte und von solchen Kräften erzeugte Drehmomente bzw. Torsionsbeanspruchungen gut von der Kappe auf den Support übertragen werden, ohne dass die Kappe kippt. Bei festgezogener Schraube 121 wird also die Kappe stabil mit dem Support verbunden. Die Implantatschulter 35 und die Auflagefläche 104 der Kappe befinden sich unterhalb des Kamms des Weichgewebes 82 innerhalb von diesem und können derart spaltfrei aufeinander aufliegen, dass sich keine Probleme wegen Mikroorganismen ergeben.

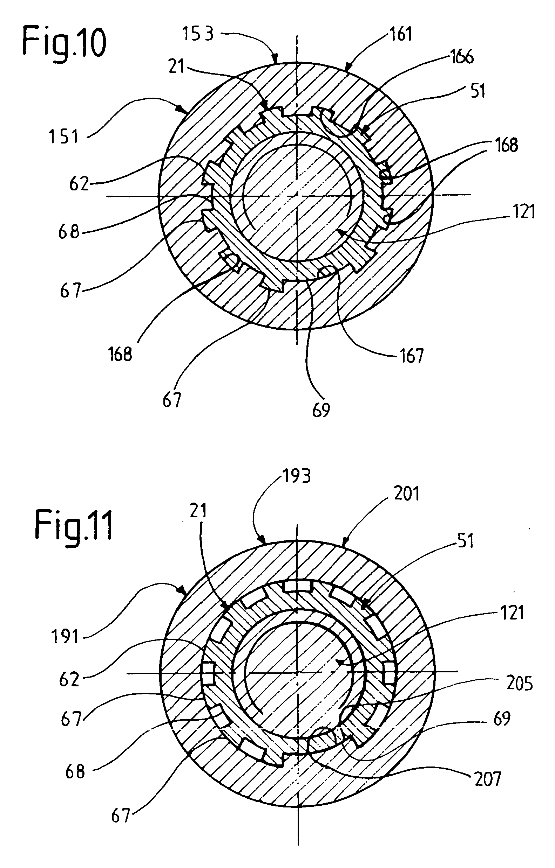

Die zum Teil in Fig. 10 gezeichnete Vorrichtung 151 besitzt einen Support, der gleich ausgebildet ist wie der in den Figuren 3 bis 9 ersichtliche Support und wie dieser mit 21 bezeichnet ist und von dem lediglich der Positionierungsabschnitt 62 des Sekundärteils 51 ersichtlich ist. Die Vorrichtung 151 besitzt ferner ein Aufbauelement 153 mit einer Kappe 161. Diese ist für die Einzelpositionierung ausgebildet und hat einen Positionierungsabschnitt 165 mit zehn ersten, schmalen, identisch ausgebildeten und bemessenen Positionierungsvorsprüngen 166, einem zweiten, breiteren Positionierungsvorsprung 167 und Positionierungszwischenräumen 168. Die ersten Positionierungsvorsprünge 166 sind analog ausgebildet wie die Positionierungsvorsprünge 106 der Kappe 101 und ragen in die ersten Zwischenräume 68 des Sekundärteils hinein. Der zweite, breitere Vorsprung 167 der Kappe ragt mit kleinem Spiel in den zweiten, breiteren Zwischenraum 69 des Sekundärteils hinein. Die Kappe 161 ist analog wie die Kappe 101 mit einer Okklusalschraube 121 lösbar am Sekundärteil 51 befestigt.

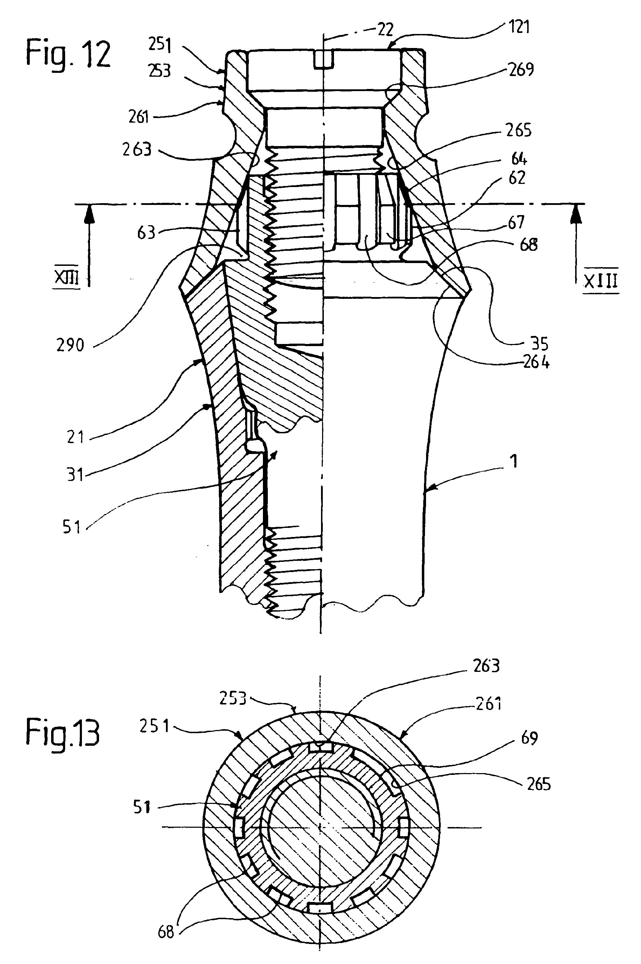

Die zum Teil in Fig. 11 gezeichnete Vorrichtung 191 besitzt wiederum einen Support 21, von dem nur der Positionierungsabschnitt 62 des Sekundärteils 51 ersichtlich ist. Die Vorrichtung 191 weist ferner ein Aufbauelement 193 mit einer Kappe 201 auf, die mit einer Okklusalschraube 121 am Sekundärteil befestigt ist. Die Kappe 201 hat einen Positionierungsabschnitt 205. Dieser ist für die Einzelpositionierung ausgebildet und besitzt nur einen einzigen, breiten Positionierungsvorsprung 207, der mit kleinem Spiel in den zweiten, breiteren Zwischenraum 69 eingreift. Die Kappe 201 hat also keine in die ersten, schmalen Zwischenräume 68 eingreifenden Vorsprünge.

Die in den Figuren 10 und 11 dargestellten Aufbauelemente 153 bzw. 193 können beispielsweise als sogenannte Teleskop- oder Lötbasis-Aufbauten ausgebildet sein. Soweit vorgängig nichts anderes geschrieben wurde, können die Vorrichtungen 151 und 191 ähnlich ausgebildet sein, wie die anhand der Figuren 6 bis 9 beschriebene Vorrichtung 91.

Die in den Figuren 12 und 13 dargestellte Vorrichtung 251 besitzt wiederum einen in der bereits beschriebenen Weise ausgebildeten Support 21 mit einem Implantat 31 und einem Sekundärteil 51. Die Vorrichtung 251 weist ferner ein Aufbauelement 253 mit einer Kappe 261 auf. Die letztere hat einen Innenraum 263, der von einem axialen, durchgehenden Loch gebildet ist und zuunterst eine konische Auflagefläche 264 bildet. An diese schliesst eine ebenfalls konische, aber steilere Innenfläche 265 an, die mit der Achse 22 den gleichen Winkel bildet wie der konische Abschnitt 64 des Sekundärteils. Der Innenraum 263 hat oberhalb der konischen Fläche 265 eine Verengung und auf der oberen Seite von dieser eine konische Auflagefläche 269. Die Kappe 261 ist analog wie die Kappe 101 mit einer Okklusalschraube 121, deren Kopf auf der Auflagefläche 269 aufliegt, am Sekundärteil 51 befestigt. Die Kappe 261 ist so ausgebildet, dass sie im befestigten Zustand mit ihrer Auflagefläche 264 mindestens auf dem äusseren Bereich der Schulterfläche 37 fest und spaltfrei aufliegt, während zwischen dem konischen Abschnitt 64 des Sekundärteils und der konischen Innenfläche 265 der Kappe ein sehr kleiner, beispielsweise ungefähr 0,01 bis 0,02 mm breiter Spalt vorhanden ist. Die Kappe wird dann vom konischen Abschnitt 64 des Sekundärteils ebenfalls noch geführt, zentriert und bei der Einwirkung von seitlichen, ungefähr quer zur Achse 22 gerichteten Kräften abgestützt. Wie man besonders deutlich in Fig. 13 sieht, besitzt die Kappe 261 keine in Positionierungszwischenräume 68, 69 des Sekundärteils eingreifende Vorsprünge und wird also - bezüglich Drehungen um die Achse 22 - nicht positioniert. Das die Kappe 261 aufweisende Aufbauelement 253 kann beispielsweise als Steg oder Brücke für die Bildung mehrerer künstlicher Zähne ausgebildet sein und noch mindestens eine andere Kappe aufweisen, die ebenfalls an einem Support befestigt werden kann.

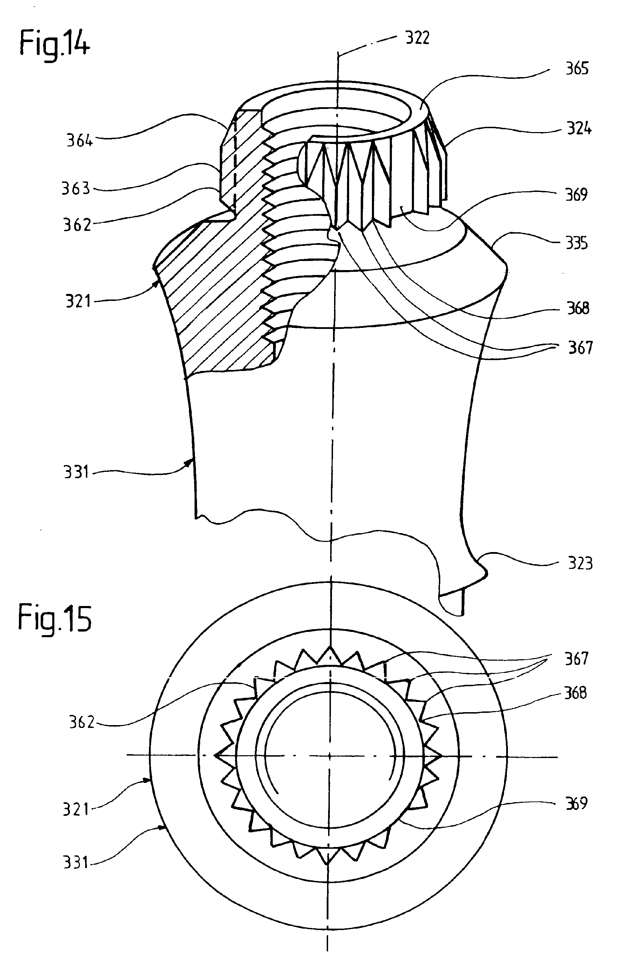

Der in den Figuren 14 und 15 ersichtliche Support 321 ist im allgemeinen rotationssymmetrisch zu einer Achse 322 und besitzt eine Verankerungspartie 323 sowie eine Kopfpartie 324. Der Support 321 besteht vollständig und ausschliesslich aus einem einstückigen Körper, d.h. einem Implantat 331, dessen unterer Teil die Verankerungspartie 323 und dessen oberer Teil die Kopfpartie 324 des Supports bildet. Der untere Teil des Implantats 331 ist ähnlich ausgebildet wie das Implantat 31 und weist insbesondere eine konische Implantatschulter 335 mit einer konischen Schulterfläche auf. Der obere, die Kopfpartie 334 bildende Teil des Implantats 331 weist einen Positionierungsabschnitt 362 mit einem unteren, im allgemeinen zylindrischen Abschnitt 363 und einem oberen, im allgemeinen konischen Abschnitt 364 auf. An den letzteren schliesst am oberen Ende des Implantats eine ringförmige, ebene Stirnfläche 365 an. Der Positionierungsabschnitt 362 weist entlang dem Umfang abwechselnd aufeinanderfolgende Positionierungsvorsprünge 367 und Positionierungszwischenräume 368, 369 auf. Die Positionierungsvorsprünge 367 sind alle gleich ausgebildet, gerade sowie parallel zur Achse 322 und ragen von dieser weg nach aussen, verjüngen sich im Querschnitt nach aussen gegen ihre Scheitel hin und sind im Querschnitt ungefähr V- bzw. dreieckförmig. Die Positionierungszwischenräume sind ebenfalls gerade sowie parallel zur Achse 322 und weisen mehrere gleich ausgebildete sowie gleich bemessene, schmale, erste Positionierungszwischenräume 368 und einen einzigen breiteren, zweiten Positionierungszwischenraum 369 auf. Jeder erste Positionierungszwischenraum 368 besteht aus einer im Querschnitt ungefähr V-förmigen Nut oder Kerbe und hat zwei im wesentlichen ebene Seitenflächen, die von seinem Grund und der Achse 2 weg nach aussen voneinander weg geneigt sind. Der breitere, zweite Positionierungszwischenraum 369 hat eine ebene oder leicht gebogene Grundfläche und zwei von dieser weg nach aussen voneinander weg geneigte Seitenflächen. Die Vorsprünge haben vom zylindrischen Abschnitt 363 gebildete Scheitel und vom konischen Abschnitt 364 gebildete Anschrägungen. Die Scheitel der Vorsprünge 367 definieren einen Teilkreis und liegen auf einer Zylinderfläche. Die Gründe der Zwischenräume definieren zusammen ebenfalls eine Zylinderfläche. Die schmalen, ersten, einander benachbarten Positionierungszwischenräume 368 haben alle gleiche Abstände voneinander und definieren beispielsweise eine 15°- bzw. 24er-Kreis-Teilung. Der breitere, zweite Positionierungszwischenraum 369 ist durch Weglassen von einem Vorsprung 367 gebildet. Das Implantat 331 besitzt ein dem Sackloch 71 des Sekundärteil 51 entsprechendes axiales Sackloch 371 mit einem Innengewinde 372 zum Einschrauben einer Okklusalschraube. Soweit vorgängig nichts anderes geschrieben wurde, kann der aus dem Implantat 331 bestehende Support 321 gleich oder ähnlich ausgebildet sein wie der Support 21 und ähnlich wie dieser verwendet werden.

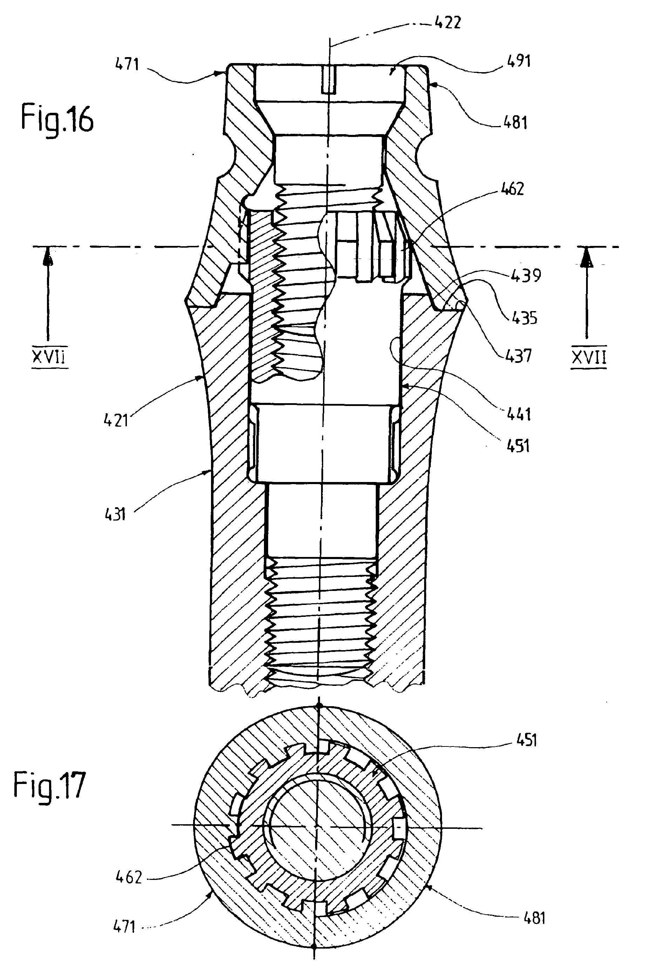

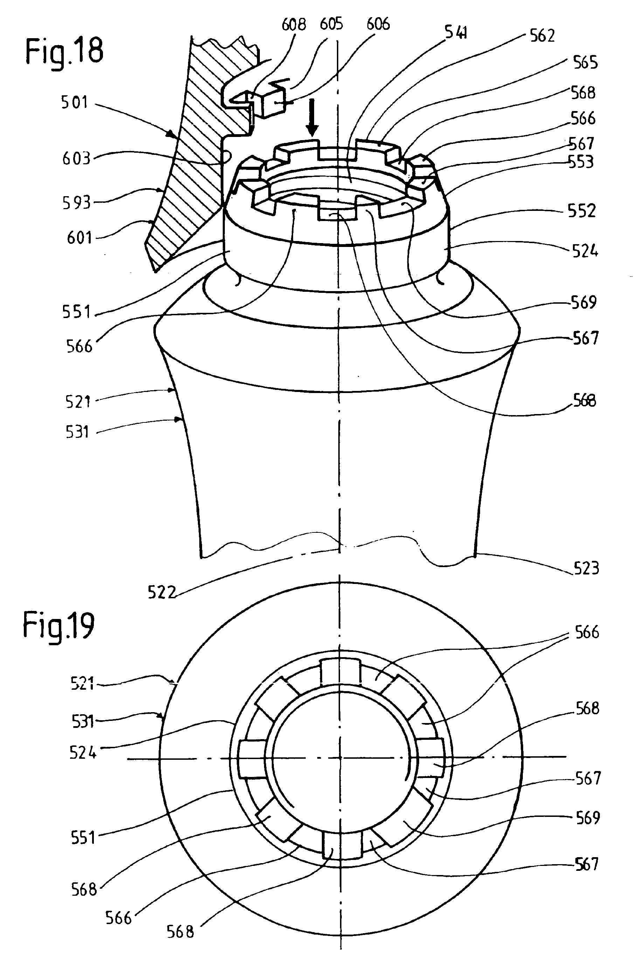

Der in den Figuren 16 und 17 ersichtliche Support 421 hat eine Achse 422 und ein Implantat 431. Dieses hat an seinem oberen Ende eine ringförmige, abgestufte Stirnseite mit einer Implantatschulter 435, die aus einer Kehle mit einer ebenen, zur Achse 422 rechtwinkligen Schulterfläche 437 und einer kurzen, konischen, nach oben zur Achse hin geneigten Zentrierfläche 439 besteht. Das Implantat 434 hat ein axiales Sackloch 441 mit einem Innengewinde, in das ein Sekundärteil 451 eingeschraubt ist. Dessen Kopf hat einen Positionierungsabschnitt 462, der beispielsweise ähnlich wie der Positionierungsabschnitt 62 des Sekundärteils 51 ausgebildet ist. Am Support 421 kann eine zur Hälfte gezeichnete Kappe 471 oder eine zur Hälfte gezeichnete Kappe 481 mit einer Okklusalschraube 491 lösbar befestigt werden. Die auf der linken Seite der Figuren 16, 17 gezeichnete Kappe 471 besitzt einen Positionierungsabschnitt, der beispielsweise wie der Positionierungsabschnitt 105 der Kappe 101 für die Multipositionierung ausgebildet ist. Die in den Figuren 16, 17 rechts gezeichnete Kappe 481 besitzt keinen Positionierungsabschnitt, so dass sie analog wie die Kappe 261 in beliebige Drehstellungen am Support befestigt werden kann.

Die in den Figuren 18, 19, 20 dargestellte Vorrichtung 501 besitzt einen Support 521 mit einer Achse 522. Der Support 521 hat eine Verankerungspartie 523 sowie eine Kopfpartie 524 und besteht zum Beispiel ausschliesslich aus einem einstückigen Implantat 531. Dieses weist ein axiales Sackloch 541 auf, das in die Stirnseite am freien Ende der Kopfpartie 524 mündet. Das Implantat besitzt einen Kopf 551 mit einem zylindrischen Abschnitt 552 und einem sich zum freien Ende des Kopfs hin verjüngenden, im allgemeinen konischen Abschnitt 553. Der Kopf besitzt ferner einen Positionierungsabschnitt 562, der sich am dünneren Ende des konischen Abschnitts 553 und auf der Stirnseite des Kopfs befindet. Der Positionierungsabschnitt 562 ist aussen durch den Endabschnitt der konischen, Aussenfläche des konischen Abschnitts 553, innen durch einen zylindrischen Abschnitt des Lochs 541 und auf der Stirnseite der Kopfpartie durch eine ringförmige, ebene, zur Achse 522 rechtwinklige Stirnfläche 565 begrenzt.

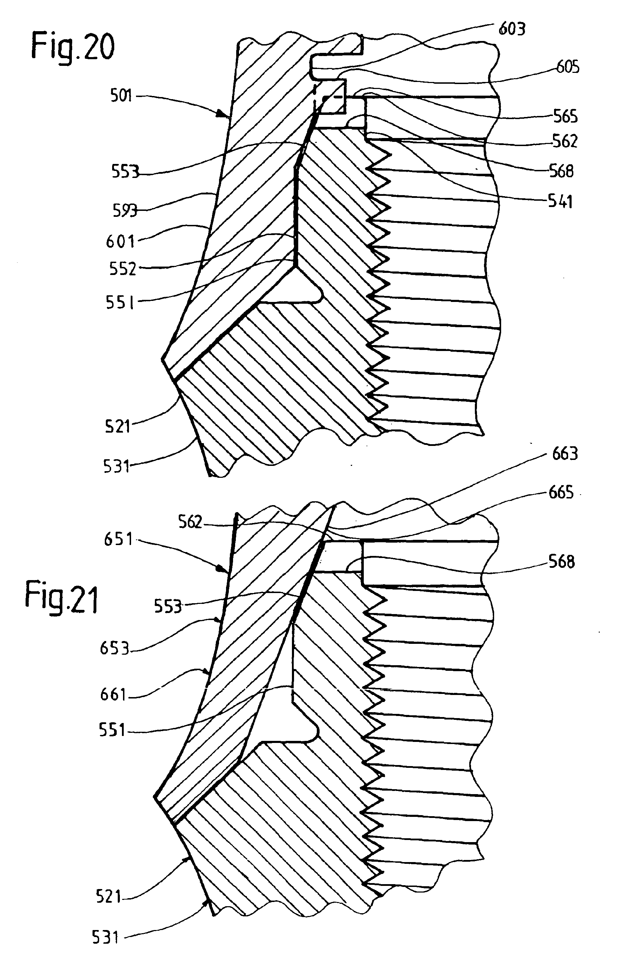

Der Positionierungsabschnitt 562 weist um die Achse 522 herum verteilte, abwechselnd aufeinanderfolgende Positionierungsvorsprünge 566, 567 und Positionierungszwischenräume 568, 569 auf. Die Vorsprünge 566, 567 bestehen aus Nocken, die in axialer Richtung von den Grundflächen der Zwischenräume 568, 569 wegragen und durch Abschnitte der ebenen Stirnfläche 565 gebildete Scheitel haben. Die Grundflächen der Zwischenräume 568, 569 bestehen aus Abschnitten einer ebenen, zur Achse 522 rechtwinkligen Ringfläche. Die Seitenflächen der Vorsprünge und Zwischenräume sind beispielsweise eben sowie parallel zu einer durch die Achse und die Mitte des betreffenden Zwischenraums verlaufenden Ebene. Die Vorsprünge weisen mehrere identisch ausgebildet und bemessene, breite, erste Vorsprünge 566 und zwei einander benachbarte, schmälere, zweite Vorsprünge 567 auf. Die Zwischenräume weisen mehrere identisch ausgebildete und bemessene, schmale, erste Zwischenräume 568 und einen breiteren, zweiten Zwischenraum 569 auf, der sich zwischen den zwei schmäleren, zweiten Vorsprüngen 567 befindet. Der Positionierungsabschnitt 562 besitzt beispielsweise insgesamt acht Vorsprünge und Zwischenräume, die eine 8er- bzw. 45°-Teilung definieren. Die Vorrichtung 501 weist noch ein Aufbauelement 593 auf, von dem in den Figuren 18 sowie 20 nur ein Teil der Kappe 601 gezeichnet ist. Diese hat einen Innenraum 603 mit einem Positionierungsabschnitt 605. Der letztere besitzt acht entlang seinem Umfang verteilte Positionierungsvorsprünge 606 und dazwischen acht Positionierungszwischenräume 608. Die Positionierungsvorsprünge bestehen beispielsweise aus Nocken, die von einer abgestuften zylindrischen Innenfläche weg in radialer Richtung nach innen ragen und bei zusammengebauter Vorrichtung 501 in die Zwischenräume 566, 567 des Supports 521 eingreifen. Die Positionierungsvorsprünge der Kappe könnten jedoch statt dessen von oben her, beispielsweise von einer ebenen radialen Ebene weg in axialer Richtung nach unten vorstehen. Im übrigen kann der Positionierungsabschnitt 605 der Kappe 601 entweder für die Multi- oder für die Einzelpositionierung ausgebildet sein. Die Vorrichtung 501 kann dementsprechend - soweit vorgängig nichts anderes geschrieben wurde - ähnlich wie die Vorrichtung 91 bzw. 151 ausgebildet sein.

Die in Fig. 21 ersichtliche Vorrichtung 651 besitzt einen Support 521, der gleich wie der in den Fig. 18 bis 20 dargestellte Support ausgebildet ist und wie dieser aus einem Implantat 531 besteht. Die Vorrichtung 651 besitzt ein Aufbauelement 653, von dem wiederum nur die Kappe 661 gezeichnet ist. Diese besitzt keine in die Positionierungszwischenräume 568 des Supports bzw. Implantats eingreifenden Vorsprünge, aber einen Innenraum 663 mit einer konischen Innenfläche 665, die mit kleinem Spiel vom konischen Abschnitt 553 des Kopfs 551 des Implantats 431 geführt wird. Soweit vorgängig nichts anderes geschrieben wurde, kann die Vorrichtung 651 ähnlich wie die in den Figuren 12, 13 dargestellte Vorrichtung 251 ausgebildet sein.

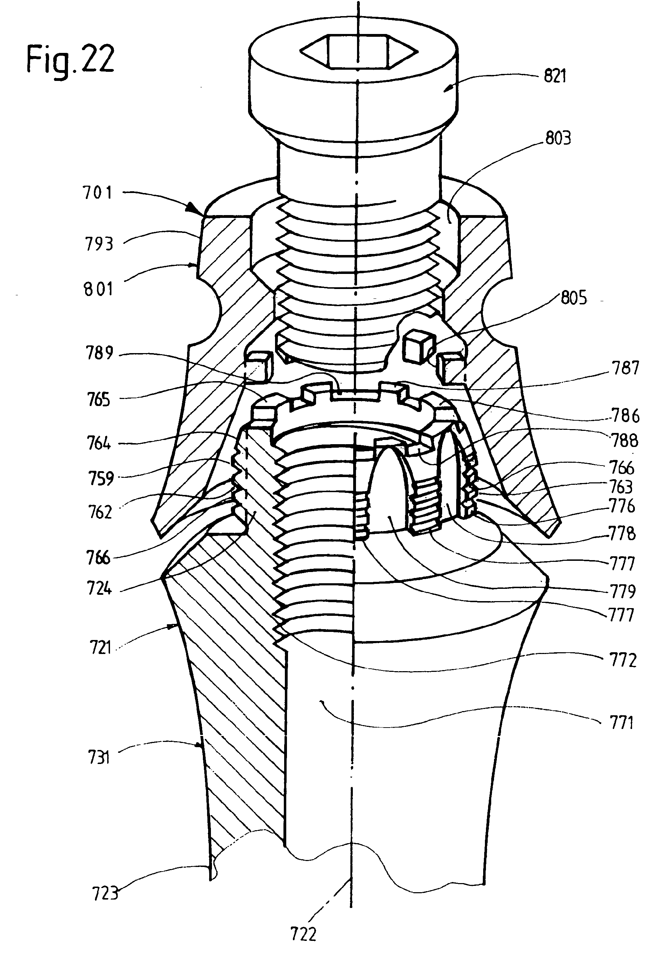

Die in Fig. 22 ersichtliche Vorrichtung 701 besitzt einen Support 721 mit einer Achse 722, einer Verankerungspartie 723 und einer Kopfpartie 724. Der Support 721 besitzt ein Implantat 731, das aus einem einstückigen, metallische Körper besteht. Das Implantat 731 weist einen Kopf 759 mit einem Positionierungsabschnitt 762 auf. Der letztere besitzt einen im allgemeinen zylindrischen Abschnitt 763, einen sich von diesem weg nach oben verjüngenden, im allgemeinen konischen Abschnitt 764 und eine ringförmige, radiale, ebene Stirnfläche 765. Der zylindrische Abschnitt 763 ist mit einem Aussengewinde 766 versehen, das beispielsweise als Trapezgewinde ausgebildet ist und durch Abschnitte einer Zylinderfläche gebildete Scheitel besitzt. Der Support 721 besitzt auch ein in die Stirnseite der Kopfpartie mündendes, axiales Sackloch 771 mit einem Innengewinde 772. Die teils zylindrische und teils konische Aussen- oder Umfangsfläche des Positionierungsabschnitts 762 ist mit axial verlaufenden, radial nach aussen regenden Positionierungsvorsprüngen 776, 777 und mit Positionierungszwischenräumen 778, 779 versehen, wobei zum Beispiel mehrere erste, breite Vorsprünge 776, zwei zweite, schmälere Vorsprünge 777, mehrere erste, schmale Zwischenräume 778 und ein zwischen den zwei schmäleren Vorsprüngen angeordneter zweiter, breiterer Zwischenraum 779 vorhanden sind. Die durch Nuten gebildeten Zwischenräume unterteilen das Aussengewinde 766, so dass lediglich auf den Scheiteln der Vorsprünge Abschnitte des Aussengewindes vorhanden sind. Der Positionierungsabschnitt 762 ist zusätzlich auf der Stirnseite mit axial vorstehenden Positionierungsvorsprüngen 786, 787 und Positionierungszwischenräumen 788, 789 versehen, wobei zum Beispiel analog wie beim Support 521 mehrere erste, breite Vorsprünge 786, zwei zweite, schmälere Vorsprünge 787, mehrere erste, schmale Zwischenräume 788 und ein zweiter, breiterer Zwischenraum 789 vorhanden sind. Die Vorrichtung 701 weist noch ein Aufbauelement 793 mit einer Kappe 801 auf. Diese hat einen Innenraum 803 mit einem Positionierungsabschnitt 805, der ähnlich wie derjenige der Kappe 601 ausgebildet ist und Vorsprünge besitzt, die in die stirnseitigen Zwischenräume 788, 789 des Supports eingreifen können. Die Kappe 801 kann mit einer Okklusalschraube 821 am Support 621 befestigt werden.

Die Kappe 801 kann durch eine Kappe mit Positionierungsvorsprüngen ersetzt werden, die in die auf der Aussen- bzw. Umfangsfläche angeordneten Zwischenräume 788, 769 des Supports 721 eingreifen. Ferner kann am Support 721 eine Kappe befestigt werden, die keine Positionierungsvorsprünge, aber ein Innengewinde aufweist, das beim Befestigen der Kappe mit dem Aussengewinde 766 des Supports verschraubt wird.

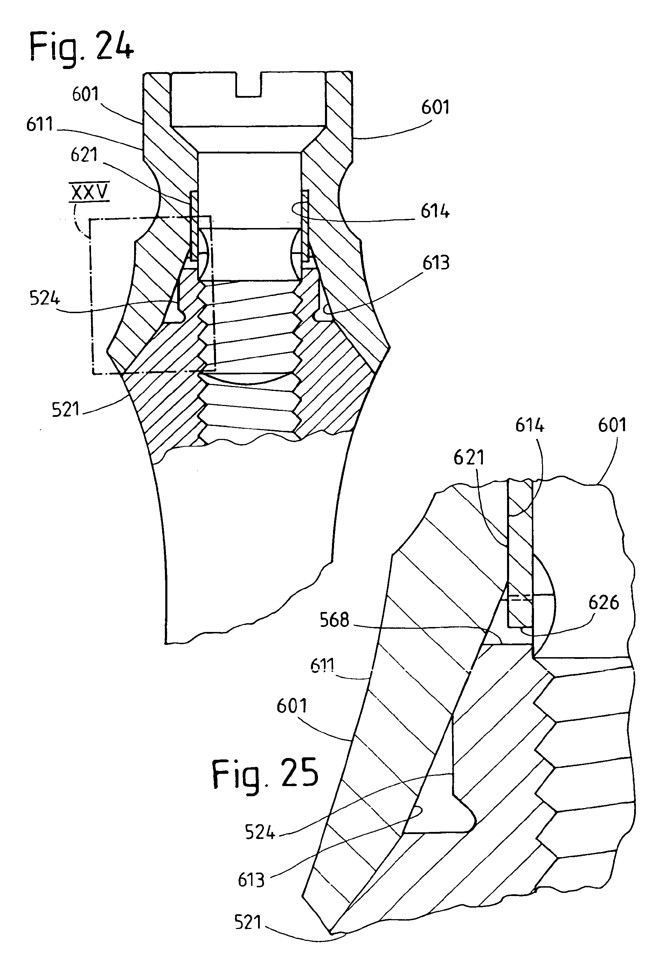

Die in Fig. 23 ersichtliche Vorrichtung 901 besitzt einen aus einem einstückigen Implantat 931 gebildeten Support. Die vom Kopf des Implantats gebildete Kopfpartie 924 des Supports besitzt erste und zweite Positionierungszwischenräume, von denen einer der ersten ersichtlich und mit 948 bezeichnet ist. Dieser erstreckt sich von der unteren Hälfte des im allgemeinen zylindrischen Kopfabschnitts bis zum dünneren, oberen Ende des im allgemeinen konischen Kopfabschnitts und ist beispielsweise derart mit einem Scheibenfräser eingefräst, dass sein Grund am unteren Ende in die zylindrische Aussen- und/oder Mantelfläche des zylindrischen Kopfabschnitts ausläuft.

Die zur Vorrichtung 901 gehörende Kappe 961 ist teilweise ähnlich wie die in Fig. 21 gezeichnete Kappe 661 ausgebildet und hat wie diese eine im allgemeinen konische, in Fig. 23 mit 965 bezeichnete Innenfläche. Die in Fig. 23 ersichtliche Kappe 961 ist jedoch für die Multi- oder Einzelpositionierung ausgebildet und hat Positionierungsvorsprünge, von denen einer ersichtlich sowie mit 976 bezeichnet ist und in den Positionierungszwischenraum 948 hineinragt.

Die axiale Abmessung jedes Positionierungsvorsprungs ist wesentlich kleiner als die gesamte axiale Abmessung des zylindrischen und des konischen Kopfabschnitts und beträgt vorzugsweise höchstens 30% der gesamten axialen Abmessung dieser beiden Kopfabschnitte sowie selbstverständlich auch des ganzen Kopfs. Die Positionierungsvorsprünge stehen daher in Abstand vom unteren Ende des zylindrischen Kopfabschnitts und vom oberen Ende des konischen Kopfabschnitts 17 und befinden sich ungefähr in der Höhe, in der die beiden Kopfabschnitte miteinander verbunden sind. Zwischen dem Scheitel des Vorsprungs 976 und dem Grund diesen enthaltenden Positionierungszwischenraums 948 ist ein freier Spalt oder Zwischenraum vorhanden, dessen radiale Abmessung bei der tiefsten Stelle des Zwischenraums beispielsweise mindestens gleich der halben Tiefe des Zwischenraums 948 ist. Die Seitenflächen des Positionierungsvorsprungs sind höchstens durch sehr schmale Spalte von den Seitenflächen des Zwischenraums getrennt. Die Positionierungsvorsprünge haben also in den Zwischenräumen 948 entlang einem zur Achse des Supports konzentrischen Kreis und tangential zu diesem nur ein sehr kleines Spiel. Ferner ist zwischen dem konischen Abschnitt der Umfangsfläche der Kopfpartie und der konischen Innenfläche 965 der Kappe nur ein sehr kleines Spiel vorhanden. Die Kappe wird daher durch die konische Innenfläche 965 und die Seitenflächen der Vorsprünge 976 seitlich - d.h. gegen ungefähr quer zur Achse gerichtete Kräfte - gut abgestützt, obschon zwischen den Scheiteln der Vorsprünge 976 und den Gründen der Zwischenräume 948 ein relativ grosser Spalt vorhanden ist.

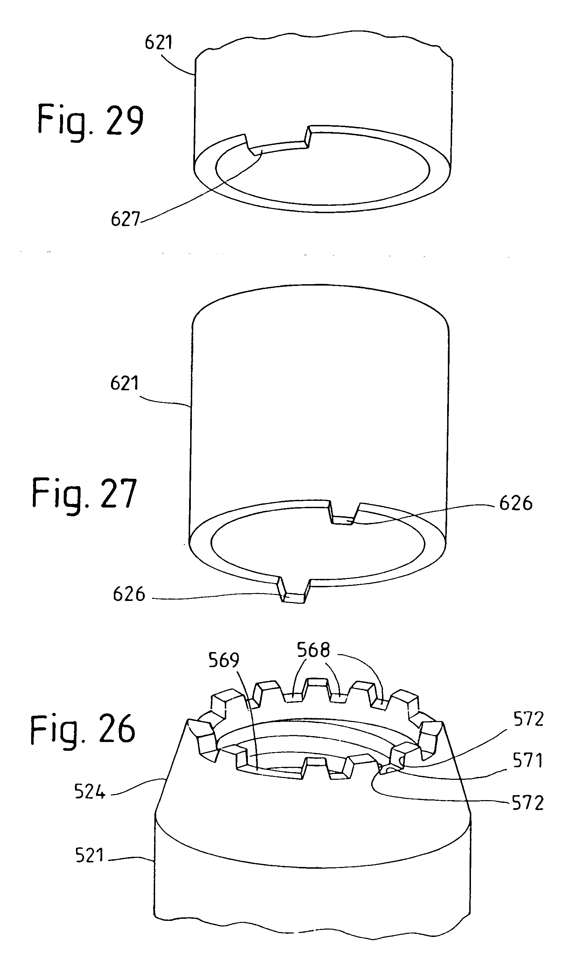

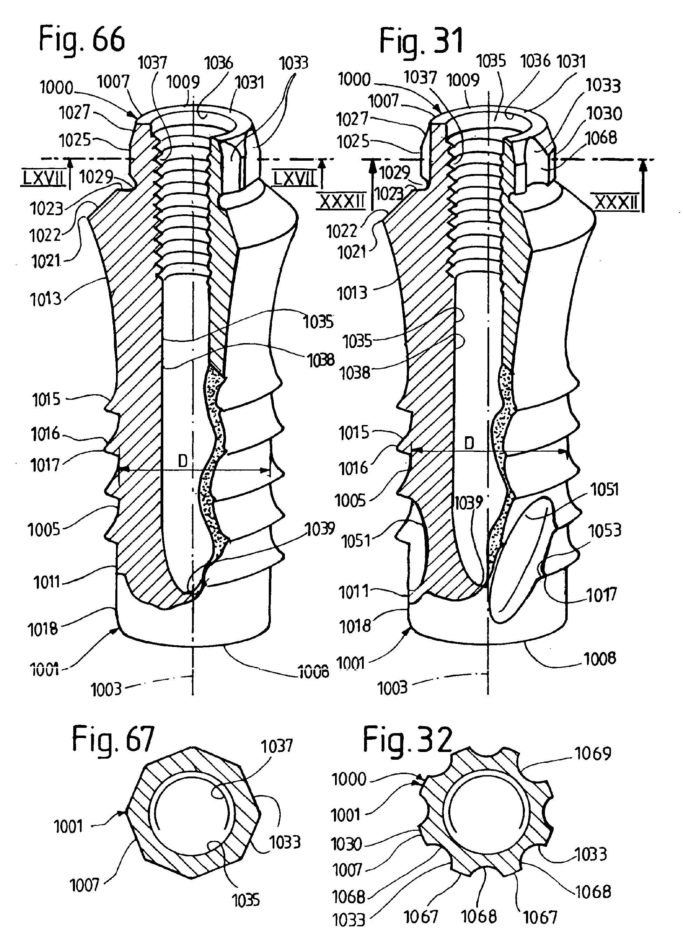

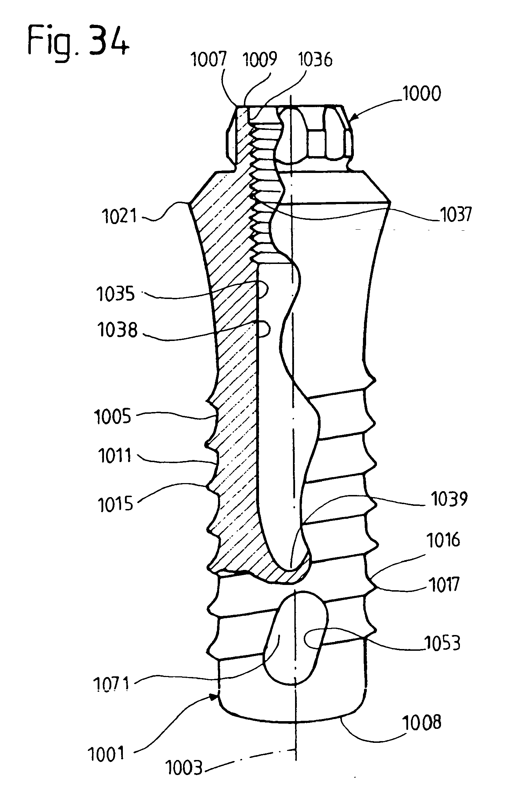

Die zum Teil in den Figuren 24, 25, 26, 27, 28 dargestellte Vorrichtung besitzt einen Support der dem in den Figuren 18 bis 21 gezeichneten Support ähnlich und wie dieser mit 521 bezeichnet ist. Der in den Figuren 24 bis 26 ersichtliche Support 521 besitzt insbesondere an der Stirnseite der Kopfpartie 524 angeordnete erste Positionierungszwischenräume 568 und einen zweiten Positionierungszwischenraum 569. Bei der in den Figuren 24 bis 26 gezeichneten Kopfpartie 524 ist jedoch jeder Zwischenraum 568, 569 in einer seitlichen Ansicht und in einem senkrecht zu seiner radialen Längsrichtung verlaufenden Querschnitt trapezförmig und hat eine ebene, zur Achse rechtwinklige Grundfläche 571 und zwei ebene Seitenflächen 572. Die beiden letzteren sind von der Grundfläche 571 weg nach oben voneinander weggeneigt, so dass sich die Zwischenräume in von der Grundfläche weg verlaufenden Richtung erweitern. Die in den Figuren 24, 25 ersichtliche Kappe 601 ist teilweise ähnlich ausgebildet wie die mit der gleichen Nummer bezeichnete, in den Figuren 18 und 20 ersichtliche Kappe, besteht jedoch ursprünglich aus zwei separaten Teilen, nämlich einem metallischen, hülsenförmigen Hauptkörper 611 und einer Positionierungshülse 621. Der Hauptkörper 611 hat ein axial durchgehendes Loch und unter anderem eine konische Innenfläche 613 sowie oberhalb dieser einen zylindrischen Lochabschnitt 614. Die Positionierungshülse 621 ist im wesentlichen zylindrisch und im Hauptkörper 611 befestigt, nämlich in den zylindrischen Lochabschnitt 614 eingepresst und/oder eingeklebt. Die Positionierungshülse hat ferner einen unten aus dem zylindrischen Lochabschnitt 614 herausragenden Abschnitt mit mindestens einem axial nach unten vorstehenden Positionierungsvorsprung 626 wobei zum Beispiel gemäss der Fig. 27 zwei oder mehr gleich ausgebildete Positionierungsvorsprünge 626 vorhanden sind. Jeder von diesen ist in radialer Blickrichtung trapezförmig und hat eine ebene, zur Achse rechtwinklige Stirnfläche sowie zwei ebene, von dieser weg voneinander weg geneigte Seitenflächen. Jeder Vorsprung 626 ist so bemessen, dass er bei zusammengebauter Vorrichtung gemäss der Fig. 29 mit sehr kleinem seitlichem Spiel in einen ersten Zwischenraum 568 des Supports 521 hineinragt. Die Positionierungshülse 621 ermöglicht eine Multipositionierung der Kappe bezüglich des Supports.

Die in der Fig. 27 gezeichnete Positionierungshülse 621 kann durch die teilweise in Fig. 29 gezeichnete Positionierungshülse 621 ersetzt werden. Diese besitzt einen Positionierungsvorsprung 627, der in den zweiten Positionierungszwischenraum 569 des in Fig. 26 ersichtlichen Supports 521 hineinpasst. Im übrigen könnte die in Fig. 29 gezeichnete Positionierungshülse zusätzliche, nicht gezeichnete, in die ersten Zwischenräume 568 des Supports hineinpassende Vorsprünge aufweisen.

Die teilweise in der Fig. 30 ersichtliche Vorrichtung besitzt einen Support 521, der gleich wie der in den Figuren 24, 25, 26, 28 gezeichnete Support ausgebildet ist und an der Stirnseite der Kopfpartie unter anderem erste Positionierungszwischenräume 568 besitzt. Die in Fig. 30 teilweise ersichtliche Positionierungshülse besitzt mindestens zwei Positionierungsvorsprünge 636. Jeder von diesen hat eine zur Achse rechtwinklige Stirnfläche, zwei zur Achse parallele Seitenflächen und bei der Verbindung der Stirnfläche mit den Seitenflächen Kanten 637. Mindestens einer der Vorsprünge 636 ragt bei zusammengebauter Vorrichtung in einen ersten Zwischenraum 568 des Supports 521 hinein. Die beiden Kanten 637 liegen dann mit höchstens sehr kleinem Spiel an den Seitenflächen des Zwischenraums an.

Die anhand der Figuren 23 bis 30 beschriebenen Vorrichtungen sind insbesondere für Anwendungen vorteilhaft, bei denen ein die Kappe aufweisendes Aufbauelement oder Abformelement schräg zur Achse des Supports von diesem wegziehbar oder auf diesen aufsteckbar sein soll. Dies kann zum Beispiel bei zwei zu einer Brücke oder dergleichen gehörenden Kappen der Fall sein, die gleichzeitig auf zwei Implantate mit stark divergierenden oder konvergierenden Achsen aufgesteckt werden müssen.

Zu den nachfolgend beschriebenen Ausführungsbeispielen wird darauf hingewiesen, dass einander entsprechende, identische oder ähnliche Teile der verschiedenen Ausführungsbeispiele jeweils mit der gleichen Bezugsnummer bezeichnet werden.

Der in den Figuren 31, 32, 33 ersichtliche Support 1000 besteht vollständig aus einem einstückigen, metallischen Implantat 1001, hat eine Achse 1003 und ist im wesentlichen rotationssymmetrisch zu dieser. Das Implantat 1001 hat unten eine Verankerungspartie 1005 und oben einen Kopf 1007, der die Kopfpartie des Supports bildet. Die einander abgewandten, freien Enden der Verankerungspartie und des Kopfs bilden das erste Ende 1008 bzw. das zweite Ende 1009 des Implantats 1001. Das sich unten am Implantat befindende, erste Ende 1008 hat eine im Axialschnitt leicht konvex gebogene Endfläche. Die Verankerungspartie 1005 hat von unten nach oben einen im allgemeinen zylindrischen Abschnitt 1011 und einen sich von diesem weg erweiternden, trompetenförmigen Abschnitt 1013, dessen Aussenfläche stetig und glatt an die Aussenfläche des im allgemeinen zylindrischen Abschnitts 1011 anschliesst. Der im allgemeinen zylindrische Abschnitt 1011 ist mit einem eingängigen, rechtsgängigen Aussengewinde 1015 versehen. Dieses hat ein mehr oder weniger sägezahnförmiges Profil und besitzt eine schraubenlinienförmig verlaufende Rippe 1016 mit einem Scheitel 1017 und zwei im Axialschnitt asymmetrischen Flanken. Die untere, sich näher beim ersten Ende 8 befindende Flanke bildet mit der Achse 1003 beispielsweise einen Winkel von ungefähr 70° bis 75°. Die obere Flanke bildet im Axialschnitt einen kleineren Winkel mit der Achse als die untere Flanke. Zudem wird dieser Winkel mit wachsendem Abstand vom Scheitel kleiner, so dass das obere Ende der oberen Flanke fast parallel zur Achse ist. Die axiale Abmessung der schraubenlinienförmigen Rippe 1016 ist daher - bei der halben Gewindetiefe bzw. der halben Höhe der Rippe gemessen - wesentlich schmäler als die beim gleichen Radius gemessene, axiale Abmessung der zwischen aufeinanderfolgenden Windungen bzw. Umgängen der Rippe 1016 vorhandenen Furche. Der Kerndurchmesser D des Gewindes beträgt vorzugsweise höchstens 4 mm, vorzugsweise mindestens 3 mm und zum Beispiel ungefähr 3,5 mm. Die radiale Gewindetiefe bzw. Höhe der Rippe ist zum Beispiel ungefähr 0,3 mm. Die Steigung des Gewindes beträgt beispielsweise ungefähr 1 mm. Das Aussengewinde 1015 ist als selbstschneidendes Gewinde ausgebildet. Die Verankerungspartie hat zwischen dem ersten Ende 1008 und dem Aussengewinde 1015 einen kurzen, ungefähr 1 bis 2 mm langen, zylindrischen, glatten, d.h. gewindelosen Endabschnitt 1018, der durch einen abgerundeten Übergang stetig mit der konvexen Endfläche am ersten Ende 1008 verbunden ist und dessen Durchmesser ungefähr gleich dem Kerndurchmesser des Aussengewindes ist. Der Durchmesser des oberen Endes des zylindrischen Abschnitts 1011 und der an diesen anschliessenden, unteren Endes des trompetenförmigen Abschnitts 1013 ist gleich dem Kerndurchmesser des Aussengewindes 1015, so dass die Rippe 1016 des Aussengewindes also radial über die an dessen Enden anschliessenden Abschnitte des Implantats hinausragt.

Am oberen, weiteren Ende des trompetenförmigen Abschnitts 1013 ist eine Schulter 1021 mit einer vom ersten Ende weg nach oben gegen innen geneigten, konischen Schulterfläche 1022 vorhanden. Diese bildet mit der Achse 1003 einen Winkel von 40° bis 50° und beispielsweise 45°. An das obere, engere Ende der konischen Schulterfläche 1022 schliesst eine ebene, zur Achse 1003 rechtwinklige Ringfläche 1023 an.

Der Kopf 1007 ragt von der Ringfläche 1023 weg nach oben und hat einen im wesentlichen zur Achse 1003 parallelen Kopfabschnitt 1025 und einen sich von diesem weg nach oben zum freien Ende des Kopfs und damit zum zweiten Ende 1009 des ganzen Implantats hin verjüngenden, im allgemeinen konischen Kopfabschnitt 1027. Der zur Achse parallele Kopfabschnitt 1025 ist durch eine im Axialschnitt konkav gebogene Ringnut 1029 vom oberen Ende der Schulter 1021 abgegrenzt. Der Kopf hat eine Umfangsfläche 1030 und an seinem freien Ende eine das zweite Ende 1009 des Implantats bildende ebene, ringförmige Stirnfläche 31. Die beiden Kopfabschnitte 1005, 1027 sind im allgemeinen rotationssymmetrisch zur Achse 1003 und/oder haben je eine zur Achse rotationssymmetrische, nämlich zylindrische bzw. konische Hüllfläche. Die konische Hüllfläche des im allgemeinen konischen Kopfabschnitts 1027 bildet mit der Achse 1003 einen Winkel, der kleiner als der von der konischen Schulterfläche 1022 mit der Achse 1003 gebildete Winkel und derart auf den Abstand des konischen Kopfabschnitts von der Schulter abgestimmt ist, dass die Verlängerung der vom konischen Kopfabschnitt definierten Konusfläche die Schulter 1021 innerhalb des äusseren Randes der konischen Schulterfläche 1022 kreuzt und nämlich beispielsweise die innere Hälfte der Schulterfläche 1022 oder eventuell die ebene Ringfläche 1023 kreuzt. Der von der konischen Fläche des konischen Kopfabschnitts mit der Achse gebildete Winkel beträgt vorzugsweise 15° bis 25° und zum Beispiel ungefähr 20°. Die axiale Abmessung zw. Höhe des Kopfs 1007 beträgt - von der ebenen Ringfläche 1023 bis zum zweiten Ende 1009 des Implantats gemessen - höchstens 2 mm, vorzugsweise 1,2 mm bis 1,8 mm und zum Beispiel ungefähr 1,5 mm. Die axialen Abmessungen des achsparallelen Kopfabschnitts 1025 und der Ringnut 1029 betragen zusammen beispielsweise ungefähr 1 mm. Die axiale Abmessung des im allgemeinen konischen Kopfabschnitts 1027 beträgt zum Beispiel ungefähr 0,5 mm.

Das Implantat 1001 ist mit einem zur Achse 1003 koaxialen Sackloch 1035 versehen. Dieses besitzt eine sich beim zweiten Ende 1009 befindende, von der ringförmigen Stirnfläche 1031 umschlossene, durch einen sehr kurzen, zylindrischen Lochabschnitt gebildete Mündung 1036 und von dieser weg nach unten der Reihe nach ein beispielsweise metrisches Innengewinde 1037, einen zylindrischen, glatten, d. h. gewindelosen Lochabschnitt 1038 und einen Grund 1039. Das untere, weiter von der Mündung entfernte Ende des Innengewindes 1037 befindet sich innerhalb des sich erweiternden, trompetenförmigen Abschnitts 1013 des Implantats. Der Durchmesser des zylindrischen Lochabschnitts 1038 ist ungefähr gleich dem Kerndurchmesser des Innengewindes. Der Grund 1039 befindet sich innerhalb der unteren Hälfte des im allgemeinen zylindrischen Abschnitts 11 der Verankerungspartie 1005 beispielsweise ungefähr beim unteren Ende des Aussengewindes, verjüngt sich zu seiner tiefsten Stelle hin und ist durch eine im Axialschnitt gebogene Fläche begrenzt, die stetig und glatt mit der Fläche des zylindrischen Lochabschnitts zusammenhängt. Diese Ausbildung des Grundes 1039 reduziert die Gefahr, dass das Implantat in der Nähe des Grundes 1039 bricht.

Die Verankerungspartie 1005 ist mit mindestens einer länglichen Nut 1051 und nämlich mit drei um die Achse 1003 herum verteilten Nuten 1051 versehen ist. Jede Nut 1051 ist länglich und in einer zur Achse 1003 radialen Ansicht der betreffenden Nut gegen die Achse auf die gleiche Seite geneigt wie die Rippe des rechtsgängigen Gewindes, d. h. nach rechts oben. Die in der Längsrichtung einer Nut verlaufenden Mittellinie und die zu dieser parallelen Seitenflächenabschnitte der Nut bilden in der genannten Ansicht mit einer zur Achse 1003 rechtwinkligen Ebene einen spitzen Winkel, der grösser ist als der von der Rippe 1017 mit einer solchen Ebene gebildete Winkel, d. h. als der Steigungswinkel des Gewindes. Die Nuten 1051 befinden sich im Bereich des sich näher beim ersten Ende 1008 des Implantats befindenden Endabschnitt des Aussengewindes 1015, stehen aber in Abstand vom ersten Ende 1008. Jede Nut 1051 kreuzt mindestens eine Windung der Rippe 1017 oder begrenzt den Anfang einer Rippe und bildet bei mindestens einer Windung der Rippe 1016 eine Spanfläche 1053, die im Querschnitt mit einem durch die Achse 1003 und den Scheitel 1017 verlaufenden, zur Achse radialen Geraden einen spitzen Spanwinkel β bildet. Die Spanfläche 1053 bildet ferner beim Scheitel 1017 mit der Achse 1003 in einer zu dieser radialen Ansicht einen spitzen Anschnittwinkel von beispielsweise ungefähr 20°. Die Nuten 1051 bilden Span-Nuten, erstrecken sich jedoch nicht bis zum weiter vom ersten Ende 1008 des Implantats entfernten Ende des Aussengewindes 1015, so dass das letztere zwischen den Nuten 1051 und seinem dem ersten Ende 1008 abgewandten Ende einen Abschnitt hat, der die Achse 1003 unterbruchslos mindestens einmal und beispielsweise mindestens zwei- oder mindestens dreimal vollständig umschliesst. Das in das zweite Ende 1009 des Implantats mündende Sackloch 1035 reicht beispielsweise bis in den die Nuten 1051 aufweisenden Längsbereich der Verankerungspartie 1005. Die Tiefen der Nuten 1051 sind jedoch so bemessen, dass die Nuten nicht bis in das Sackloch 1035 hineinragen. Die Nuten 1051 können beispielsweise mit einem Scheibenfräser mit kleinen Herstellungskosten in die Verankerungspartie eingefräst werden. Der sich im Längsbereich der Nuten 1051 befindende und von diesen gekreuzte, zum Gewindeschneiden dienende Anfangsabschnitt des Aussengewindes 1015 hat vorzugsweise einen maximalen Durchmesser bzw. Aussendurchmesser, der ein wenig, vorzugsweise mindestens 0,01 mm, vorzugsweise höchstens 0,10 mm und zum Beispiel 0,02 mm bis 0,05 mm kleiner ist als der maximale Durchmesser bzw. Aussendurchmesser des sich oberhalb der Nuten 1051 befindenden Abschnitts des Aussengewindes. Dies ergibt den Vorteil, dass der obere Abschnitt des Aussengewindes beim Eindrehen des Implantats in einen Knochen von Anfang an fest und stabil im Knochen verankert wird.

Wenn mit dem selbstschneidenden Aussengewinde 1015 ein Gewinde in einen Knochen geschnitten wird, gewährleisten die Nuten 1051, dass zuerst nur die untere Flanke der Rippe 1017 am Knochen angreift und daher nur ein relativ kleines Drehmoment zum Schneiden des Gewindes benötigt wird. Die beim Schneiden des Gewindes entstehenden Späne aus Knochenmaterial können sich in den Nuten 1051 ansammeln und dann wieder mit dem die Verankerungspartie umgebenden Knochen zusammenwachsen. Dies verbessert die Stabilität der Verbindung des Implantats mit dem Knochen.

Die Umfangsfläche 1030 des Kopf 1007 weist um die Achse 1003 herum verteilte, axiale Positionierungsvorsprünge 1065 und zwischen diesen angeordnete, axiale Positionierungszwischenräume, nämlich mehrere gleich ausgebildete Positionierungszwischenräume 1068 und einen breiteren sowie tieferen Positionierungszwischenraum 1069 auf. Die axialen Positionierungszwischenräume 1068, 1069 sind nutförmig, werden in folgenden auch als Positionierungsnuten 1068 bzw. 1069 bezeichnet und bilden zur Achse 1003 nichtrotationsymmetrische, konkav gebogene Positonierungsflächen 1033, nämlich mehrere identische, von den ersten Nuten 1068 gebildete, erste Positionierungsflächen und eine breitere sowie tiefere, zweite Positionierungsfläche. Die zweite Positionierungsfläche hat beispielsweise ein sich näher bei der Achse 1003 befindendes Kreiszentrum und/oder einen grösseren Krümmungsradius als die ersten Positionierungsflächen.

Die Zwischenräume 1068, 1069 und die von diesen gebildeten Positionierungsflächen 1033 - oder mindestens die im Querschnitt tiefsten Bereiche von diesen - erstrecken sich wiederum über die ganze Länge des zur Achse 1003 parallelen Kopfabschnitts 1025 und mindestens annähernd sowie beispielsweise genau bis zum dünneren Ende des konischen Kopfabschnitts 1027 und also auch bis zum zweiten Ende 1009 des ganzen Implantats. Der sich im Bereich des achsparallelen Kopfabschnitts 1025 befindende Abschnitt jeder Positionierungsfläche 1033 bildet im Querschnitt einen Kreisbogen, der höchstens einen Halbkreis bildet und nämlich kleiner als ein Halbkreis ist. Die sich zwischen zwei ersten Zwischenräumen oder Nuten 1068 befindenden Vorsprünge 1067 haben alle gleiche Formen und Abmessungen. Die beiden an den Zwischenraum 1069 bzw. an die zweite Nut angrenzende Vorsprünge sind etwas schmäler als die übrigen Vorsprünge 1067. Die sich im Bereich des im allgemeinen konischen Kopfabschnitts 1027 befindenden Abschnitte der Positionierungsflächen 1033 bilden dann kleinere Kreisbogen und laufen zum Beispiel beim dünneren Ende des konischen Abschnitts in die ringförmige Stirnfläche 1031 aus. Die zwischen den Positionierungsnuten vorhandenen Vorsprünge 1067 haben aussen Umfangslächenabschnitte, die Teile einer Zylinder- bzw. Konusfläche bilden. Es sind zum Beispiel acht Positionierungsnuten 1068, 1069 vorhanden, die zusammen eine 8er-Kreisteilung definieren, wobei aber auch mehr als acht, beispielsweise zwölf oder noch mehr Positionierungsnuten vorhanden sein könnten.

Das Implantat 1001 besteht beispielsweise aus Titan. Die Aussenfläche der Verankerungspartie 1005 ist beispielsweise vom ersten Ende 1008 bis in die Nähe der Schulter 1021 - d.h. bis ungefähr 1 mm bis 3 mm unterhalb des oberen, weiteren Endes des trompetenförmigen Abschnitts 1013 - rauh und porös, beispielsweise durch Bestrahlen mit festem Partikeln, wie Keramik- oder Sandpartikeln, oder durch Ätzen aufgerauht oder mit einem porösen Überzug aus aufgesprühtem Titan versehen. Dagegen sind der oberste Bereich des trompetenförmigen Abschnitts 1013, die konische Schulterfläche 1022, die Ringfläche 1023 und die verschiedenen Flächen des Kopfs 1007 glatt und porenfrei.

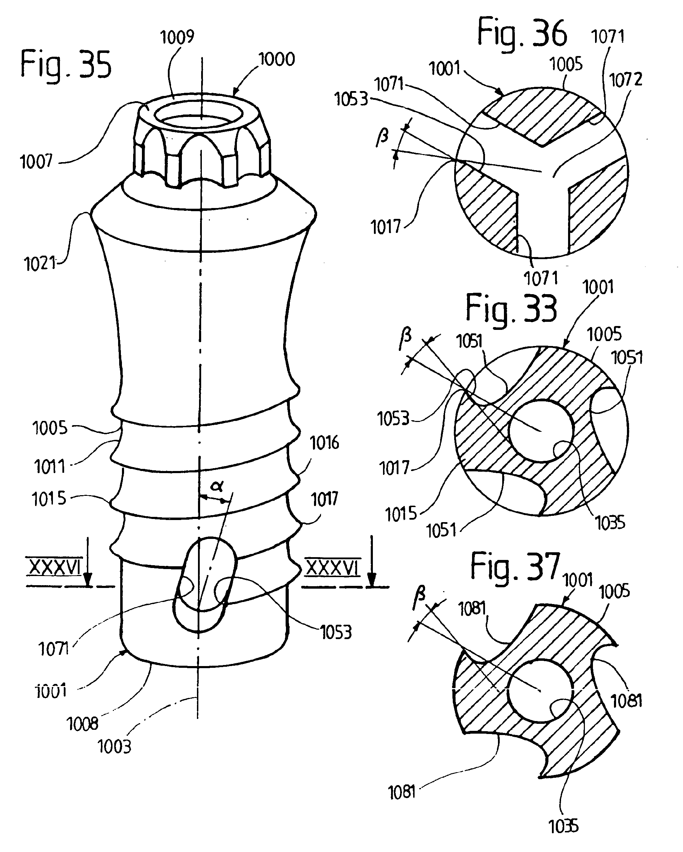

Das in den Figuren 34 bis 36 ersichtliche Implantat 1001 besitzt eine Verankerungspartie 1005 mit einem im allgemeinen zylindrischen Abschnitt 1011. Dieser ist mit einem selbstschneidenden Aussengewinde 1015 und in der Nähe von seinem unteren Ende mit mehreren, beispielsweise drei um die Achse 1003 herum verteilten, länglichen Nuten und/oder länglichen Löchern 1071 versehen. Diese dienen als Span-Nuten und/oder Span-Löcher und sind in radialer Blickrichtung analog wie die Nuten 1051 gegen die Achse 1003 geneigt und bilden mit dieser einen Anschnittwinkel, der in Fig. 35 mit α bezeichnet ist. Die einen Seitenflächen der Nuten und/oder Löcher 1071 bilden ferner Spanflächen 1053. Diese bilden in zur Achse 1003 rechtwinkligen Querschnitten wiederum spitze Spanwinkel β mit zur Achse 1003 radialen Geraden. Die Nuten und/oder Löcher 1071 sind jedoch tiefer als die Nuten 1051 des in den Figuren 3 bis 5 dargestellten Implantats, so dass sie einander kreuzen und ihre mittleren Grundabschnitte einander durchdringen. Die Nuten und/oder Löcher 1071 haben also im zentralen Querschnittsbereich der Verankerungspartie 1005 einen gemeinsamen, zentralen Hohlraum und bilden zusammen das Implantat im Querschnitt durchdringende Durchgänge. Die beim Schneiden eines Gewindes in die Nuten und/oder Löcher 1071 hineingelangenden Knochenspäne können dann zusammen mit dem während des Heilungsvorganges nachwachsenden Knochenmaterial die Verankerungspartie vollständig durchdringende Knochenstege bilden. Diese ergeben auch bei verhältnismässig kurzer Verankerungspartie eine sehr stabile und dauerhafte Verankerung des Implantats im Knochen. Der zylindrische Lochabschnitt 1038 des beim Kopf 1007 in das zweite Ende 1009 des Implantats 1001 mündenden Sacklochs 1035 ist beim Implantat gemäss den Figuren 34 bis 36 kürzer als beim Implantat gemäss den Figuren 31 bis 33, so dass sich der Grund 1039 des Sacklochs 1035 oberhalb der Nuten und/oder Löcher 1071 befindet. Der Kopf 1007 und die Schulter 1021 des in den Figuren 34 bis 36 dargestellten Implantats sind gleich ausgebildet wie beim Implantat gemäss den Figuren 31 bis 34.

Beim in Fig. 37 ersichtlichen Implantat 1001 reicht das Sackloch 1035 ähnlich wie beim Implantat gemäss den Figuren 31 bis 33 bis in den die Nuten 1081 - nämlich Span-Nuten - aufweisenden Längsabschnitt der Verankerungspartie 1005. Die Nuten 1081 erstrecken sich jedoch bis zum unteren, ersten Ende des in Fig. 37 gezeichneten Implantats.

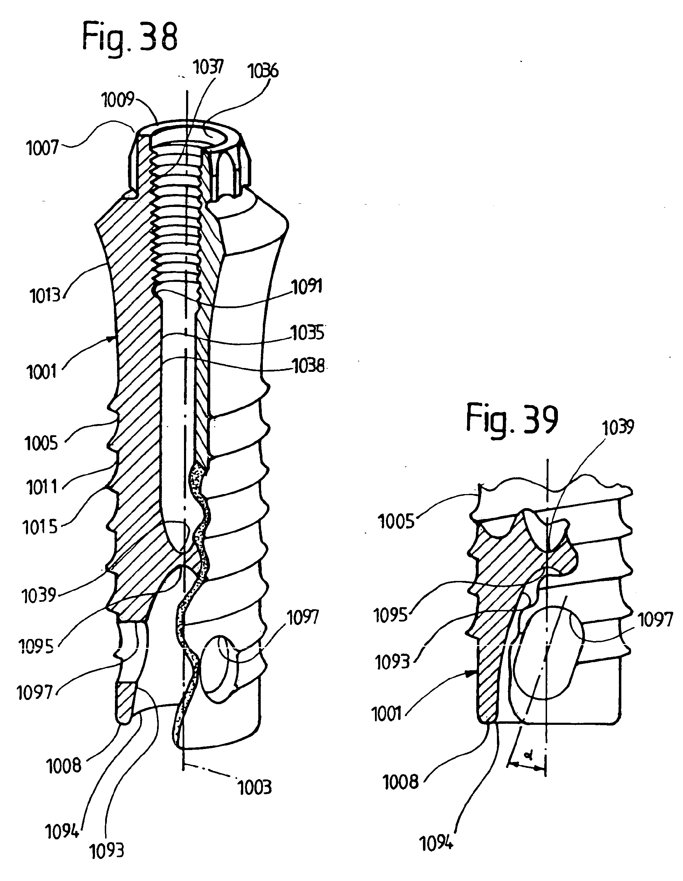

Das in den Figuren 38 und 39 ersichtliche Implantat 1001 hat wiederum von der Verankerungspartie 1005 gebildetes, erstes Ende 1008 und ein vom Kopf 1007 gebildetes, zweites Endes 1009. Der im allgemeinen zylindrische Abschnitt 1011 der Verankerungspartie 1005 ist mit einem Aussengewinde 1015 versehen. Das Sackloch 1035 des Implantats hat wiederum eine sich am zweiten Ende 1009 des Implantats befindende Mündung 1036, ein Innengewinde 1037, einen zylindrischen Lochabschnitt 1038 und einen Grund 1039, der sich oberhalb des unteren Endes des Aussengewindes 1015 befindet. Das Sackloch 1035 hat ferner eventuell beim unteren, inneren Ende des Innengewindes 1037 eine ringförmige Rille 1091, die im Axialschnitt zum grössten Teil gebogen ist, einen Übergang zwischen dem Innengewinde 1037 sowie dem zylindrischen Lochabschnitt 1038 bildet und deren Flächen mindestens annähernd stetig in diejenige des zylindrischen Lochabschnitts 1038 übergeht. Das in den Figuren 38 und 39 gezeichnete Implantat hat ferner ein unteres, kurzes, zur Achse 1003 koaxiales Sackloch 1093 mit einer sich am ersten Ende 1008 des Implantats befindenden Mündung 1094 und einem Grund 1095, der sich innerhalb der unteren Hälfte der Verankerungspartie 1005 in kleinem Abstand vom Grund 1039 des oberen Sacklochs 1035 befindet. Das untere Sackloch 1093 verjüngt sich von der Mündung 1094 zum Grund 1095 hin im wesentlichen über seine ganze Länge und ist durch eine Fläche begrenzt, die beim Grund und beispielsweise mindestens annähernd über die ganze Länge des Sacklochs im Axialschnitt konkav gebogen, glatt sowie stetig und beispielsweise ungefähr parabelförmig ist. Die Verankerungspartie 1005 ist zudem beim unteren Ende des Aussengewindes 15 mit länglichen Löchern 1097 versehen, die in das Sackloch 1093 münden, und eine in die Längsrichtung verlaufende Mittellinie sowie zu dieser parallele Seitenflächen haben, die in radialer Blickrichtung mit der Achse 1003 einen spitzen Anschnittwinkel α bilden. Das Implantat gemäss den Figuren 38, 39 ist insbesondere für Verwendungen besonders vorteilhaft, bei denen das Implantat nur relativ wenig in den Knochen hineinragen darf und die Länge des im allgemeinen zylindrischen Abschnitts 1011 nur etwa 6 bis 8 mm betragen kann.

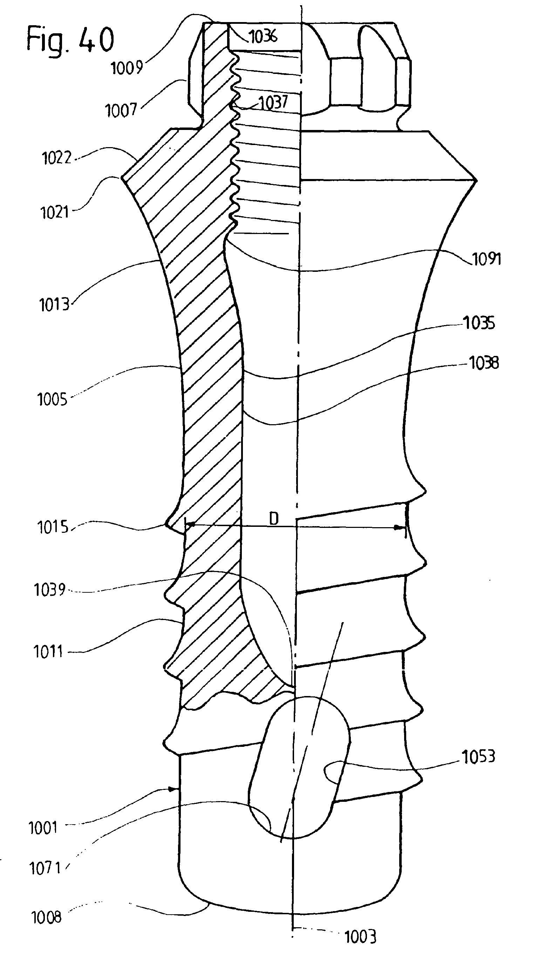

Das in Fig. 40 ersichtliche Implantat 1001 hat eine Verankerungspartie 1005, deren im allgemeinen zylindrischer Abschnitt 1011 wiederum mit einem Aussengewinde 1015 versehen ist. Dessen Kerndurchmesser D ist kleiner als bei den in den Figuren 31 bis 39 gezeichneten Implantaten und beträgt vorzugsweise höchstens 3 mm, vorzugsweise mindestens 2,5 mm und zum Beispiel ungefähr 2,8 mm. Die maximalen Durchmesser des Kopfes 1007 und der Schulter 1021 sind dagegen beispielsweise ungefähr gleich gross wie bei den in den Figuren 31 bis 39 dargestellten Implantaten. Das Sackloch 1035 hat wiederum eine sich beim zweiten Ende 1009 des Implantats befindende Mündung 1036, ein Innengewinde 1037, einen zylindrischen Lochabschnitt 1038 sowie einen Grund 1039. Das Innengewinde 1037 ist beispielsweise als Rundgewinde oder Whitworth-Gewinde ausgebildet. Das weiter von der Mündung entfernte, innere Ende des Innengewindes 1037 befindet sich wiederum innerhalb des sich erweiternden, trompetenförmigen Abschnitts 1013 des Implantats. Der Durchmesser des zylindrischen Lochabschnitts 1038 ist höchstens gleich dem Kerndurchmesser des Innengewindes und beispielsweise ein wenig kleiner als der Kerndurchmesser. Das Sackloch 1035 hat zwischen dem weiter von der Mündung 1036 entfernten, inneren Ende des Innengewindes 1037 und dem zylindrischen Abschnitt 1038 eine ringförmige Rille 1091, die einen Übergang zwischen dem Innengewinde 1037 und dem zylindrischen Lochabschnitt 1038 bildet. Der maximale Durchmesser der Rille 1091 ist mindestens gleich dem maximalen Durchmesser oder Nenndurchmesser des Innengewindes 1037 und beispielsweise ein wenig grösser als dieser maximale Gewindedurchmesser. Der unmittelbar an das Innengewinde anschliessende Abschnitt der Rille 1091 ist im Axialschnitt konkav gebogen. An diesem schliesst ein ungefähr konischer und/oder im Axialschnitt leicht konvex gebogener Abschnitt an, der im Axialschnitt ungefähr parallel zu dem ihm im Querschnitt umschliessenden Abschnitt der Aussenfläche des trompetenförmigen Abschnitts 13 des Implantats ist und die tiefste, den grössten Durchmesser aufweisende Stelle der Rille mindestens annähernd stetig und glatt mit dem zylindrischen Lochabschnitt 1038 verbindet. Die das Sackloch 1035 umschliessende Wand des Implantats hat dann zwischen der tiefsten, den grössten Durchmesser aufweisenden Stelle der Rille 1091 und dem zylindrischen Lochabschnitt 1038 ungefähr die gleiche Dicke wie am unteren, dünneren Ende des trompetenförmigen Abschnitts 1013 sowie beim Kerndurchmesser des Aussengewindes 1015. Der Grund 1039 des Sacklochs 1035 ist wie bei den vorher beschriebenen Ausführungsbeispielen durch eine im Axialschnitt konkav gebogene Fläche gebildet, die im Axialschnitt mindestens annähernd stetig und glatt an die Fläche des zylindrischen Lochabschnitts 1038 anschliesst. Durch diese Ausbildungen des Innengewindes 1037, der Rille 1091 und des Grundes 1039 kann trotz des kleinen Kerndurchmessers D des Aussengewindes 1015 weitgehend verhindert werden, dass das Implantat bei starken Belastungen bricht. Der zylindrische Abschnitt 1011 des Implantats ist in der Nähe des unteren, ersten Endes 1008 mit länglichen, geneigten, Spanflächen 1053 bildenden Nuten und/oder Löchern 1071 versehen, wobei wegen des kleineren Kerndurchmessers eventuell nur zwei solche Nuten und/oder Löcher vorhanden sind.

Im übrigen kann das Innengewinde 1037 auch bei den vorher beschriebenen Implantat-Typen, bei denen der Kerndurchmesser des Aussengewindes ungefähr 3,5 mm beträgt, zur Erzielung einer möglichst einheitlichen Ausbildung als Rund- oder Whitworth-Gewinde ausgebildet werden.

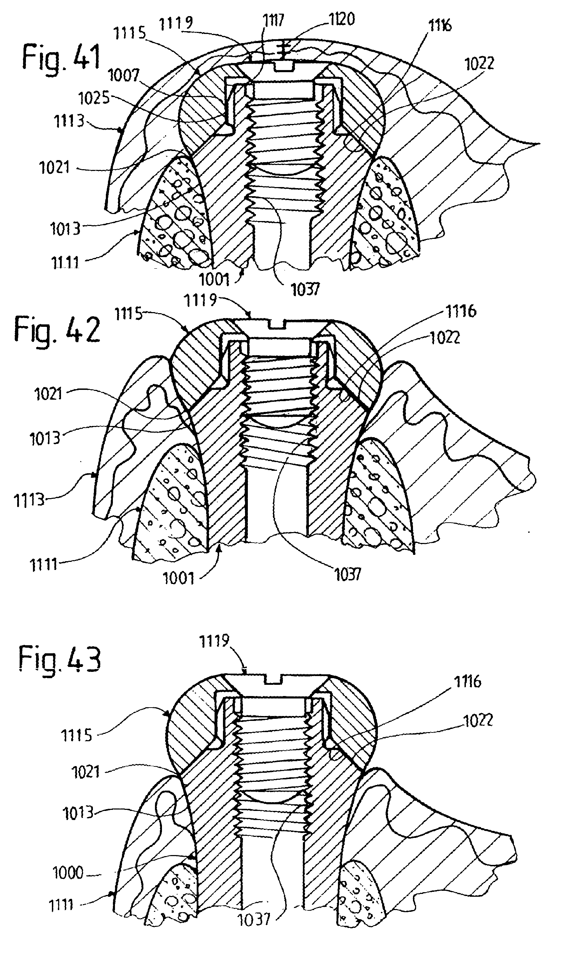

Die Figuren 41, 42, 43 zeigen einen Knochen 1111 des Kiefers und die Gingiva 1113 von Patienten sowie unterschiedlich tief in die Knochen eingesetzte Implantate 1001, an denen kappenförmiges Einteilelement 1115 bzw. eine Einheilkappe 115 befestigt ist. Die Einheilkappe 1115 hat eine konische Auflagefläche 1116, die spaltfrei auf der konischen Schulterfläche 1022 des Implantats 1001 aufliegt. Der Innenraum der Einheilkappe 1115 hat einen zylindrischen Abschnitt, der mit kleinem radialem Spiel vom achsparallelen Kopfabschnitt 1025 des Kopfs 1007 geführt wird. Die Aussenfläche der Einheilkappe ist gewölbt, im Axialschnitt stetig gebogen und schliesst beim Aussenrand der konischen Schulterfläche 1022 im wesentlichen fugenlos, glatt und stetig an die Aussenfläche des trompetenförmigen Abschnitts 1013 des Implantats an. Die Einheilkappe ist mit einer Schraube 1119 lösbar am Implantat 1001 befestigt. Die Schraube 1119 hat einen im Deckabschnitt der Einheilkappe versenkten, mit der Deckfläche der Einheilkappe bündigen Kopf und ein in das Innengewinde 1037 des Implantats eingeschraubtes Gewinde.

Das in Fig. 41 dargestellte Implantat 1001 ist subgingival in den Mund des Patienten eingesetzt. Die vom oberen Ende des trompetenförmigen Abschnitts 1013 und vom Aussenrand der konischen Schulterfläche 1022 gebildeten Kante befindet sich dann ungefähr in der Höhe des Knochenkamms. Die Gingiva 1113 - d. h. das weiche Gewebe - wird nach dem Befestigen der Einheilkappe 115 am Implantat 1001 über der Einheilkappe zusammengefügt und mit einer Naht 1120 verschlossen. Nach einer Einheilphase von 3 bis 4 Monaten wird die Gingiva wieder aufgeschnitten und ein ein- oder mehrteiliges Aufbauelement am Implantat befestigt. Beim subgingivalen Einsetzen des Implantats wird als die Operation in zwei Phasen durchgeführt, wobei in der ersten Phase das Implantat eingesetzt und in der zweiten Phase nochmals die Gingiva aufgeschnitten und das Aufbauelement befestigt werden.

Das in Fig. 42 gezeichnete Implantat 1001 ist bezüglich der Gingiva halb-versenkt ("semi-submerged"). Der Aussenrand der konischen Schulterfläche 1022 befindet sich in diesem Fall zwischen dem Knochenkamm und der höchsten Stelle der Gingiva. Die Kappe ist dann ungefähr bündig mit der Gingiva oder ragt zum Teil ein wenig aus dieser heraus. Diese Anordnung des Implantats wird vor allem für die Bildung von künstlichen Einzelzähnen und von Brücken verwendet. Die als Aufbauelement dienende Krone oder Brücke liegt dann ein wenig - beispiels-weise 1 bis 2 mm - unter der Gingiva-Oberfläche auf der Schulterfläche 1022 auf, so dass die Verbindung nicht sichtbar ist und nicht unästhetisch wirkt.

Das in Fig. 43 ersichtliche Implantat ist transgingival eingesetzt. Der Aussenrand der konischen Schulterfläche 1022 befindet sich ungefähr bei der höchsten Stelle der Gingiva 1113. Die Operation kann dann ein-phasig durchgeführt werden, d. h. die Gingiva muss nur einmal aufgeschnitten werden. Die transgingivale Anordnung wird beispielsweise zum Befestigen von Stegkonstruktionen und in Fällen verwendet, in denen die Ästhetik weniger wichtig ist.

Man kann also identisch ausgebildete Implantate wahlweise subgingival, "semi-submerged" oder transgingival einsetzen. Dies ist ein wesentlicher Vorteil für Zahnärzte und Zahnkliniken.

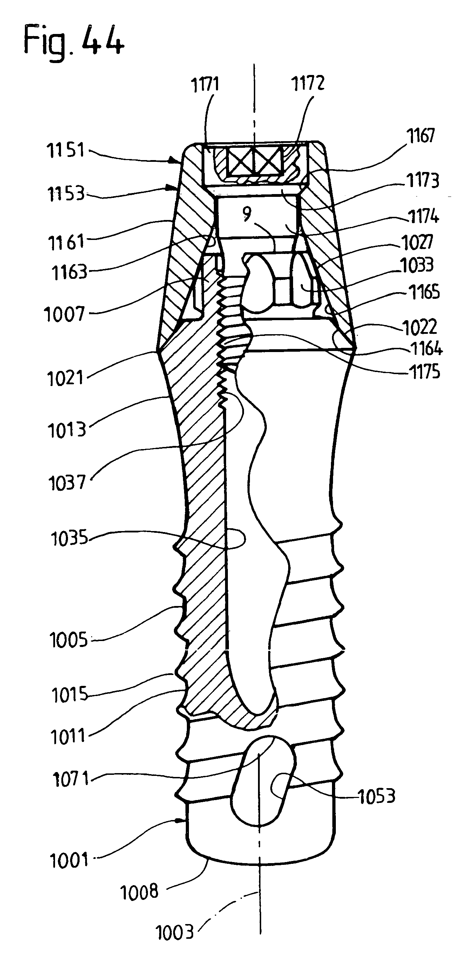

Die in Fig. 44 dargestellte Vorrichtung 1151 besitzt ein Implantat 1001, dessen Verankerungspartie 1005 beispielsweise in den interforaminalen Bereich eines nicht gezeichneten Unterkiefer-Knochens eingesetzt ist. Der Kopf 1007 des Implantats 1001 besitzt beispielsweise durch Nuten gebildete Positionierungsflächen. Die Vorrichtung 1151 weist ein Aufbauelement 1153 mit einer am Implantat 1001 befestigten, zur Achse 1003 rotationssymmetrischen Kappe 1161 und beispielsweise noch einem nicht sichtbaren Steg sowie eine andere; auch nicht sichtbare Kappe auf, die an einem anderen Implantat befestigt ist. Die Kappe 1161 besteht aus einem metallischen Material, zum Beispiel einer Goldlegierung oder Titan und hat einen Innenraum 1163, der von einem zur Achse 1003 koaxialen, durchgehenden Loch gebildet ist und zuunterst eine konische Auflagefläche 1164 aufweist. An diese schliesst eine ebenfalls konische, aber steilere Innenfläche 1165 an, die mit der Achse 1003 den gleichen Winkel bildet wie der konische Kopfabschnitt 1027 des Implantats 1001. Der Innenraum 1163 hat oberhalb der konischen Fläche 1165 eine Verengung und auf der oberen Seite von dieser eine konische Auflagefläche 1167. Die Kappe 1161 ist am Implantat mit einer Okklusalschraube 1171 befestigt, deren zylindrischer Kopf 1172 ein Mehrkantloch aufweist und in der Kappe versenkt ist. An den Kopf 1172 schliesst ein konischer Abschnitt 1173 an, der auf der Auflagefläche 1167 aufliegt und durch einen zylindrischen Schaftabschnitt 1174 mit dem Gewindeteil 1175 verbunden ist. Dessen Gewinde ist in das Innengewinde 1037 des Implantats eingeschraubt. Die Schraube drückt die Kappe gegen das Implantat, so dass die Kappe mit ihrer Auflagefläche 1164 mindestens auf dem äusseren Bereich der Schulterfläche 1022 des Implantats fest und spaltfrei aufliegt, während zwischen dem konischen Flächenabschnitten des Kopfabschnitts 1027 des Implantats und der konischen Innenfläche 1165 der Kappe ein sehr schmaler Spalt vorhanden ist, dessen Breite höchstens 0,02 mm oder besser nur höchstens 0,01 mm beträgt und beispielsweise im Mikrometer-Bereich liegt. Die Kappe wird dann vom konischen Abschnitt 1027 des Implantats ebenfalls noch geführt, zentriert und bei der Einwirkung von seitlichen, ungefähr quer zur Achse 1003 gerichteten Kräften abgestützt. Die Kappe 1161 ist für die Freipositionierung ausgebildet und besitzt also keine an den durch Positionierungsnuten gebildeten Positionierungsflächen 1033 des Implantats 1001 angreifenden Flächen. Die Kappe hat eine sich nach oben konisch verjüngende Aussenfläche und am oberen Ende eine ebene Deckfläche. Die Ausbildung des Innenraums 1163 der Kappe 1161 ermöglicht es, diese auch dann leicht, praktisch reibungslos und mit geringer Kraft auf den Kopf 1007 aufzusetzen und wieder von diesem wegzuziehen, wenn die Achsen 1003 von zum Halten des Aufbauelements 1153 dienenden Implantaten nicht parallel zu einander sind und beispielsweise miteinander einen Winkel bis zu 40° bilden.

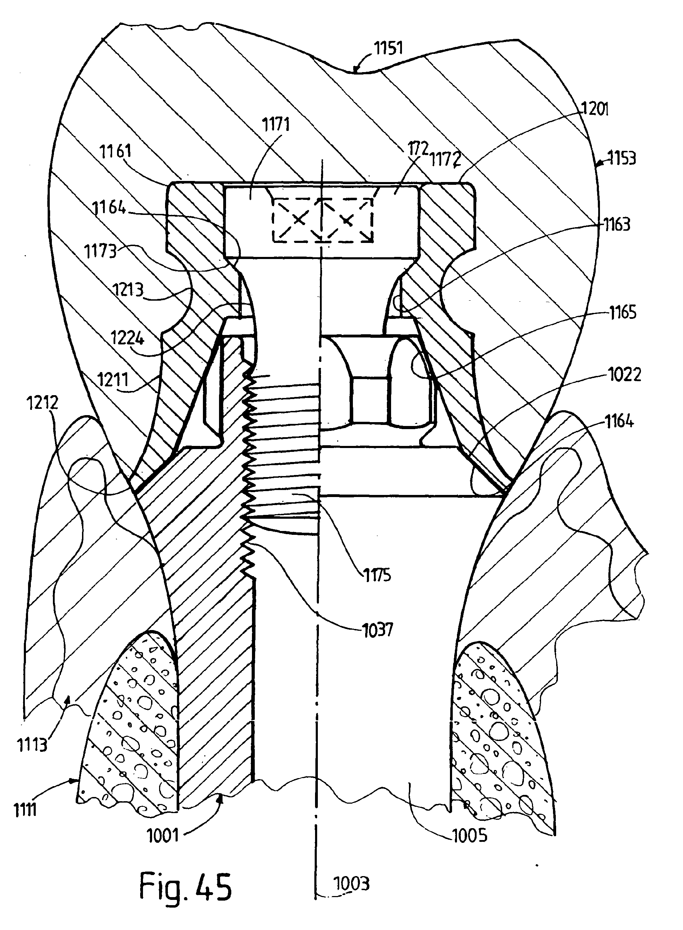

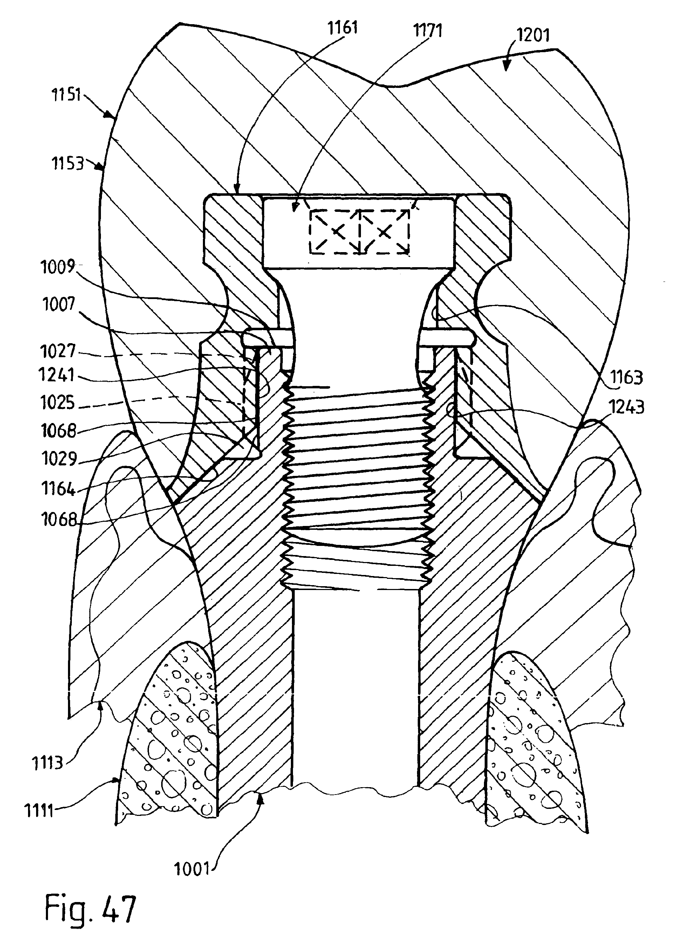

Die Fig. 45 zeigt einen Knochen 1111, eine Gingiva 1113 und eine Vorrichtung 1151, die ein "semi-submerged" eingesetztes Implantat 1001, eine noch separat in Fig. 46 gezeichnete Kappe 1161, eine Okklusalschraube 1171 und eine Krone 1201 aus Porzellan aufweist. Die Kappe 1161 ist wie die in Fig. 44 gezeichnete Kappe rotationssymmetrisch zur Achse sowie für die Freipositionierung ausgebildet und liegt mit einer Auflagefläche 164 auf der Schulterfläche 1022 auf. Die Aussenfläche 211 der in den Figuren 45 und 46 ersichtlichen Kappe verjüngt sich im allgemeinen von unten nach oben, hat jedoch zu unterst einen Aussenflächenabschnitt 1212, der aufwärts nach aussen geneigt ist und mindestens annähernd glatt an das oberen Ende des trompetenförmigen Abschnitts 1013 des Implantats angeschlossen ist. Die Aussenfläche 1211 ist ferner mit einer im Axialschnitt bogenförmigen Ringnut 1213 versehen. Die in Fig. 45 ersichtliche Okklusalschraube 1171 unterscheidet sich von der in Fig. 44 gezeichneten Okklusalschraube dadurch, dass sie anstelle des zylindrischen Schaftabschnitts 1174 einen im Axialschnitt konkav gebogenenen Schaftabschnitt 1224 aufweist, welcher den konischen Abschnitt 173 mindestens annähernd stetig mit dem Gewindeteil 1175 verbindet und die Bruchgefahr der Okklusalschraube reduziert.

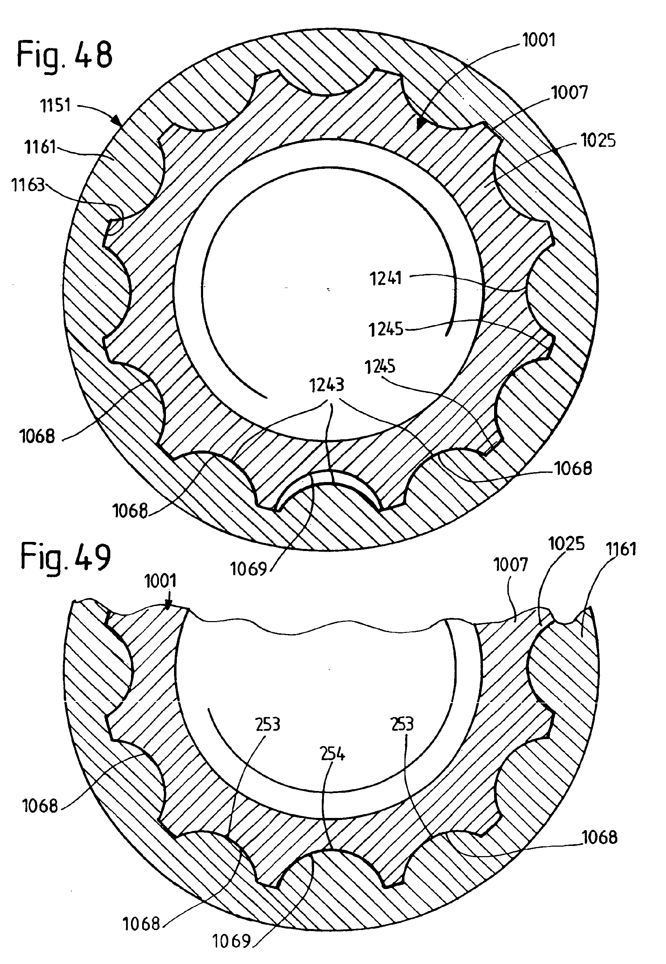

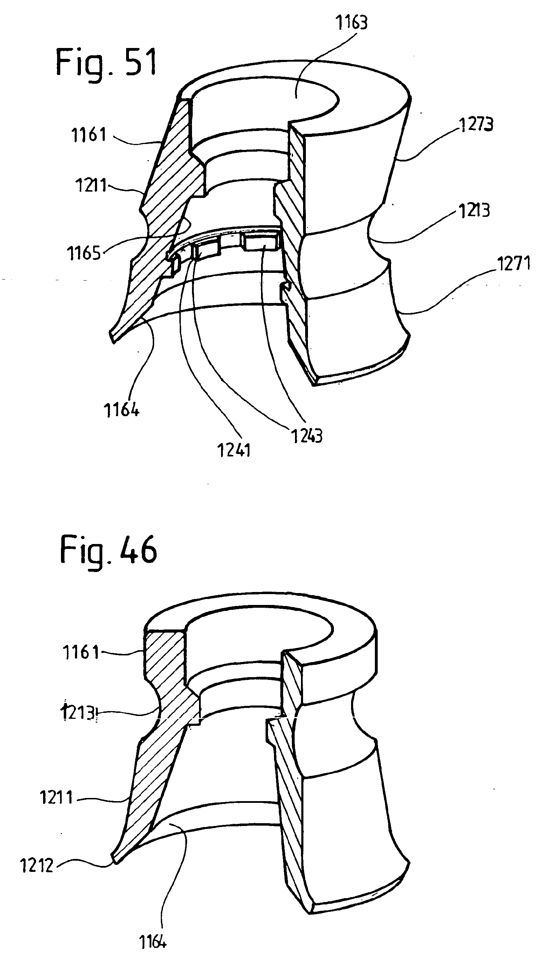

Die in Fig. 47 und zum Teil in Fig. 48 ersichtliche Vorrichtung 1151 weist ein in einen Knochen 1111 eingesetztes Implantat 1001 und ein Aufbauelement 1153 auf. Das Aufbauelement 1153 besitzt eine mit einer Okklusalschraube 1171 am Implantat 1001 befestigte Kappe 1161 und eine zur Bildung eines Einzel-Zahnersatzes dienende Krone 1201. Der Kopf 1007 des Implantats besitzt beispielsweise elf identisch ausgebildete, erste Positionsierungszwischenräume 1068 bzw. Positionierungsnuten 1068 und einen zweiten, breiteren und tieferen Positionierungszwischenraum 1069 bzw. eine zweite Positionierungsnut 1069. Der Kopf besitzt also insgesamt 12 Positionierungsnuten, die Positionierungsflächen 1033 bilden.

Die in den Figuren 47 und 48 ersichtliche Kappe 1161 ist zum Teil ähnlich wie die in den Figuren 45 und 46 gezeichnete Kappe ausgebildet, besitzt aber oberhalb der konischen Auflagefläche 1164 einen Positionierungsabschnitt 1241. Dieser ist im allgemeinen zylindrisch, besitzt aber entlang dem Umfang des Innenraums 1163 abwechselnd aufeinander folgende Positionierungsvorsprünge 1243 und Positionierungszwischenräume 1245. Dabei sind zwölf gleichmässig entlang dem Innenraumumfang verteilte, identisch ausgebildete und bemessene Vorsprünge 1243 und zwölf ebenfalls gleichmässig verteilte und identisch ausgebildete Zwischenräume 1245 vorhanden. Von den zwölf Vorsprüngen 1243 der Kappe greifen elf in eine erste Positionierungsnut 1231 und einer in die zweite Positionierungsnut 1232 ein. Die Kappe ist also für die Multipositionierung ausgebildet und kann beim Verbinden mit dem Implantat in zwölf verschiedenen Positionen - d. h. Drehstellungen - auf dem Implantat positioniert werden, wobei der Winkel zwischen den einander benachbarten Drehstellungen 30° beträgt. Die Vorsprünge 1243 bestehen aus geraden, axialen Rippen und haben im Querschnitt kreisbogenförmige Flächen. Diese sind beim achsparallelen Kopfabschnitt 1025 mindestens annähernd komplementär zu den ersten Positionierungsnuten 1068. Die in die ersten Positionierungsnuten 1068 eingreifenden Vorsprünge 1243 haben in diesen ein Spiel, das in radialer Richtung und insbesondere entlang einem zur Achse 1003 koaxialen Kreis höchstens 0,02 mm, besser höchstens 0,01 mm beträgt und zum Beispiel im Bereich von wenigen Mikrometern liegt. Dagegen ist der in die zweite Positionierungsnut 1069 eingreifende Vorsprung 1243 der Kappe durch einen ziemlich breiten Spalt von der zweiten Positionierungsfläche getrennt. Die Positionierungszwischenräume 1245 der Kappe passen ebenfalls mit höchstens sehr kleinem Spiel zu den Zylinderflächenabschnitten des achsparallelen Kopfabschnitts. Die Positionierungsvorsprünge 1243 der Kappe greifen ferner auch im konischen Kopfabschnitt 1027 bis zum freien Ende des Kopfs 1007, d. h. bis zum zweiten Ende 1009 des Implantats 1001 in die Positionierungsnuten des Kopfs ein und werden also in den Kopfabschnitten 1025, 1027 bis zum zweiten Ende 1009 des Implantats mit sehr kleinem Spiel von den ersten Positionierungsnuten geführt und gegen quer zur Achse 1003 gerichtete Kräfte abgestützt. Die für die Multipositionierung ausgebildete Kappe wird also trotz der kleinen Höhe des Kopfs ebenfalls gut gegen laterale Kräfte vom Implantat abgestützt und stabil mit dem Implantat verbunden.

Der Kopf 1007 des in Fig. 49 ersichtlichen Implantats 1001 ist gleich ausgebildet wie beim in den Figuren 47 und 48 ausgebildeten Implantat und besitzt mehrere erste, identische Positionierungsnuten 1068 und eine zweite, breitere sowie tiefere Positionierungsnut 1069. Die in Fig. 49 ersichtliche Kappe 1161 ist für die Einzelpositionierung ausgebildet und besitzt für jede erste Positionierungsnut 1068 einen in diesen hineinragenden, ersten Positionierungsvorsprung 1253 und einen in die zweite Positionierungsnut 1069 hineinragenden, zweiten Positionierungsvorsprung 1254. Der letzere ist breiter und höher als die ersten Positionierungsvorsprünge, so dass er mit sehr kleinem Spiel in die zweite Positionierungsnut 1069 hineinpasst und in keine erste Positionierungsnut 1068 eingreifen kann.

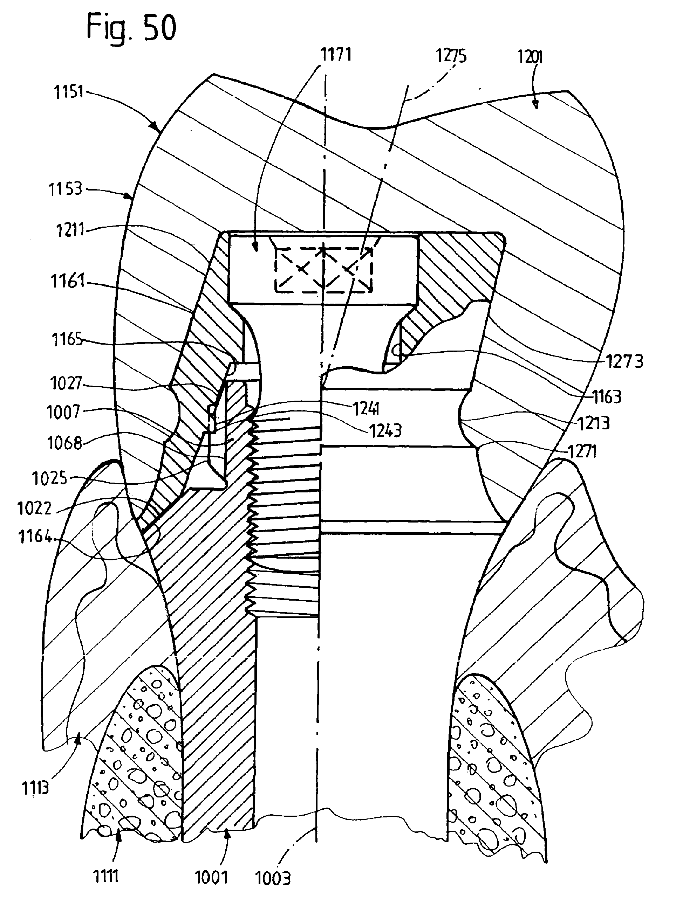

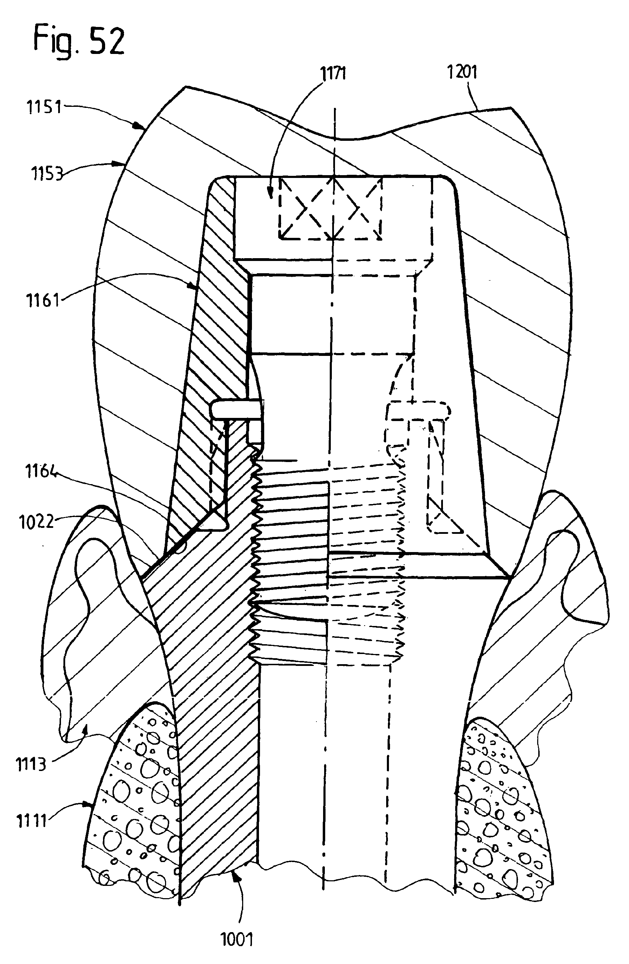

Das Implantat 1001 der in Fig. 50 gezeichneten Vorrichtung 1151 besitzt einen Kopf 1007 mit mehreren ersten Positionierungsnuten 1065 und einer nicht sichtbaren, zweiten Positionierungsnut. Die Vorrichtung besitzt ferner ein Aufbauelement 1153 mit einer separat in Fig. 51 gezeichneten Kappe 1161, einer Okklusalschraube 1171 und einer Krone 1201. Die Kappe 1161 oder - genauer gesagt - deren Aussenfläche 1211 ist abgewinkelt. Der untere Aussenflächenabschnitt 1271 ist bis zur Ringnut 1213 inklusive dieser im allgemeinen rotationssymmetrisch zur Achse 1003 des Implantats. Der sich oberhalb der Ringnut 1213 befindende, obere Aussenflächenabschnitt 1273 ist ungefähr koaxial zu einer Achse 1275, die mit der Achse 1003 einen spitzen Winkel bildet. Die Deckfläche der Kappe ist eben und ungefähr rechtwinklig zur Achse 1003. Der Innenraum 1163 der Kappe ist bis zum oberen Ende von dieser koaxial zur Achse 1003 und im allgemeinen rotationssymmetrisch zu dieser. Die Kappe 1161 besitzt eine auf der Schulterfläche 1022 des Implantats aufliegende, konische Auflagefläche 1164 und zudem - ähnlich wie die Kappen gemäss den Figuren 44, 45 - eine konische Innenfläche 1165, die mit kleinem Spiel vom konischen Kopfabschnitt 1027 abgestützt wird. Die Kappe hat jedoch noch einen Positionierungsabschnitt 1241 mit Positionierungsvorsprüngen, die beispielsweise alle gleich ausgebildet und mit 1243 bezeichnet sind, so dass die Kappe für die Multipositionierung ausgebildet ist. Die Höhe der Positionierungsvorsprünge 1243 ist jedoch wesentlich kleiner als die Tiefe der Positionierungsnuten 1068, 1069 des Kopfs, so dass ihre Scheitel in Abstand von den tiefsten Stellen der Positionierungsnuten stehen. Ferner sind die Positionierungsvorsprünge 1243 auch wesentlich kürzer als die Positionierungsnuten des Kopfs, so dass sie beispielsweise nur in der Nähe der Verbindung der beiden Kopfabschnitte 1025, 1027 in die Positionierungsnuten eingreifen. Die entlang dem Umfang gemessene Abmessung bzw. Breite der Vorsprünge 1243 ist jedoch so bemessen, dass sie eine genaue Positionierung ergeben. Die in den Figuren 50 und 51 ersichtliche Kappe ist insbesondere gut für Brückenkonstruktionen verwendbar, die zwei Implantate mit nicht zueinander parallelen, beispielsweise divergenten oder konvergenten Achsen aufweisen. Das eine Brückenkonstruktion bildende Aufbauelement 1153 kann dann trotz der nicht-parallelen Implantat-Achsen gut auf die Implantate aufgesteckt und von diesen weggezogen werden. Ferner wird trotz der kleinen Positionierungsvorsprünge der Kappe eine gute Positionierung und eine gute Abstützung gegen laterale Kräfte erzielt.

Die in Fig. 52 gezeichnete Vorrichtung 1151 besitzt ein Implantat 1001 mit Positionierungsnuten und ein Aufbauelement 1153 mit einer für die Multi- oder Einzelpositionierung ausgebildeten Kappe 1161. Diese liegt mit der konischen Auflagefläche 1164 auf der konischen Schulterfläche 1022 des Implantats 1001 auf. Der Aussenrand der Auflagefläche 1164 hat jedoch einen kleineren Durchmesser als der Aussenrand der Schulterfläche 1022, so dass diese noch einen die Kappe umschliessenden Abschnitt hat. Der Kopf der Okklusalschraube 1171 ist ungefähr bündig mit dem oberen Ende der Kappe. Der Zahnarzt kann bei dieser Kappe ohne Verwendung einer speziellen Abformkappe direkt und ähnlich wie bei einem natürlichen Zahn eine Abformung machen. Aufgrund dieser Abformung kann dann eine Krone 1201 hergestellt werden, die ebenfalls noch auf der Schulterfläche 1022 aufliegt.

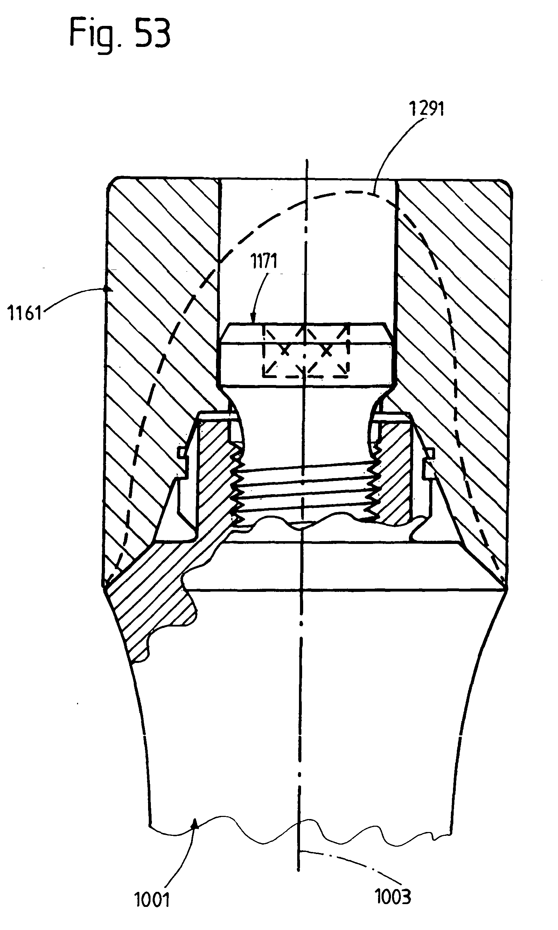

Die Vorrichtung gemäss Fig. 53 besitzt eine im allgemeinen zur Achse 1003 des Implantats 1001 rotationssymmetrische, aber zur Multi- oder Einzelpositionierung ausgebildete Kappe 161 und eine Okklusalschraube 1171, deren Kopf ziemlich tief in der Kappe versenkt ist und sich in relativ grossem Abstand vom oberen, freien Ende der Kappe befindet. Die Kappe kann für ihre Verwendung beispielsweise beschliffen werden, so dass die gestrichelte Schleiffläche 1291 entsteht.

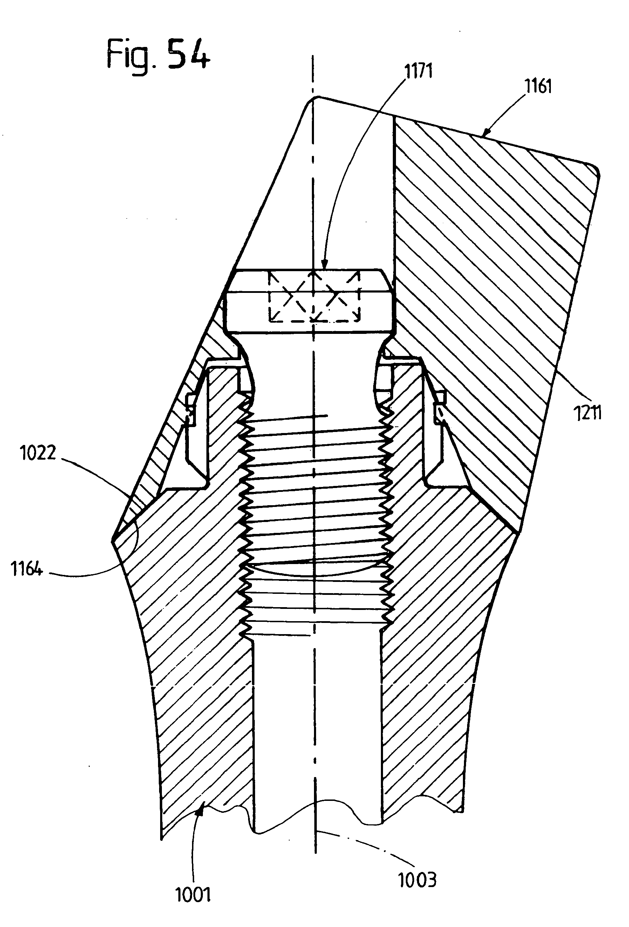

Die in Fig. 54 ersichtliche Vorrichtung besitzt ein Implantat 1001 mit Positionierungsnuten, eine Kappe 1161 und eine Okklusalschraube 1171. Bei dieser Kappe ist die auf der Schulterfläche 1022 des Implantats aufliegende Auflagefläche 1164 wiederum rotationssymmetrisch zur Achse 1003, während die ganze Aussenfläche 1211 der Kappe rotationssymmetrisch zu einer gegen die Achse 1003 geneigten Achse und beispielsweise konisch ist. Die Deckfläche der Kappe ist beispielsweise rechtwinklig zur letztgenannten Achse. Die Kappe kann für ihre Verwendung nötigenfalls beschliffen werden. Ferner kann eine Krone oder Brücke oder dergleichen auf die Kappe aufzementiert werden.

Die in den Figuren 52 bis 54 ersichtlichen Kappen können beispielsweise aus einem metallischen Material, wie einer Goldlegierung oder Titan gebildet werden. Man kann jedoch auch zuerst eine Kappe aus brennbarem Kunststoff herstellen und diese dann durch eine gegossene Kappe ersetzen.

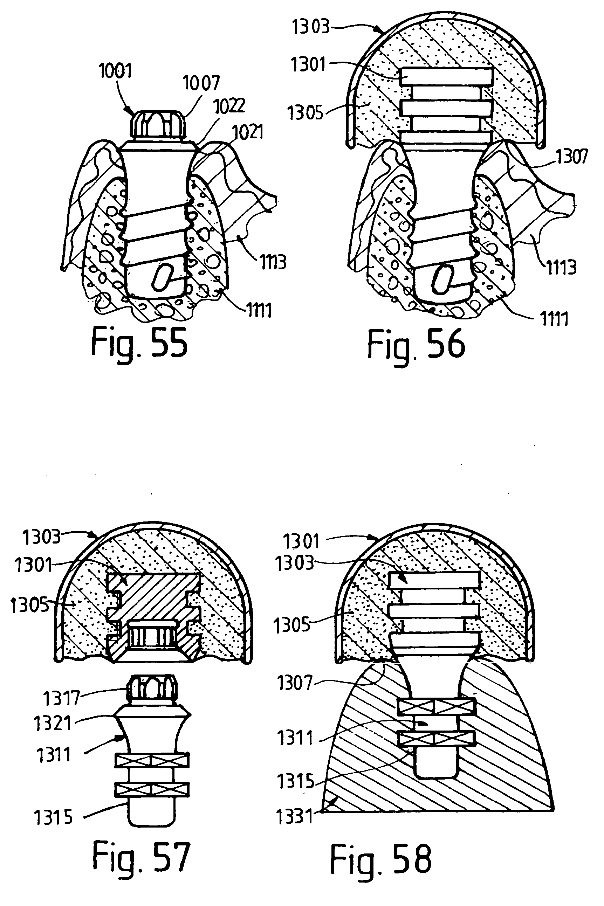

Nun werden anhand der Figuren 55 bis 62 Arbeitsschritte zur Bildung eines Zahnersatzes erläutert. Die Fig. 55 zeigt den Knochen 1111 des Unterkiefers eines Patienten, die Gingiva 1113 und ein "semi-submerged" eingesetztes Implantat 1001 nach der Einheilphase. Der Kopf 1007 des Implantats ist mit Positionierungsflächen versehen, die durch Nuten gebildet sind.

Nach dem Einheilen des Implantats 1001 wird ein in Fig. 56 ersichtliches Abformelement 1301 lösbar am Implantat befestigt, beispielsweise angeklipst oder angeschraubt. Das Abformelement 1301 besteht aus einer ein- oder mehrteiligen Abformkappe und liegt spaltfrei auf der Schulterfläche 1022 des Implantats 1001 auf. Die Kappe des Abformelements 1301 ist beispielsweise - ähnlich wie es für Kappen von Aufbauelementen beschreiben wurde - für die Multi- oder Einzelpositionierung ausgebildet, so dass das Abformelement in einer definierten Drehstellung positioniert wird. Nach der Befestigung des Abformelements wird ein mit verformbaren Abformmaterial 1305 gefüllter Abformlöffel 1303 über das Abformelement 1301 gegen den Knochenkamm und die Gingiva 1113 gedrückt und eine Abformung bzw. ein Abdruck gemacht. Das Abformmaterial bildet dann nach der Verfestigung eine Abdruckfläche 307.

Dann entfernt man den Abformlöffel 1303 mitsamt dem Abformmaterial 1305 und dem in dieses eingebetteten Abformelement 1301 vom Implantat 1001. Ein in Fig. 57 ersichtliches Manipulierimplantat 1311 besitzt eine Verankerungspartie 1315, einen Kopf 1317 und dazwischen eine Schulter 1321. Der Kopf 1317 und die Schulter 1321 des Manipulierimplantats sind gleich ausgebildet wie bei dem in den Figuren 55, 56 gezeichneten Implantat 1001, während die Verankerungspartie 1315 üblicherweise von derjenigen des Implantats 1001 verschieden ist.

Der Kopf 1317 des Manipulierimplantats 1311 wird nun gemäss Fig. 58 in den Innenraum des Abformelements 1301 gesteckt, dabei in einer bestimmten Drehstellung positioniert und lösbar am Abformelement befestigt, beispielsweise angeklipst. Die konische Schulterfläche des Manipulierimplantats liegt dann auf der konischen Auflagefläche des Abformelements auf, wobei die Aussenränder dieser Flächen von aussen sichtbar sind. Danach wird ein Modelliermaterial - beispielsweise Gips - über die Verankerungspartie 1315 des Manipulierimplantats 1311 gegen die Abdruckfläche 1307 gedrückt und aus dem Modelliermaterial das in Fig. 58 ersichtliche Meistermodell 1331 hergestellt. Nach der Verfestigung des Modelliermaterials ist die Verankerungspartie 1315 des Manipulierimplantats im Meistermodell verankert.

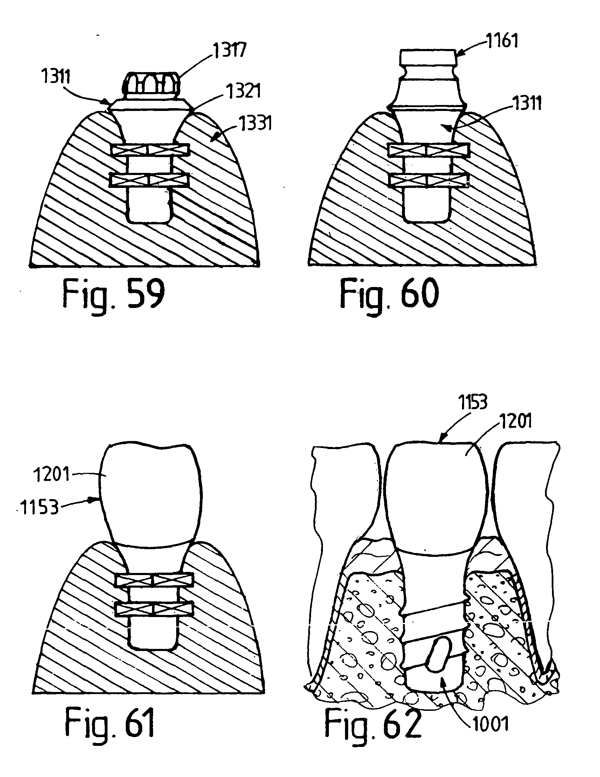

Anschliessend trennt man das Manipulierimplantat 1311 vom Abformelement. Der Kopf 1317 und die konische Schulterfläche der Schulter 1321 des Manipulierimplantats ragen dann gemäss Fig. 59 aus dem Meistermodell 1331 heraus.

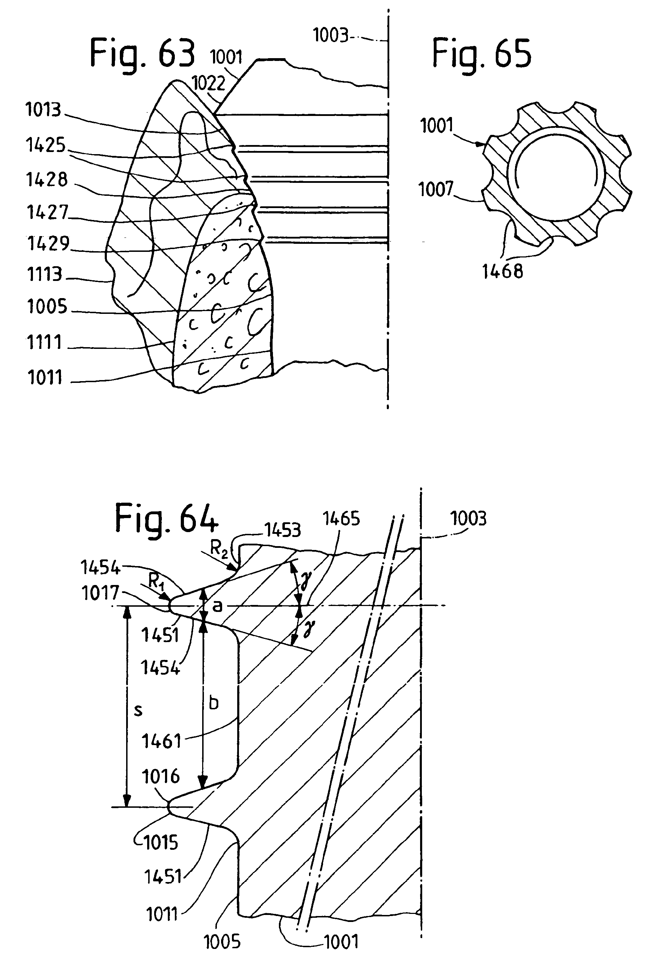

Beim nächsten Schritt wird eine in Fig. 60 ersichtliche, als Bestandteil eines Aufbauelements dienende Kappe 1161 auf den Kopf des Manipulierimplantats 1311 aufgesteckt und mit einer Okklusalschraube lösbar an diesem befestigt. Danach wird eine in Fig. 61 ersichtliche, beispielsweise aus Porzellan bestehende Krone 1201 hergestellt und an den Kappe 1161 befestigt. Die Krone bildet dann zusammen mit der Kappe 1161 ein Aufbauelement 1153. Dieses wird nur gemäss Fig. 62 in den Mund des Patienten eingesetzt und am Implantat 1001 befestigt.

Das in Fig. 63 ersichtliche Implantat 1001 besitzt beispielsweise noch einen nicht gezeichneten Kopf, könnte aber zu einem Support gehören, der auch noch einen nicht gezeichneten Sekundärteil aufweist. Das Implantat ist im allgemeinen rotationssymmetrisch zu einer Achse 1003. Die Verankerungspartie 1005 hat wiederum einen im allgemeinen zylindrischen Abschnitt 1011 und einen an dessen oberes Ende anschliessenden, sich von diesem weg im allgemeinen trompetenförmig erweiternden Abschnitt 1013. Am oberen Ende des Abschnitts 1013 ist eine konische Schulterfläche 1022 vorhanden. Der trompetenförmige Abschnitt 1013 ist mit entlang der Achse voneinander im Abstand stehenden, Vertiefungen 1425, nämlich ringförmigen, die Achse 1003 umschliessenden Rillen 1425 versehen. Jede von diesen hat im Axialschnitt einen Grund 1427, eine erste Fläche 1428 und eine zweite Fläche 1429. Die erste Fläche 1428 befindet sich oberhalb des Grunds 1427 und ist von diesem und der Achse 1003 weg nach aussen zur Schulterfläche 1022 hin nach oben geneigt. Die zweite Fläche 1429 befindet sich unterhalb des Grunds, ist wesentlich kleiner als die erste Fläche 1428 und vom Grund weg nach aussen und unten, d.h. von der Schulterfläche 1422 weg geneigt. Die zweite Fläche 1429 bildet mit der Achse 1403 einen wesentlich grösseren Winkel als die erste Fläche 1428. Die sich zwischen benachbarten Rillen befindenden Vorsprünge bzw. Rippen haben daher ungefähr eine Sägezahnprofil. Die ersten und zweiten Flächen sind jedoch bei jedem Grund und bei ihren den Gründen abgewandten Enden durch im Axialschnitt bogenförmige Abschnitte stetig miteinander verbunden. Wenn das Implantat in einem Knochen 1111 eingesetzt wird, kann dieser in die Vertiefung bzw. Rillen 1425 einwachsen und dadurch die Verankerung der Verankerungspartie im Knochen verbessern. Falls die Vertiefungen bzw. Rillen 1425 aus dem Knochen herausragt, kann auch noch die Gingiva 1113 in die Vertiefungen bzw. Rillen 1425 einwachsen.

Das zum Teil in Fig. 64 ersichtliche Implantat 1001 hat eine Achse 1003 und eine Verankerungspartie 1005. Diese hat einen im allgemeinen zylindrischen Abschnitt 1011 mit einen Aussengewinde 1015. Diese ist eingängig und hat eine Rippe 1016, könnte jedoch eventuell auch mehrgängig sein und dementsprechend mehr als eine Rippe ausweisen. Die Rippe 1016 hat eine Schraubenlinie bildende windungen 1451, einen Scheitel 1017, einen Fuss 1453 und zwei Flanken 1454. Zwischen einander benachbarten Windungen 1451 ist eine Rinne 1461 mit einer zylindrischen Grundfläche vorhanden. Jede Flanke 1454 hat einer im Axialschnitt geraden Flankenabschnitt. Die geraden Flankenabschnitte der Rippe sind durch einen den Scheitel 1017 bildenden, im Axialschnitt bogenförmigen Abschnitt mit dem Krümmungsradius R₁ stetig miteinander verbunden. Die im Axialschnitt geraden Flankenabschnitte sind ferner beim Fuss der Rippe durch einen im Axialschnitt bogenförmigen Abschnitt mit dem Krümmungsradius R₂ stetig mit der zylindrischen Grundfläche oder Rinne 1461 verbunden.

Die im Axialschnitt geraden Flankenabschnitte bilden mit einer radialen Geraden 1465 einen Winkel γ. Dieser beträgt 15° bis 25°, vorzugsweise 18° bis 22° und Beispiel ungefähr 20°. Die axiale Entfernung von einander entsprechenden Stellen von zweieinander benachbarten Windungen 1451 der Rippe ist mit s bezeichnet und ist bei einem eingängigen Gewinde identisch mit dessen Steigung bzw. Ganghöhe. Die Rippe hat in halber Höhe, d.h. in der Mitte zwischen ihrem Scheitel und ihrem Fuss, eine axiale Abmessung a. Diese beträgt höchstens 30% und zum Beispiel vorzugsweise 15% bis 25% der Entfernung s. Die Rinne 1461 hat in der halben Höhe der Rippe 1016 eine axiale Abmessung b, die wesentlich grösser ist als die Abmessung a. Die Rippe hat zum Beispiel eine ungefähr 0,5 mm betragende Höhe. Der Krümmungsradius R₁ beträgt zum Beispiel ungefähr 0,05 mm bis 0,1 mm. Der Krümmungsradius R₂ beträgt mindestens 0,1 mm und zum Beispiel ungefähr 0,15 mm oder noch mehr.

Wenn das in Fig. 64 gezeichnete Implantat in einem Knochen eingesetzt wird, enthält der Raumbereich zwischen einem sich an die Scheitel 1017 anschmiegenden Zylinderfläche und einer vom Grund der Rinne definierten Zylinderfläche wesentlich mehr - nämlich ungefähr dreimal bis fünfmal mehr - Knochenmaterial als metallisches Implantatmaterial. Ferner ergibt der zum Beispiel ungefähr 20° betragende Winkel γ eine günstige Übertragung von Druck- und Zugkräften zwischen dem Implantat und dem Knochen.

Der Kopf 1007 des in Fig. 65 gezeichneten Implantats 1001 hat gleichmässig entlang seinem Umfang verteilten Positionierungszwischenräume bzw. - Nuten 1468, die alle gleich ausgebildet und bemessen sind.

Das in den Figuren 66, 67 gezeichnete Implantat hat anstelle von Positionierungsnuten zur Achse 1003 parallele, ebene und also zur Achse nicht-rotationssymmertischen Positionierungsflächen 1033.Diese sind alle gleichmässig verteilt und alle gleich ausgebildet sowieso bemessen. Der radial Abstand der axialen Mittellinien der Positionierungsflächen 33 ist ungefähr oder genau gleich dem Radius des engeren, oberen Endes des konischen Kopfabschnitts 1027. Die ebenen Positionierungsflächen 1033 erstrecken sich in axialer Richtung über die ganze Länge des achsparallelen Kopfabschnitts 1025 und mindestens annähernd sowie vorzugsweise genau bis zum dünneren, oberen Ende des konischen Kopfabschnitts 1027 und damit auch bis zum zweiten Ende 1009 des ganzen Implantats. Die ebenen Positionierungsflächen 1033 bilden zusammen im wesentlichen ein Mehrkant, d.h. Achtkant. Der achsparallele Kopfabschnitt 1025 besitzt jedoch zwischen den ebenen Positionierungsflächen beispielsweise noch schmale Umfangabschnitte einer zylindrischen Mantelfläche. Der im allgemeinen konische Kopfabschnitt 1027 soll auf jeden Fall zwischen den ebenen Positionierungsflächen 1033 noch Abschnitte einer konischen Mantelfläche haben.

Die nach dem in den Figuren 31 bis 33 gezeichneten Ausführungsbeispiel des Implantats beschriebenen Implantate können - soweit nichts anderes geschrieben wurde - gleich oder ähnlich ausgebildet sein wie das anhand der Figuren 31 bis 33 beschriebene Implantat oder ein anderes vorher beschriebenes Implantat. Analoges gilt für die Kappen, Schrauben, Aufbauelemente und sonstigen Teile, die nach entsprechenden, weiter vorne beschriebenen Teilen beschrieben wurden.

Wie schon in der Einleitung erwähnt, können die Kappen statt aus einem metallischen Material aus einem ausbrennbaren Kunststoff bestehen. Ein Zahntechniker kann dann ein schmelzbares und/oder verbrennbares Modelliermaterial, beispielsweise Wachs, auf die Kunststoffkappe aufbringen und dadurch ein Gussmodell für eine Krone oder einen sonstigen Aufbauteil herstellen. Danach kann eine dieses umschliessende Giessform gebildet und das sich in dieser befindende Gussmodell verbrannt und/oder geschmolzen werden. Dann wird aus einem Giessmaterial, beispielsweise einer Goldlegierung, ein Aufbauteil gegossen. Das radiale Spiel zwischen einer ausbrennbaren Kappe und dem Positionierungsabschnitt eines diese tragenden Supports kann nötigenfalls geringfügig grösser gemacht werden als es für eine Vorrichtung mit einer metallischen Kappe 101 anhand der Figuren 8, 9 beschrieben wurde und beispielsweise bis ungefähr 0,02 mm betragen. Dagegen kann das Spiel zwischen den Seitenflächen der Vorsprünge der ausbrennbaren Kappe und den Seitenflächen der Vorsprünge des diese Kappe tragenden Supports beispielsweise ähnlich festgelegt werden, wie es anhand der Figuren 8, 9 für die Vorrichtung mit einer metallischen Kappe beschrieben wurde. Die ausbrennbare Kappe und die unter Verwendung von dieser gegossene Kappe können dann bezüglich Drehungen ungefähr gleich genau positioniert werden, wie es für die Kappe 101 beschrieben wurde.

Die Supporte und an diesen befestigbare Elemente können noch auf verschiedene Arten modifiziert werden. Man kann insbesondere Merkmale von verschiedenen beschriebenen Ausführungsbeispielen miteinander kombinieren.

Statt ein Aufbauelement und/oder eine Kappe mittels einer Schraube lösbar an einem Support zu befestigen, kann ein Aufbauelement mit einem Bolzen hergestellt werden, der mit einem Bindemittel - d.h. einem Zement oder Klebstoff - in das Sackloch des Supports einzementiert bzw. eingeklebt werden und dsa Aufbauelement und/oder die Kappe unlösbar mit dem Support verbinden kann. Der Support kann trotzdem ein Innengewinde aufweisen, das dann die Haftung des Bindemittels im Support verbessert. Eine solche Befestigungsweise kann insbesondere bei einem an zwei Supporten befestigten Aufbaulelement, beispielsweise einer Brücke, vorteilhaft sein.

Das Einheilelement bzw. die Einheilkappe kann statt angeschraubt durch eine Klemm- und/oder Rastverbindung am Support befestigt werden.

Schliesslich wird noch auf die unter Beanspruchung der Prioritäten von den Schweizerpatentanmeldungen 1220/97 und 1222/97 eingereichte Patentanmeldung PCT/EP 98/02966 und die dafür veröffentlichte Publikation WO 98/52490 A verwiesen.

## Patentansprüche

1. Support zum Halten und/oder Bilden eines Zahnersatzes, mit einer Achse (1003) und einer zum Verankern in einem Knochen (1111) bestimmten Verankerungspartie (1005), die ein Aussengewinde (1015) mit mindestens einer entlang einer Schraubenlinie verlaufende Rippe (1016) aufweist, **dadurch gekennzeichnet, dass** das Aussengewinde (1015) selbstschneidend ist und dass die Verankerungspartie (1005) mit mindestens einem länglichen Loch (1071) und/oder einer länglichen Nut (1051) versehen ist, welches bzw. welche bei mindestens einer Windung der mindestens einen Rippe (1016) eine Spanfläche (1053) bildet, die beim Scheitel der Rippe (1016) einen spitzen Spanwinkel β mit einer durch die Achse (1003) verlaufenden Geraden bildet, in einer zur Achse (1003) radialen Ansicht auf die gleiche Seite von dieser geneigt ist wie die Rippe (1016) und mit der Achse (1003) in zu dieser radialer Ansicht einen spitzen Anschnittwinkel α bildet.

2. Support nach Anspruch 1, **dadurch gekennzeichnet, dass** die bzw. jede Rippe (1016) des Aussengewindes (1015) zwischen dem Loch (1071) und/oder der Nut (1051) bzw. zwischen den Löchern (1071) und/oder den Nuten (1051) der Verankerungspartie (1005) und einem zum Herausragen aus dem Knochen (1111) bestimmten Ende (1009) des Supports einen Abschnitt hat, der die Achse (1003) unterbruchslos mindestens einmal umschliesst.

3. Support nach einem der Ansprüche 1 oder 2, **dadurch gekennzeichnet, dass** die bzw. jede Rippe (1016) Windungen (1451), einen Scheitel (1017), einen Fuss (1453) und zwei Flanken (1454) hat, dass einander entsprechende Stellen von zwei einander benachbarten Windungen (1451) eine Entfernung s voneinander haben, dass die bzw. jede Rippe (1016) in halber Höhe von ihr eine axiale Abmessung a hat, die höchstens 30% der Entfernung s beträgt, und dass beide Flanken (1454) der bzw. jeder Rippe (1016) einen im Axialschnitt geraden Flankenabschnitt haben, der mit einer radialen Geraden (1465) einen Winkel γ von 15° bis 25° bildet.

4. Support nach Anspruch 3, **dadurch gekennzeichnet, dass** der Winkel γ 18° bis 22° beträgt und dass die Abmessung a 10% bis 25% der Entfernung s beträgt.

5. Support nach einem der Ansprüche 1 bis 4, **dadurch gekennzeichnet, dass** zwischen einander benachbarte Windungen (1451) der Rippe (1016) bzw. Rippen (1016) eine Rinne (1461) mit einer zylindrischen Grundfläche vorhanden ist und dass die im Axialschnitt geraden Flankenabschnitt der bzw. jeder Rippe (1016) im Axialschnitt durch einen den Scheitel (1017) der Rippe (1016) bildenden, bogenförmigen Abschnitt stetig miteinander und durch bogenförmige Abschnitte stetig mit der zylindrischen Grundfläche verbunden sind.

6. Support nach Anspruch 5, **dadurch gekennzeichnet, dass** die die im Axialschnitt geraden Flankenabschnitte mit der zylindrischen Grundfläche verbindenden, bogenförmigen Abschnitte im Axialschnitt einen Krümmungsradius (R₂) haben, der mindestens 0,1 mm beträgt.

7. Support nach einem der Ansprüche 1 bis 6, **dadurch gekennzeichnet, dass** er ein von der Verankerungspartie (1005) gebildetes, erstes Ende (1008), ein zum Herausragen aus dem Knochen (1111) bestimmtes, zweites Ende (1009) und ein zur Achse (1003) koaxiales Sackloch (1035) aufweist, das eine sich am zweiten Ende (1009) befindende Mündung (1036), ein Innengewinde (1037), einen Grund (1039) und einen sich zwischen diesem und dem Innengewinde (1037) befindenden zylindrischen Lochabschnitt (1038) mit einem Durchmesser besitzt, der höchstens gleich dem Kerndurchmesser des Innengewindes (1037) ist, dass das Innengewinde (1037) ein inneres, sich näher beim Grund (1039) befindendes Ende hat und **dass** das in das zweite Ende (1009) mündende Sackloch (1035) eine sich zwischen dem Innengewinde (1037) und dem zylindrischen Lochabschnitt (1038) befindende, ringförmige Rille (1091) besitzt, die im Axialschnitt mindestens teilweise konkav gebogen ist und einen Übergang zwischen dem inneren Ende des Innengewindes (1037) und dem zylindrischen Lochabschnitt (1038) bildet.

8. Support nach Anspruch 7, **dadurch gekennzeichnet, dass** er einen im wesentlichen zylindrischen Abschnitt (1011) und einen sich von diesem und vom ersten Ende (1008) weg erweiternden Abschnitt (1013) aufweist, dass das innere Ende das Innengewindes (1037) innerhalb des sich erweiternden Abschnitt (1013) angeordnet ist und dass die Rille (1091) zum Teil durch eine Fläche begrenzt ist, die im Axialschnitt ungefähr parallel zur Aussenfläche des sich erweiternden Abschnitts (1011) ist.

9. Support nach einem der Ansprüche 1 bis 8, **dadurch gekennzeichnet, dass** er ein von der Verankerungspartie (1005) gebildetes, freies Ende (1008) und ein axiales Sackloch (1093) aufweist, das eine sich am freien Ende (1008) der Verankerungspartie (1005) befindende Mündung (1094) und einen sich innerhalb der Verankerungspartie (1005) befindenden Grund (1095) hat, und dass das Sackloch (1093) durch eine beim Grund (1095) im Axialschnitt gebogene, sich von der Mündung (1094) bis zum Grund (1095) im wesentlichen über die ganze axiale Ausdehnung des Sacklochs (1093) verjüngende Fläche begrenzt ist.

10. Support nach einem der Ansprüche 1 bis 9, **dadurch gekennzeichnet, dass** er eine zum Herausragen aus dem Knochen (1111) bestimmte Kopfpartie (1007) und eine ringförmige Schulterfläche (1022) aufweist, die zwischen der Verankerungspartie (1005) und der Kopfpartie (1007) angeordnet ist und mit der Achse (1003) einen Winkel bildet.

11. Support nach Anspruch 10, **dadurch gekennzeichnet, dass** er die Verankerungspartie (1005) einen in allgemeinen zylindrischen Abschnitt (1111) und einen sich von diesem zur Schulterfläche (1022) hin im allgemeinen erweiternden Abschnitt (1013 aufweist und **dass** der sich erweiternde Abschnitt (1013) der Verankerungspartie (1405) entlang der Achse (1003) voneinander in Abstand stehende Vertiefungen (1425) aufweist.

12. Support nach Anspruch 11, **dadurch gekennzeichnet, dass** jede Vertiefung (1425) im Axialschnitt einen Grund (1427), eine erste Fläche (1428) und eine zweite Fläche (1429) hat, dass die erste Fläche (1428) vom Grund (1427) zur Schulterfläche (1022) hin von der Achse (1003) weg geneigt ist und dass die zweite Fläche (1429) sich auf der der Schulterfläche (1022) abgewandten Seite des Grundes (1427) befindet von diesem und der Achse (1403) weg nach aussen gerichtet ist mit der Achse (1003) einen grösseren Winkel bildet als die erste Fläche (1428).

13. Support nach Anspruch 11 oder 12, **dadurch gekennzeichnet, dass** die Vertiefungen (1425) durch die Achse (1403) umschliessende Rillen gebildet sind und dass die ersten und die zweiten Flächen (1428, 1429) bei den Gründen (1427) und bei diesen abgewandten Enden durch im Axialschnitt bogenförmige Abschnitte stetig miteinander sind.

14. Support nach einem der Ansprüche 10 bis 13, **dadurch gekennzeichnet, dass** die Kopfpartie (1007) einen im allgemeinen zur Achse (1003) parallelen Abschnitt (1025) und einem sich von diesem und der Verankerungspartie (1005) weg verjüngenden, im allgemeinen konischen Abschnitt (1027) mit einem dünneren Ende hat und dass die Kopfpartie (1007) mehrere um die Achse (1003) herum verteilte, entlang von dieser verlaufende, zur Achse (1003) nicht-rotationssymmetrische Positionierungsflächen (1033) aufweist, die sich in dem im allgemeinen zur Achse (1003) parallelen Abschnitt (1025) und in dem im allgemeinen konischen Abschnitte (1027) befindende Bereiche haben und von denen sich mindestens ein mittlerer Querschnittsbereich bis zum dünneren Ende des im allgemeinen konischen Abschnitts (1027) erstreckt.

15. Support nach Anspruch 14, **dadurch gekennzeichnet, dass** die Positionierungsflächen (1033) eben oder durch nutförmige Zwischenräume (1068, 1069) gebildet sind.

16. Support nach Anspruch 14 oder 15, **dadurch gekennzeichnet, dass** die Schulterfläche (37) konisch ist und mit der Achse (22) einen grösseren Winkel bildet als der im allgemeinen konische Abschnitt (64) der Kopfpartie (24) oder dass die Schulterfläche (437) rechtwinklig zur Achse (422) ist und im letzteren Fall zusammen mit einer von ihr weg zur Kopfpartie hin verlaufenden Zentrierfläche (439) eine ringförmige Kehle bildet, wobei sich die Zentrierfläche (439) vorzugsweise zur Kopfpartie (24) hin konisch verjüngt.

17. Support nach Anspruch 16, **dadurch gekennzeichnet, dass** die Schulterfläche (37) eine konische oder ebene Fläche definiert und einen äusseren Rand (38) hat und dass der im allgemeinen konische Abschnitt (64) eine Konusfläche definiert, welche die von der Schulterfläche (37) definierte konische oder ebene Fläche in einem vom äusseren Rand (38) der Schulterfläche (37) umschlossenen Bereich in Abstand vom äusseren Rand (38) der Schulterfläche (37) schneidet.

18. Support nach Anspruch 16 oder 17, **dadurch gekennzeichnet**, das die Kopfpartie (24) ein der Verankerungspartie (23) abgewandtes, freies Ende hat, das von einem inneren Rand der konischen Schulterfläche (37) bzw. der Zentrierfläche (439) einen Abstand hat, der höchstens 2 mm und zum Beispiel mindestens 1,2 mm beträgt.

19. Support nach einem der Ansprüche 14 bis 18, **dadurch gekennzeichnet, dass** der im allgemeinen konische Abschnitt (64) der Kopfpartie (24) mit der Achse (22) einen Winkel von 15° bis 25° bildet.

20. Vorrichtung mit einem Support (21, 321, 421, 521, 721, 1000) nach einem der Ansprüche 1 bis 19 und mit einem am Support (21, 321, 421, 521, 721, 1000) befestigbaren Element (85, 93, 793, 1115, 1153, 1301), **dadurch gekennzeichnet, dass** der Support (21, 321, 421, 521, 721, 1000) eine zum Herausragen aus dem Knochen (81, 111) bestimmte Kopfpartie (24, 324, 524, 724, 1007) und eine ringförmige Schulterfläche (37, 437, 1022) aufweist, die zwischen der Verankerungspartie (23, 323, 523, 823, 1005) sowie der Kopfpartie (24, 324, 524, 724, 1007) angeordnet ist und mit der Achse (22, 322, 422, 522, 722, 1003) einen Winkel bildet, und dass das Element (85, 93, 793, 1115, 1153, 1301) eine zum Aufliegen auf der Schulterfläche (37) bestimmte Auflagefläche (104, 264) hat und in auf der Schulterfläche aufliegendem Zustand die Kopfpartie (24) im Querschnitt umschliesst.

21. Vorrichtung nach Anspruch 20, soweit dieser auf einen der Ansprüche 14 bis 19 bezogen ist, **dadurch gekennzeichnet, dass** das Element (93) in mit dem Support (21) verbundenem Zustand spaltfrei auf der Schulterfläche (37) aufliegt und beim im allgemeinen konischen Abschnitt (53) der Kopfpartie (24) mit höchstens kleinem Spiel mindestens stellenweise von diesem gestützt ist.

22. Vorrichtung nach Anspruch 20 oder 21, **dadurch gekennzeichnet, dass** das Element mindestens einen Teil eines Aufbauelements (93) oder eines Abformelements (1301) oder eines Einheilelements (85) bildet oder ausbrennbar ist und zur Herstellung eines Aufbauelements dient.

## Claims

1. Support for holding and/or forming a dental prosthesis, with an axis (1003) and an anchoring part (1005) intended for anchoring in a bone (1111) and having an external thread (1015) with at least one rib (1016) running along a helix, **characterized in that** the external thread (1015) is self-cutting and **in that** the anchoring part (1005) is provided with at least one elongated hole (1071) and/or one elongated groove (1051), said hole or groove forming a chip surface (1053), at at least one turn of the at least one rib (1016), which forms an acute chip angle β at the summit of the rib (1016) with a straight line running through the axis (1003), and is inclined in a view radial to the axis (1003) toward the same side of this axis as the rib (1016) and forms an acute lead angle α with the axis (1003) in a view radial thereto.

2. Support according to Claim 1, **characterized in that** the rib or each rib (1016) of the external thread (1015) between the hole (1071) and/or the groove (1051) or between the holes (1071) and/or the grooves (1051) of the anchoring part (1005) and an end (1009) of the support intended to protrude from the bone (1111) has a section which surrounds the axis (1003) at least once without a break.

3. Support according to either of Claims 1 and 2, **characterized in that** the or each rib (1016) has turns (1451), a summit (1017), a foot (1453) and two flanks (1454), **in that** corresponding points of two adjacent turns (1451) are a distance s apart, **in that** the or each rib (1016) has, at half its height, an axial dimension a which is at most 30% of the distance s, and **in that** both flanks (1454) of the or each rib (1016) have a flank section which is straight in axial section and forms an angle γ of 15° to 25° with a radial straight line (1465).

4. Support according to Claim 3, **characterized in that** the angle γ is 18° to 22° and **in that** dimension a is 10% to 25% of the distance s.

5. Support according to any of Claims 1 to 4, **characterized in that** a channel (1461) with a cylindrical bottom surface is present between mutually adjacent turns (1451) of the rib (1016) or ribs (1016) and **in that** the flank sections of the or each rib (1016) which are straight in axial section are continuously connected with each other by an arcuate section forming the summit (1017) of the rib (1016) and continuously connected with the cylindrical bottom surface by arcuate sections.

6. Support according to Claim 5, **characterized in that** the arcuate sections connecting the flank sections which are straight in axial section with the cylindrical bottom surface have, in axial section, a radius of curvature (R₂) of at least 0.1 mm.

7. Support according to any of Claims 1 to 6, **characterized in that** it has a first end (1008) formed by the anchoring part (1005), a second end (1009) intended to protrude from the bone (1111) and a blind hole (1035) which is coaxial with the axis (1003) and possesses an opening (1036) present at the second end (1009), an internal thread (1037), a bottom (1039) and a cylindrical hole section (1038) which is present between said bottom and the internal thread (1037) and possesses a diameter which is at most equal to the core diameter of the internal thread (1037), **in that** the internal thread (1037) has an inner end present closer to the bottom (1039), and **in that** the blind hole (1035) opening into the second end (1009) has an annular groove (1091) which is present between the internal thread (1037) and the cylindrical hole section (1038), is at least partially concave in axial section and forms a transition between the inner end of the internal thread (1037) and the cylindrical hole section (1038).

8. Support according to Claim 7, **characterized in that** it has a substantially cylindrical section (1011) and a section (1013) widening in the direction away therefrom and from the first end (1008), **in that** the inner end of the internal thread (1037) is disposed inside the widening section (1013) and **in that** the groove (1091) is partially bounded by a surface which is approximately parallel to the outer surface of the widening section (1011) in axial section.

9. Support according to any of Claims 1 to 8, **characterized in that** it has a free end (1008) formed by the anchoring part (1005), and an axial blind hole (1093) which has an opening (1094) present at the free end (1008) of the anchoring part (1005) and a bottom (1095) present inside the anchoring part (1005), and **in that** the blind hole (1093) is bounded by a surface which is curved at the bottom (1095) in axial section and tapers from the opening (1094) to the bottom (1095) substantially over the entire axial dimension of the blind hole (1093).

10. Support according to one of Claims 1 to 9, **characterized in that** it has a head part (1007) intended to protrude from the bone (1111), and an annular shoulder surface (1022) which is arranged between the anchoring part (1005) and the head part (1007) and forms an angle with the axis (1003).

11. Support according to Claim 10, **characterized in that** the anchoring part (1005) has a generally cylindrical section (1111) and a section (1013) generally widening away from the latter up to the shoulder surface (1022), and **in that** the widening section (1013) of the anchoring part (1405) has depressions (1425) at a distance from each other along the axis (1003).

12. Support according to Claim 11, **characterized in that** each depression (1425) has, in axial section, a bottom (1427), a first surface (1428), and a second surface (1429), **in that** the first surface (1428) is inclined away from the axis (1003) from the bottom (1427) to the shoulder surface (1022) and **in that** the second surface (1429) is located on that side of the bottom (1427) which faces away from the shoulder surface (1022), is directed outwards away from said bottom and from the axis (1403), and forms a larger angle with the axis (1003) than the first surface (1428).

13. Support according to Claim 11 or 12, **characterized in that** the depressions (1425) are formed by channels surrounding the axis (1403) and **in that** the first and the second surfaces (1428, 1429) are contiguous with one another at the bottoms (1427) and at these ends facing away from each other by sections which are arcuate in axial section.

14. Support according to any of Claims 10 to 13, **characterized in that** the head part (1007) has a section (1025) generally parallel to the axis (1003) and a generally conical section (1027) tapering away from said section (1025) and the anchoring part (1005) and having a thinner end, and **in that** the head part (1007) has several positioning surfaces (1033) which are distributed about the axis (1003), extend along the latter and are non-rotationally symmetrical to the axis (1003) and have regions present in the section (1025) generally parallel to the axis (1003) and in the generally conical sections (1027), and of which at least one middle cross-sectional region extends up to the thinner end of the generally conical section (1027).

15. Support according to Claim 14, **characterized in that** the positioning surfaces (1033) are flat or are formed by groove-shaped interstices (1068, 1069).

16. Support according to Claim 14 or 15, **characterized in that** the shoulder surface (37) is conical and forms a larger angle with the axis (22) than the generally conical section (64) of the head part (24) or **in that** the shoulder surface (437) is perpendicular to the axis (422) and in the latter case forms an annular channel with a centring surface (439) extending away from said axis to the head part, the centring surface (439) preferably tapering conically toward the head part (24).

17. Support according to Claim 16, **characterized in that** the shoulder surface (37) defines a conical or flat surface and has an outer edge (38) and **in that** the generally conical section (64) defines a conical surface which intersects the conical or flat surface defined by the shoulder surface (37) in an area enclosed by the outer edge (38) of the shoulder surface (37) at a distance from the outer edge (38) of the shoulder surface (37).

18. Support according to Claim 16 or 17, **characterized in that** the head part (24) has a free end which faces away from the anchoring part (23) and is at a distance from an inner edge of the conical shoulder surface (37) or the centring surface (439) which amounts to a maximum of 2 mm and for example at least 1.2 mm.

19. Support according to any of Claims 14 to 18, **characterized in that** the generally conical section (64) of the head part (24) forms an angle of 15° to 25° with the axis (22).

20. Device with a support (21, 321, 421, 521, 721, 1000) according to any of Claims 1 to 19, and with an element (85, 93, 793, 1115, 1153, 1301) attachable to the support (21, 321, 421, 521, 721, 1000), **characterized in that** the support (21, 321, 421, 521, 721, 1000) has a head part (24, 324, 524, 724, 1007) intended to protrude from the bone (81, 111), and an annular shoulder surface (37, 437, 1022) which is arranged between the anchoring part (23, 323, 523, 823, 1005) and the head part (24, 324, 524, 724, 1007) and forms an angle with the axis (22, 322, 422, 522, 722, 1003), and **in that** the element (85, 93, 793, 1115, 1153, 1301) has a supporting surface (104, 264) intended for abutting the shoulder surface (37) and surrounds the head part (24) in cross section when the head part is resting on the shoulder surface.

21. Device according to Claim 20, to the degree this relates to any of Claims 14 to 19, **characterized in that** the element (93) rests on the shoulder surface (37) when it is connected to the support (21) in a gap-free manner and is supported, at the generally conical section (53) of the head part (24), in parts by said conical section, with minimum play.

22. Device according to Claim 20 or 21, **characterized in that** the element forms at least a part of a superstructure element (93) or an impression element (1301) or a healing element (85) or is burnable and serves to manufacture a superstructure element.

## Revendications

1. Support pour maintenir et/ou former une prothèse dentaire, avec un axe (1003) et une partie d'ancrage (1005) prévue pour l'ancrage dans un os (1111), la partie d'ancrage (1005) présentant un filetage extérieur (1015) avec au moins une nervure (1016) s'étendant le long d'une ligne hélicoïdale, **caractérisé en ce que** le filetage extérieur (1015) est autotaraudant et **en ce que** la partie d'ancrage (1005) est pourvue d'au moins un trou longitudinal (1071) et/ou d'une rainure longitudinale (1051) qui, pour au moins un enroulement de l'au moins une nervure (1016), forme une face de coupe (1053) qui, au sommet de la nervure (1016), forme un angle de coupe β aigu avec une droite passant par l'axe (1003), dans une vue radiale par rapport à l'axe (1003) est inclinée du même côté de celle-ci que la nervure (1016) et forme avec l'axe (1003) dans une vue radiale par rapport à celui-ci, un angle de coupe α aigu.

2. Support selon la revendication 1, **caractérisé en ce que** la ou chaque nervure (1016) du filetage externe (1015) entre le trou (1071) et/ou la rainure (1051) ou entre les trous (1071) et/ou les rainures (1051) de la partie d'ancrage (1005) et une extrémité (1009) du support prévue pour faire saillie hors de l'os (1111), a une portion qui entoure l'axe (1003) sans interruption au moins une fois.

3. Support selon la revendication 1 ou 2, **caractérisé en ce que** la ou chaque nervure (1016) a un enroulement (1451), un sommet (1017), une base (1453) et deux flancs (1454), **en ce que** des points correspondants de deux enroulements voisins (1451) ont un écartement s l'un de l'autre, **en ce que** la ou chaque nervure (1016) à mi-hauteur de celle-ci a une dimension axiale qui vaut au maximum 30% de l'écartement s, et **en ce que** les deux flancs (1454) de la ou de chaque nervure (1016) ont une portion de flanc droite en coupe axiale, qui forme avec une droite radiale (1465) un angle γ de 15° à 25°.

4. Support selon la revendication 3, **caractérisé en ce que** l'angle γ vaut 18° à 22° et **en ce que** la dimension a vaut 10% à 25% de l'espacement s.

5. Support selon l'une quelconque des revendications 1 à 4, **caractérisé en ce qu'**une gorge (1461) avec une face de vase cylindrique est prévue entre des enroulements mutuellement voisins (1451) de la ou de chaque nervure (1016), et **en ce que** les portions de flancs droites en coupe axiale de la ou de chaque nervure (1016) en coupe axiale sont connectées toujours l'une à l'autre par une portion en forme d'arc formant le sommet (1017) de la nervure (1016) et toujours à la face de base cylindrique par des portions en forme d'arc.

6. Support selon la revendication 5, **caractérisé en ce que** les portions en forme d'arc connectant les portions de flanc droites en coupe axiale à la face de base cylindrique ont un rayon de courbure (R₂) en coupe axiale qui vaut au moins 0,1 mm.

7. Support selon l'une quelconque des revendications 1 à 6, **caractérisé en ce qu'**il présente une première extrémité (1008) formée par la partie d'ancrage (1005), une deuxième extrémité (1009) prévue pour faire saillie hors de l'os (1111) et un trou borgne (1035) coaxial à l'axe (1003), qui possède une embouchure (1036) se trouvant au niveau de la deuxième extrémité (1009), un filetage interne (1037), une base (1039) et une portion de trou cylindrique (1038) se trouvant entre cette base et le filetage interne (1037), avec un diamètre qui est au maximum égal au diamètre du coeur du filetage interne (1037), **en ce que** le filetage interne (1037) a une extrémité interne se trouvant plus près au niveau de la base (1039) et **en ce que** le trou borgne (1035) débouchant dans la deuxième extrémité (1009) possède une gorge (1091) annulaire se trouvant entre le filetage interne (1037) et la portion de trou cylindrique (1038), qui a au moins en partie une courbure concave en coupe axiale et qui forme une transition entre l'extrémité interne du filetage interne (1037) et la portion de trou cylindrique (1038).

8. Support selon la revendication 7, **caractérisé en ce qu'**il présente une portion essentiellement cylindrique (1011) et une portion (1013) s'élargissant en s'éloignant de celle-ci et de la première extrémité (1008), **en ce que** l'extrémité interne du filetage interne (1037) est disposée à l'intérieur de la portion (1013) s'élargissant et **en ce que** la gorge (1091) est limitée en partie par une face qui est en coupe axiale approximativement parallèle à la face extérieure de la portion (1011) s'élargissant.

9. Support selon l'une quelconque des revendications 1 à 8, **caractérisé en ce qu'**il présente une extrémité libre (1008) et un trou borgne axial (1093) qui a une embouchure (1094) se trouvant à l'extrémité libre (1008) de la partie d'ancrage (1005) et une base (1095) se trouvant à l'intérieur de la partie d'ancrage (1005) et **en ce que** le trou borgne (1093) est limité par une face courbée en coupe axiale au niveau de la base (1095), se rétrecissant depuis l'embouchure (1094) jusqu'à la base (1095) essentiellement sur toute l'étendue axiale du trou borgne (1093).

10. Support selon l'une quelconque des revendications 1 à 9, **caractérisé en ce qu'**il présente une partie de tête (1007) prévue pour faire saillie hors de l'os (1111) et une face d'épaulement circulaire (1022), qui est disposée entre la partie d'ancrage (1005) et la partie de tête (1007) et forme un angle avec l'axe (1003).

11. Support selon la revendication 10, **caractérisé en ce que** la partie d'ancrage (1005) présente une portion (1111) généralement cylindrique et une portion (1013) s'élargissant en général depuis celle-ci vers la face d'épaulement (1022) et **en ce que** la portion (1013) s'élargissant de la partie d'ancrage (1405) présente des renfoncements (1425) espacés les uns des autres le long de l'axe (1003).

12. Support selon la revendication 11, **caractérisé en ce que** chaque renfoncement (1425) a en coupe axiale une base (1427), une première face (1428) et une deuxième face (1429), **en ce que** la première face (1428) est inclinée à l'écart de l'axe (1003) depuis la base (1427) vers la face d'épaulement (1022) et **en ce que** la deuxième face (1429) se trouve du côté de la base (1427) opposé à la face d'épaulement (1022), est orientée vers l'extérieur à l'écart de l'axe (1403) et depuis cette base, et forme avec l'axe (1003) un angle plus grand que la première face (1428).

13. Support selon la revendication 11 ou 12, **caractérisé en ce que** les renfoncements (1425) sont formés par des gorges entourant l'axe (1403) et **en ce que** les première et deuxième faces (1428, 1429) sont constamment reliées l'une avec l'autre au niveau des bases (1427) et au niveau des extrémités opposées à celles-ci par des portions de forme courbe en coupe axiale.

14. Support selon l'une quelconque des revendication 10 à 13, **caractérisé en ce que** la partie de tête (1007) a une portion (1025) en général parallèle à l'axe (1003) et une portion (1027) généralement conique, se rétrécissant en s'éloignant la première portion et de la partie d'ancrage (1005), avec une extrémité plus mince, et **en ce que** la partie de la tête (1007) présente plusieurs faces de positionnement (1033) réparties autour de l'axe (1003), le long de celui-ci sans symétrie de révolution par rapport à l'axe (1003), qui ont des régions se trouvant dans la portion (1025) généralement parallèle à l'axe (1003) et dans la portion (1027) généralement conique et dont au moins une région de section transversale moyenne s'étend jusqu'à l'extrémité plus mince de la portion (1027) généralement conique.

15. Support selon la revendication 14, **caractérisé en ce que** les faces de positionnement (1033) sont planes ou formées par des espaces intermédiaires (1068, 1069) en forme de rainure.

16. Support selon la revendication 14 ou 15, **caractérisé en ce que** la face d'épaulement (37) est conique et forme avec l'axe (22) un angle plus grand que la portion (64) généralement conique de la partie de tête (24) ou **en ce que** la face d'épaulement (437) est perpendiculaire à l'axe (422) et dans ce dernier cas forme, conjointement avec une face de centrage (439) s'étendant depuis elle jusqu'à la partie de tête, une cannelure annulaire, la face de centrage (439) se rétrécissant coniquement de préférence vers la partie de tête (24).

17. Support selon la revendication 16, **caractérisé en ce que** la face d'épaulement (37) définit une face conique ou plane et a un bord extérieur (38) et **en ce que** la portion (64) généralement conique définit une face de cône qui coupe la face conique ou plane définie par la face d'épaulement (37) dans une région entourée par le bord extérieur (38) de la face d'épaulement (37) à distance du bord extérieur (38) de la face d'épaulement (37).

18. Support selon la revendication 16 ou 17, **caractérisé en ce que** la partie de tête (24) a une extrémité libre opposée à la partie d'ancrage (23), qui a une distance depuis un bord interne de la face d'épaulement conique (37) ou de la face de centrage (439), qui mesure au maximum 2 mm et par exemple au moins 1,2 mm.

19. Support selon l'une quelconque des revendications 14 à 18, **caractérisé en ce que** la portion (64) généralement conique de la partie de tête (24) forme avec l'axe (22) un angle de 15° à 25°.

20. Dispositif comprenant un support (21, 321, 421, 521, 721, 1000) selon l'une quelconque des revendications 1 à 19 et comprenant un élément (85, 93, 793, 1115, 1153, 1301) pouvant être fixé sur le support (21, 321, 421, 521, 721, 1000), **caractérisé en ce que** le support (21, 321, 421, 521, 721, 1000) présente une partie de tête (24, 324, 524, 724, 1007) prévue pour faire saillie hors de l'os (81, 1111) et une face d'épaulement circulaire (37, 437, 1022), qui est positionnée entre la partie d'ancrage (23, 324, 524, 724, 1005) et la partie de tête (24, 324, 524, 724, 1007) et forme un angle avec l'axe (22, 322, 422, 522, 722, 1003) et **en ce que** l'élément (85, 93, 793, 1115, 1153, 1301) a une surface d'appui (104, 264) prévue pour reposer sur la face d'épaulement (37) et entoure, dans l'état s'appliquant sur la face d'épaulement, la partie de tête (24) en section transversale.

21. Dispositif selon la revendication 20, dans la mesure où celle-ci se rapporte à l'une des revendications 14 à 19, **caractérisé en ce que** l'élément (93) repose dans l'état connecté au support (21) sans jeu sur la face d'épaulement (37) et dans le cas de la portion (53) généralement conique de la partie de tête (24), est supporté au moins en partie par celle-ci, avec au maximum un petit jeu.

22. Dispositif selon la revendication 20 ou 21, **caractérisé en ce que** l'élément forme au moins une partie d'un élément de construction (93) ou d'un élément d'impression (1301) ou d'un élément de cicatrisation (85) ou peut être cautérisé et sert à la fabrication d'un élément de construction.
